# EUROPEAN PATENT APPLICATION

(11) **EP 2 309 363 A1**
(43) Date of publication of application: **13.04.2011**
(21) Application number: 09797839.9
(22) Date of filing: 06.07.2009
(51) Int. Cl.: G06F 1/28, H04M 1/00, H04M 1/247

(54) **MOBILE DEVICE, CELL PACK, SEMICONDUCTOR DEVICE, DISPLAY CONTROL METHOD, AND DISPLAY CONTROL PROGRAM**

(30) Priority: 15.07.2008 JP 2008184227; 18.07.2008 JP 2008187724; 29.09.2008 JP 2008249601
(71) Applicant: Mitsumi Electric Co., Ltd., Tama-shi Tokyo 206-8567 (JP)
(72) Inventor: ASAI, Takanori, Tama-Shi Tokyo 206-8567 (JP); SUGAYA, Takayuki, Tama-Shi Tokyo 206-8567 (JP)
(74) Representative: Maiwald Patentanwalts GmbH
(86) International application number: PCT/JP2009/062328
(87) International publication number: WO 2010/007913

(57) **Abstract**

A mobile device includes a plurality of applications and is driven by a chargeable and dischargeable secondary battery to perform the applications. The mobile device includes a remaining quantity detecting unit which detects a remaining quantity of the secondary battery, a current consumption computing unit which computes a current consumption consumed by execution of each of the applications, a processing amount computing unit which computes an executable processing amount of each of the applications based on the battery remaining quantity detected by the remaining quantity detecting unit and the current consumption of each of the applications computed by the current consumption computing unit, and a display control unit which displays the executable processing amount of each of the applications computed by the processing amount computing unit on a display device of the mobile device.

## Description

### TECHNICAL FIELD

The present disclosure relates to a mobile device driven by a chargeable and dischargeable secondary battery, a battery pack included in the mobile device, a semiconductor device incorporated in the mobile device, and a display control method and a display control program performed by the mobile device.

### BACKGROUND ART

In recent years, with miniaturization of electronic devices, mobile devices which are driven by secondary batteries, such as a lithium ion battery, have spread. In a mobile phone, various applications which perform various functions, such as an e-mail transmitting/receiving function, a music reproduction function, a TV (television) viewing/listening function, and an imaging (camera) function, in addition to a talk function of the mobile phone, are installed.

Usually, in a mobile device, such as a mobile phone, a battery remaining quantity is displayed on a display unit thereof in order to prevent the mobile device from being abruptly unusable due to a dead battery. Hence, the user can use the mobile device while being conscious of the battery remaining quantity by viewing this display, and can perform recharging of a secondary battery of the mobile phone at an appropriate time.

In addition, in a recent mobile device, an available time of each of applications, installed in the mobile device, is computed based on the battery remaining quantity and displayed on the display unit thereof. For example, there are known a communication terminal and a controlling method thereof which are adapted to compute an available time of each application when the battery remaining quantity is below a predetermined quantity. For example, Patent Document 1 listed below.

Conventionally, in order to promote energy saving of electrical devices, there is known a power consumption management system in which the user is notified of the amount of power consumption of an electrical device when operated according to one of various energy saving modes selected by the user of the electrical device. For example, refer to Patent Document 2 listed below.

In addition, there are known a battery-driven mobile phone having a plurality of functions in which the consumption conditions of the battery according to the user-selected functions are displayed on a display unit, and a portable digital device by which the user is notified of the consumption condition of the battery in the present setting condition of the mobile phone. For example, refer to Patent Document 3 listed below.

In addition, there is known a power consumption management system in which power consumption data for every mode of operation of electrical devices is stored beforehand, the present mode of operation of the electrical devices is detected, and a power consumption of the detected mode is compared with a power consumption of a predetermined mode of operation. This system is arranged to notify the difference quantity of the power consumption as an energy saving effect. For example, refer to Patent Document 4 listed below.

Furthermore, in a recent mobile device, it is possible to display an available time of each of applications, installed in the mobile device, based on a battery remaining quantity. For example, Patent Document 5 listed below discloses a communication terminal device and a controlling method thereof which are adapted to compute an available time of each application when the battery remaining quantity is below a predetermined quantity.
Patent Document 1: Japanese Laid-Open Patent Publication No. 2008-072464
Patent Document 2: Japanese Laid-Open Patent Publication No. 2003-131763
Patent Document 3: Japanese Laid-Open Patent Publication No. 2007-265832
Patent Document 4: Japanese Laid-Open Patent Publication No. 2007-048219
Patent Document 5: Japanese Laid-Open Patent Publication No. 2008-072464

### DISCLOSURE OF THE INVENTION

### PROBLEM TO BE SOLVED BY THE INVENTION

However, in the device according to the Patent Document 1, only an available time of one application is displayed in a display screen at a time, and when displaying an available time of another application is desired, an operation for switching the initial display screen to a secondary display screen must be performed. Hence, the user of this device requires a complicated operation. In the device according to the Patent Document 1, only an available time of the communication terminal device is displayed, and displaying of an executable processing amount of each of processes of the applications installed in the device is not taken into consideration.

In the devices according to the Patent Documents 2 to 4, the user has not been notified how much energy saving effect is obtained by selection of the energy saving mode, and it has been difficult to draw the user's attention to energy saving. Specifically, any presentation which notifies the user how much CO2 (carbon dioxide) emission reduction is expected by selection of the energy saving mode has not been provided, and it has been difficult to draw the user's attention to energy saving.

In the device according to the Patent Document 5, only an available time of one application is displayed in a display screen at a time, and when displaying an available time of another application is desired, an operation for switching the initial display screen to a secondary display screen must be performed. Hence, the user of this device requires a complicated operation. In the device according to the Patent Document 1, only an available time of the communication terminal device is displayed, and displaying of an executable processing amount of each of processes of the applications installed in the device is not taken into consideration.

Accordingly, in one aspect, the present disclosure provides a mobile device, a semiconductor device, a display control method, and a display control program which are adapted to display an executable processing amount of each of the applications installed, and to improve the operability at the time of displaying.

In another aspect, the present disclosure provides a mobile device, a semiconductor device, a display control method, and a display control program which are adapted to provide a notification which informs a user how much CO₂ (carbon dioxide) emission reduction is expected by changing the setting conditions of the functions installed in the mobile device.

In another aspect, the present disclosure provides a mobile device, a battery pack, a semiconductor device, a display control method, and a display control program which are adapted to make an executable processing amount of each application visually noticeable, and to improve the operability at the time of displaying.

### MEANS TO SOLVE THE PROBLEM

In an embodiment which solves or reduces one or more of the above-mentioned problems, the present disclosure provides a mobile device including a plurality of applications and driven by a chargeable and dischargeable secondary battery to perform the plurality of applications, the mobile device including: a remaining quantity detecting unit to detect a remaining quantity of the secondary battery; a current consumption computing unit to compute a current consumption consumed by execution of each of the applications; a processing amount computing unit to compute an executable processing amount of each of the applications based on the remaining quantity detected by the remaining quantity detecting unit and the current consumption of each of the applications computed by the current consumption computing unit; and a display control unit to display the executable processing amount of each of the applications computed by the processing amount computing unit on a display device in the mobile device.

The above-mentioned mobile device may be arranged so that the display control unit displays the executable processing amount of each of the applications with a list of the applications.

In an embodiment which solves or reduces one or more of the above-mentioned problems, the present disclosure provides a display control method for use in a mobile device including a plurality of applications and driven by a chargeable and dischargeable secondary battery to perform the plurality of applications, the method including: a remaining quantity detecting step of detecting a remaining quantity of the secondary battery; a current consumption computing step of computing a current consumption consumed by execution of each of the applications; a processing amount computing step of computing an executable processing amount of each of the applications based on the remaining quantity detected in the remaining quantity detecting step and the current consumption of each of the applications computed in the current consumption computing step; and a display control step of displaying the executable processing amount of each of the applications computed in the processing amount computing step on a display device of the mobile device.

In an embodiment which solves or reduces one or more of the above-mentioned problems, the present disclosure provides a display control program which, when executed by a processing unit of a mobile device including a plurality of applications and driven by a chargeable and dischargeable secondary battery, causes the processing unit to perform: a remaining quantity detecting step of detecting a remaining quantity of the secondary battery; a current consumption computing step of computing a current consumption consumed by execution of each of the applications; a processing amount computing step of computing an executable processing amount of each of the applications based on the remaining quantity detected in the remaining quantity detecting step and the current consumption of each of the applications computed in the current consumption computing step; and a display control step of displaying the executable processing amount of each of the applications computed in the processing amount computing step on a display device of the mobile device.

In an embodiment which solves or reduces one or more of the above-mentioned problems, the present disclosure provides a mobile device including a plurality of functions, the mobile device including: a setting condition detecting unit to detect a setting condition which is stored for at least one of the plurality of functions; a power consumption acquiring unit to acquire a power consumption of the mobile device consumed in the setting condition detected by the setting condition detecting unit; an estimated CO₂ emission reduction amount computing unit to compute a difference between the acquired power consumption in the setting condition and a power consumption consumed in a previous setting condition and stored in a memory unit, and compute an estimated amount of CO₂ emission reduction based on the difference; and a presenting unit to present to a user of the mobile device a result of the computation by the estimated CO₂ emission reduction amount computing unit.

The above-mentioned mobile device may be arranged to further include a total CO₂ emission reduction amount computing unit to compute a total amount of CO₂ emission reduction from a time the setting condition is stored to a requested time in accordance with an instruction from the user.

The above-mentioned mobile device may be arranged so that the total CO₂ emission reduction amount computing unit computes an amount of CO₂ emission reduction for each of respective setting conditions for the plurality of functions.

The above-mentioned mobile device may be arranged to further include a measurement unit to measure an elapsed time from a time the setting condition is stored for each of respective setting conditions of the plurality of functions in the mobile device, wherein the measurement unit stores the measured time in the memory unit for each of the respective setting conditions.

In an embodiment which solves or reduces one or more of the above-mentioned problems, the present disclosure provides a display control method for use in a mobile device including a plurality of functions, the method including: a setting condition detecting step of detecting a setting condition which is stored for at least one of the plurality of functions; a power consumption acquiring step of acquiring a power consumption of the mobile device consumed in the setting condition detected in the setting condition detecting step; an estimated CO₂ emission reduction amount computing step of computing a difference between the acquired power consumption in the setting condition and a power consumption consumed in a previous setting condition and stored in a memory unit, to compute an estimated amount of CO₂ emission reduction based on the difference; and a presenting step of presenting to a user of the mobile device a result of the computation in the estimated CO₂ emission reduction amount computing step.

The above-mentioned display control method may be arranged to further include a total CO₂ emission reduction amount computing step of computing a total amount of CO₂ emission reduction from a time the setting condition is stored to a requested time in accordance with an instruction from the user.

The above-mentioned display control method may be arranged so that an amount of CO₂ emission reduction for each of respective setting conditions for the plurality of functions is computed in the total CO₂ emission reduction amount computing step.

The above-mentioned display control method may be arranged to further include a measuring step of measuring an elapsed time from a time the setting condition is stored for each of respective setting conditions of the plurality of functions in the mobile device, wherein the measured time is stored in the memory unit for each of the respective setting conditions in the measuring step.

In an embodiment which solves or reduces one or more of the above-mentioned problems, the present disclosure provides a mobile device including an application and a display device on which an image associated with the application is displayed, the mobile device being driven by a chargeable and dischargeable secondary battery to perform the application, the mobile device including: a remaining quantity acquiring unit to acquire a remaining quantity of the secondary battery; a current consumption acquiring unit to acquire a value of a current consumption consumed by execution of the application; a processing amount computing unit to compute an executable processing amount of the application based on the remaining quantity acquired by the remaining quantity acquiring unit and the current consumption value acquired by the current consumption acquiring unit; and a display control unit to display on the display device an image in which the executable processing amount of the application computed by the processing amount computing unit is combined with the image associated with the application.

In an embodiment which solves or reduces one or more of the above-mentioned problems, the present disclosure provides a display control method for use in a mobile device including an application and a display device on which an image associated with the application is displayed, and driven by a chargeable and dischargeable secondary battery to perform the application, the method including: a remaining quantity acquiring step of acquiring a remaining quantity of the secondary battery; a current consumption acquiring step of acquiring a value of a current consumption consumed by execution of the application; a processing amount computing step of computing an executable processing amount of the application based on the remaining quantity acquired in the remaining quantity acquiring step and the current consumption value acquired in the current consumption acquiring step; and a display control step of displaying on the display device an image in which the executable processing amount of the application computed in the processing amount computing step is combined with the image associated with the application.

In an embodiment which solves or reduces one or more of the above-mentioned problems, the present disclosure provides a display control program which, when executed by a processing unit of a mobile device including an application and a display device on which an image associated with the application is displayed, and driven by a chargeable and dischargeable secondary battery to perform the application, causes the processing unit to perform: a remaining quantity acquiring step of acquiring a remaining quantity of the secondary battery; a current consumption acquiring step of acquiring a value of a current consumption consumed by execution of the application; a processing amount computing step of computing an executable processing amount of the application based on the remaining quantity acquired in the remaining quantity acquiring step and the current consumption value acquired in the current consumption acquiring step; and a display control step of displaying on the display device an image in which the executable processing amount of the application computed in the processing amount computing step is combined with the image associated with the application.

In an embodiment, the present disclosure provides a semiconductor device provided in the above-mentioned mobile device wherein the semiconductor device includes: the remaining quantity detecting unit to detect the remaining quantity of the secondary battery; the current consumption computing unit to compute the current consumption consumed by execution of each of the applications; and the processing amount computing unit to compute the executable processing amount of each of the applications based on the remaining quantity detected by the remaining quantity detecting unit and the current consumption of each of the applications computed by the current consumption computing unit.

In an embodiment which solves or reduces one or more of the above-mentioned problems, the present disclosure provides a battery pack for driving a mobile device including a plurality of applications and performing the plurality of applications, the mobile device including: a current consumption computing unit to compute a current consumption consumed by execution of each of the applications; a processing amount computing unit to compute an executable processing amount of each of the applications based on a battery remaining quantity and the current consumption of each of the applications computed by the current consumption computing unit; and a display control unit to display the executable processing amount of each of the applications computed by the processing amount computing unit on a display device of the mobile device, the battery pack including: a secondary battery that drives the mobile device; a remaining quantity detecting unit to detect a remaining quantity of the secondary battery; and a communication unit to transmit, to the mobile device including the current consumption computing unit, a remaining quantity data indicating the battery remaining quantity detected by the remaining quantity detecting unit.

The above-mentioned battery pack may be arranged to further include: at least one of a current value acquiring unit to acquire a current value and a voltage value acquiring unit to acquire a voltage value; and a time measuring unit to measure a time, wherein the remaining quantity detecting unit detects the remaining quantity of the secondary battery based on the current value acquired by the current value acquiring unit or the voltage value acquired by the voltage value acquiring unit and the time measured by the time measuring unit.

In an embodiment which solves or reduces one or more of the above-mentioned problems, the present disclosure provides a semiconductor device provided in a battery pack for driving a mobile device including a plurality of applications and performing the plurality of applications, the mobile device including: a current consumption computing unit to compute a current consumption consumed by execution of each of the applications; a processing amount computing unit to compute an executable processing amount of each of the applications based on a battery remaining quantity and the current consumption of each of the applications computed by the current consumption computing unit; and a display control unit to display the executable processing amount of each of the applications computed by the processing amount computing unit on a display device of the mobile device, the battery pack including a secondary battery that drives the mobile device, and the semiconductor device including: a remaining quantity detecting unit to detect a remaining quantity of the secondary battery; and a communication unit to transmit, to the mobile device including the current consumption computing unit, a remaining quantity data indicating the battery remaining quantity detected by the remaining quantity detecting unit.

The above-mentioned semiconductor device may be arranged to further include: at least one of a current value acquiring unit to acquire a current value and a voltage value acquiring unit to acquire a voltage value; and a time measuring unit to measure a time, wherein the remaining quantity detecting unit detects the remaining quantity of the secondary battery based on the current value acquired by the current value acquiring unit or the voltage value acquired by the voltage value acquiring unit and the time measured by the time measuring unit.

In an embodiment which solves or reduces one or more of the above-mentioned problems, the present disclosure provides a semiconductor device provided in a battery pack for driving a mobile device including a plurality of applications and performing the plurality of applications, the mobile device including: a current consumption computing unit to compute a current consumption consumed by execution of each of the applications; a processing amount computing unit to compute an executable processing amount of each of the applications based on a battery remaining quantity and the current consumption of each of the applications computed by the current consumption computing unit; and a display control unit to display the executable processing amount of each of the applications computed by the processing amount computing unit on a display device of the mobile device, the battery pack including a secondary battery that drives the mobile device, and the semiconductor device including: a remaining quantity detecting unit to detect a remaining quantity of the secondary battery; a communication unit to transmit, to the mobile device including the current consumption computing unit, a remaining quantity data indicating the battery remaining quantity detected by the remaining quantity detecting unit; and a memory unit that stores a program which, when executed by a processing unit of the semiconductor device, causes the processing unit to perform: an acquiring step of acquiring at least one of a current value by using a current value acquiring unit and a voltage value by using a voltage value acquiring unit; a time measuring step of measuring, by a time measuring unit, a time; and a remaining quantity detecting step of detecting, by the remaining quantity detecting unit, the remaining quantity of the secondary battery based on the current value or the voltage value acquired in the acquiring step and the time measured in the time measuring step, wherein the memory unit is a rewritable nonvolatile memory.

### EFFECT OF SHE INVENTION

According to the present disclosure, it is possible to display an executable processing amount of each of the applications installed and it is possible to improve the operability at the time of displaying.

According to the present disclosure, it is possible to provide a notification which informs a user how much CO₂ (carbon dioxide) emission reduction is expected by changing the setting conditions of the functions installed in the mobile device.

According to the present disclosure, it is possible to make an executable processing amount of each application visually noticeable, and to improve the operability at the time of displaying.

### BRIEF DESCRIPTION OF THE DRAWINGS

FIG. 1 is a diagram illustrating the hardware composition of a mobile devise of a first embodiment of the present disclosure.
FIG. 2 is a diagram illustrating the functional composition of the mobile device of the first embodiment.
FIG. 3 is a flowchart for explaining computing of a current consumption in the mobile device of the first embodiment.
FIG. 4 is a flowchart for explaining displaying of an executable processing amount in the mobile device of the first embodiment.
FIG. 5 is a diagram illustrating an example in which an executable processing amount of each application is displayed on a display device.
FIG. 6 is a diagram illustrating the composition of a battery pack included in the mobile device of the first embodiment.
FIG. 7 is a diagram illustrating the hardware composition of a monitoring IC.
FIG. 8 is a diagram illustrating the functional composition of the monitoring IC.
FIG. 9 is a diagram illustrating the functional composition of a mobile device of a second embodiment of the present disclosure.
FIG. 10 is a diagram illustrating the functional composition of a mobile device of a third embodiment of the present disclosure.
FIG. 11A is a diagram illustrating examples of data in a memory unit in the third embodiment.
FIG. 11B is a diagram illustrating other examples of the data in the memory unit in the third embodiment.
FIG. 12 is a flowchart for explaining operation of the mobile device of the third embodiment.
FIG. 13 is a flowchart for explaining operation of the mobile device of the third embodiment.
FIG. 14 is a diagram illustrating an example of the contents of a screen which is presented by a presenting unit in the third embodiment.
FIG. 15 is a diagram illustrating the functional composition of a mobile device of a fourth embodiment of the present disclosure.
FIG. 16 is a diagram for explaining a program storage area in the mobile device of the fourth embodiment.
FIG. 17 is a diagram for explaining a data storage area in the mobile device of the fourth embodiment.
FIG. 18 is a flowchart for explaining processing of a current consumption acquiring unit of the mobile device of the fourth embodiment.
FIG. 19 is a flowchart for explaining processing of a processing amount computing unit and a display control unit of the mobile device of the fourth embodiment.
FIG. 20 is a diagram illustrating an example in which processed image data of respective applications are displayed in the mobile device of the fourth embodiment.
FIG. 21 is a diagram illustrating the functional composition of a mobile device of a fifth embodiment of the present disclosure.
FIG. 22 is a diagram for explaining a program storage area in the mobile device of the fifth embodiment.
FIG. 23 is a diagram for explaining a data storage area in the mobile device of the fifth embodiment.
FIG. 24 is a diagram illustrating an example of a threshold table in the mobile device of the fifth embodiment.
FIG. 25 is a flowchart for explaining processing of a display control unit in the mobile device of the fifth embodiment.
FIG. 26 is a diagram illustrating an example in which processed image data of respective applications are displayed in the mobile device of the fifth embodiment.
FIG. 27 is a diagram for explaining a modification of the example of the processed image data in the fifth embodiment.
FIG. 28 is a diagram for explaining a modification of the example of the processed image data in the fifth embodiment.
FIG. 29 is a diagram illustrating the functional composition of a mobile device of a sixth embodiment of the present disclosure.
FIG. 30 is a diagram for explaining a data storage area in the mobile device of the sixth embodiment.
FIG. 31 is a diagram for explaining a threshold table in the mobile device of the sixth embodiment.
FIG. 32 is a flowchart for explaining processing of a display control unit in the mobile device of the sixth embodiment.
FIG. 33 is a diagram for explaining the functional composition of a mobile device of a seventh embodiment of the present disclosure.
FIG. 34 is a diagram for explaining a program storage area in the mobile device of the seventh embodiment.
FIG. 35 is a diagram for explaining a data storage area in the mobile device of the seventh embodiment.
FIG. 36 is a diagram illustrating an example of an execution algorithm table.
FIG. 37 is a flowchart for explaining processing of a display control unit in the mobile device of the seventh embodiment.
FIG. 38 is a diagram for explaining an example in which a remaining quantity data acquiring unit, a current consumption acquiring unit, and a processing amount computing unit are provided in a battery pack of the present disclosure.
FIG. 39 is a diagram for explaining the functional composition of a mobile device of an eighth embodiment of the present disclosure.
FIG. 40 is a diagram for explaining a program storage area in the mobile device of the eighth embodiment.
FIG. 41 is a diagram for explaining a data storage area in the mobile device of the eighth embodiment.
FIG. 42 is a flowchart for explaining operation of the mobile device of the eighth embodiment.
FIG. 43 is a diagram illustrating an example of icon image data associated with the determined state.
FIG. 44 is a diagram illustrating the functional composition of a mobile device of a ninth embodiment of the present disclosure.
FIG. 45 is a diagram for explaining a program storage area in the mobile device of the ninth embodiment .
FIG. 46 is a flowchart for explaining operation of the mobile device of the ninth embodiment.
FIG. 47 is a diagram for explaining an example in which an available time is displayed.
FIG. 48 is a diagram illustrating the functional composition of a mobile device of a tenth embodiment of the present disclosure.
FIG. 49 is a diagram for explaining a program storage area in the mobile device of the tenth embodiment.
FIG. 50 is a flowchart for explaining operation of the mobile device of the tenth embodiment.
FIG. 51 is a diagram for explaining operation of the mobile device of the tenth embodiment.
FIG. 52 is a diagram illustrating the functional composition of a mobile device of an eleventh embodiment of the present disclosure.
FIG. 53 is a diagram for explaining a program storage area in the mobile device of the eleventh embodiment.
FIG. 54 is a flowchart for explaining operation of the mobile device of the eleventh embodiment.
FIG. 55 is a diagram illustrating an example of a screen in a charging start time is displayed in the eleventh embodiment.
FIG. 56 is a diagram for explaining the functional composition of a mobile device 100K of a twelfth embodiment of the present disclosure.
FIG. 57 is a diagram for explaining a program storage area in the mobile device of the twelfth embodiment.
FIG. 58 is a flowchart for explaining operation of the mobile device of the twelfth embodiment.
FIG. 59 is a diagram illustrating examples of a screen in which a movable distance and map information are displayed in the twelfth embodiment.
FIG. 60 is a diagram illustrating an example in which only a movable distance of each application and rechargeable position information are displayed.
FIG. 61 is a diagram illustrating the functional composition of a mobile device of a thirteenth embodiment of the present disclosure.
FIG. 62 is a diagram for explaining a program storage area in the mobile device of the thirteenth embodiment.
FIG. 63 is a flowchart for explaining operation of the mobile device of the thirteenth embodiment.
FIG. 64 is a diagram illustrating an example of a screen in which a remaining quantity data and map information of a target mobile device are displayed in the thirteenth embodiment.

### BEST MODE FOR CARRYING OUT THE INTENTION

### First Embodiment

In this embodiment, an executable processing amount for each of applications is respectively computed based on a battery remaining quantity of a secondary battery, and on a current consumption of the application when the application is executed, and the computed executable processing amounts of the respective applications are displayed with a list of the applications.

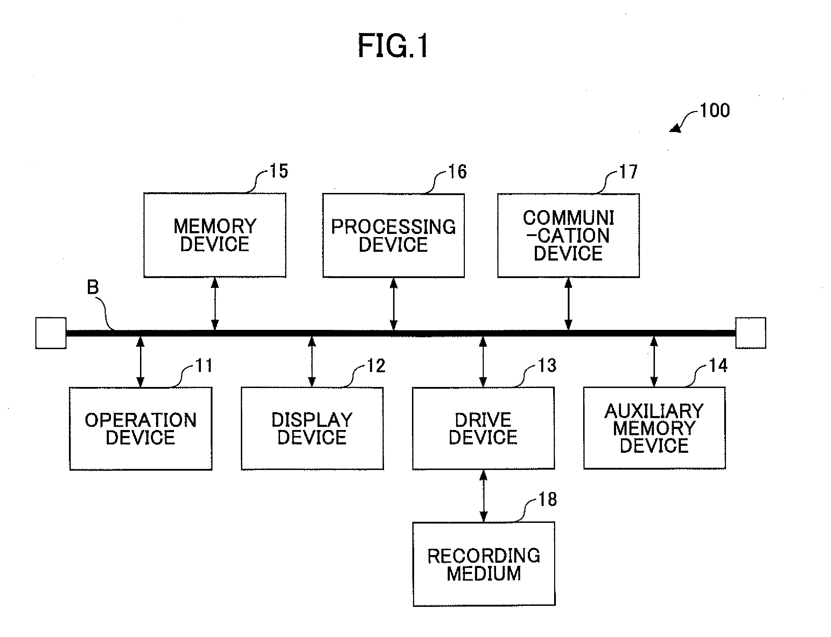

With reference to the accompanying drawings, a description will be given of the hardware composition of a mobile device 100 of the first embodiment of the present disclosure. FIG. 1 is a diagram illustrating the hardware composition of the mobile device of the first embodiment.

The mobile device 100 includes an operation device 11, a display device 12, a drive device 13, an auxiliary memory device 14, a memory device 15, a processing device 16, and a communication device 17, and these elements are mutually interconnected by a bus B.

The operation device 11 is provided for operating the mobile device 100, and various signals for operating the mobile device 100 are input from the operation device. Specifically, the operation device 11 includes operation buttons, such as a power supply key and ten keys. The display device 12 is, for example, a liquid crystal display, and a guidance screen for explaining operation of the mobile device 100 or a screen indicating the progress of a process being performed by the mobile device 100 is displayed on the display device. The communication device 17 is provided to enable the mobile device 100 to communicate with another mobile device or a base station. Specifically, the communication device 17 is provided to perform, for example, a communication process for transmitting and receiving data via an antenna which is arranged in the mobile device 100.

A display control program according to the present disclosure is installed in the mobile device as a part of various programs which are provided to control the mobile device 100. For example, the display control program is installed by using a recording medium 18 or by receiving the program through the communication device 17 from a network. For example, the recording medium 18 in which the display control program is stored may be a machine-readable recording medium, such as a memory card, from which the stored program is readable by the mobile device 100.

If the recording medium 18 in which the display control program is stored is set in the drive device 13, the display control program may be read from the recording medium 18 and installed in the auxiliary memory device 14 by using the drive device 13. If the display control program is received through the communication device 17, the display control program may be installed in the auxiliary memory device 14.

The auxiliary memory device 14 is provided to store the installed display control program and to store the necessary files, data, etc. The memory device 15 is provided to read, upon starting of the mobile device 100, the display control program from the auxiliary memory device 14 and develops the display control program therein. The processing device 16 is provided to execute various processes which will be described later in accordance with the display control program developed in the memory device 15.

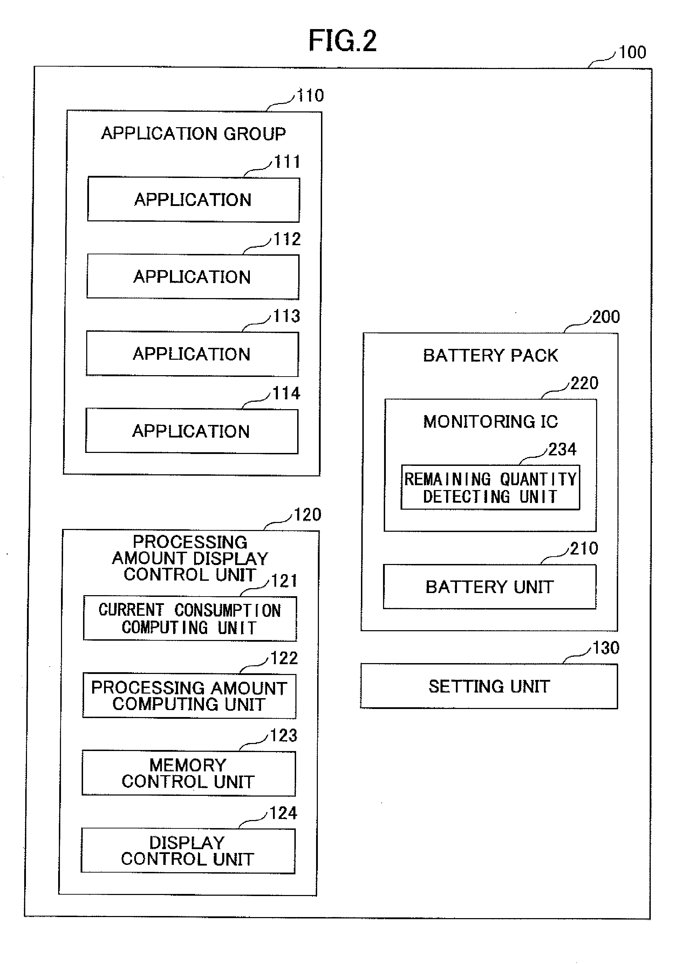

Next, with reference to FIG. 2, the functional composition of the mobile device 100 of this embodiment will be described. FIG. 2 is a diagram illustrating the functional composition of the mobile device of the first embodiment.

A battery pack 200 is incorporated in the mobile device 100 of this embodiment. Power is supplied from a battery unit 210 of the battery pack 200 and the mobile device 200 operates. The battery pack 200 includes a monitoring IC 220 which monitors the state of the battery unit 210. The monitoring IC 220 includes a remaining quantity detecting unit 234 which detects a battery remaining quantity of the battery unit 210. The detailed composition of the battery pack 200 will be described later.

The mobile device 100 of this embodiment includes an application group 110, a processing amount display control unit 120, and a storing unit 130. The application group 110 includes a plurality of applications included in the mobile device 100. For example, the plurality of applications which constitute the application group 110 may include an application which performs a talk function, an application which performs an e-mail transmitting/receiving function, an application which performs a music reproduction function, and an application which performs a camera imaging function. It is assumed that the application group 110 in the example of FIG. 2 is constituted by four applications 111, 112, 113 and 114. Although the example of the application group 110 including the four applications 111, 112, 113 and 114 is illustrated in FIG. 2, the number of applications which constitute the application group 110 is not limited to this example. Alternatively, the application group 110 may be constituted by five or seven applications.

The processing amount display control unit 120 performs control of the displaying of an executable processing amount of each application based on information of a battery remaining quantity of the battery unit 210 which is detected by the remaining quantity detecting unit 234 in the battery pack 200 (which will be called remaining quantity data). Specifically, the processing amount display control unit 120 performs control of the displaying of an executable processing amount of each of the applications 111, 112, 113 and 114 which constitute the application group 110.

The processing amount display control unit 120 includes a current consumption computing unit 121, a processing amount computing unit 122, a memory control unit 123, and a display control unit 124. The processing amount display control unit 120 causes the current consumption computing unit 121 to compute a current consumption of each of the applications 111, 112, 113 and 114 when the application is executed. The processing amount display control unit 120 causes the processing amount computing unit 122 to compute an executable processing amount of each of the applications 111, 112, 113 and 114. The processing amount display control unit 120 causes the display control unit 124 to display the executable processing amount of each application on the display device 12 together with the list of the applications 111, 112, 113 and 114.

The elements included in the processing amount display control unit 120 will be described.

The current consumption computing unit 121 computes an average current consumption of each of the applications 111, 112, 113 and 114 (which constitute the application group 110) when the application is executed.

The processing amount computing unit 122 computes an executable processing amount based on the battery remaining quantity of the battery unit 210 indicated by the remaining quantity data of each application which constitutes part of the application group 110. For example, if the application 111 is an application which performs a talk function, the processing amount computing unit 122 computes an executable processing amount of the application 111 based on the battery remaining quantity, i.e., a time for which the talk processing can be performed (or an available time for which the user is allowed to perform a phone conversation with the mobile device). If the application 112 is an application which performs an e-mail transmitting/receiving function, the processing amount computing unit 122 computes an executable processing amount of the application 112 based on the battery remaining quantity, i.e., the number of e-mail messages which can be transmitted or received with the mobile device.

If the application 113 is an application which performs a music reproduction function, the processing amount computing unit 122 computes an executable processing amount of the application 113 based on the battery remaining quantity, i.e., a permissible music reproduction time or the number of musical pieces which can be reproduced with the mobile device. If the application 114 is an application which performs a TV viewing/listening function, the processing amount computing unit 122 computes an executable processing amount of the application 114 based on the battery remaining quantity, i.e., a time for which the TV viewing/listening function is executable. If an application which performs an image capturing function is included in the application group 110, the processing amount computing unit 122 computes an executable processing amount of that application based on the battery remaining quantity, i.e., the number of images which can be captured with the mobile device.

In this manner, the processing amount computing unit 122 of this embodiment computes an executable processing amount of each application appropriately in accordance with the kind of the application.

The memory control unit 123 stores the current consumption of each application computed by the current consumption computing unit 121, and the executable processing amount of each application computed by the processing amount computing unit 122 into the memory device 15. The display control unit 124 reads the executable processing amount of each application (which is stored by the memory control unit 123) from the memory device 15, and displays on the display device 12 the executable processing amount of each application together with the list of the applications which constitute the application group 110.

The storing unit 130 stores in the memory device 15 a setup parameter indicating whether the display control is to be performed by the processing amount display control unit 120. Specifically, the storing unit 130 stores the setup parameter in the memory device 15, for example, when the setup parameter indicating that the display control is to be performed is input from the operation unit 11.

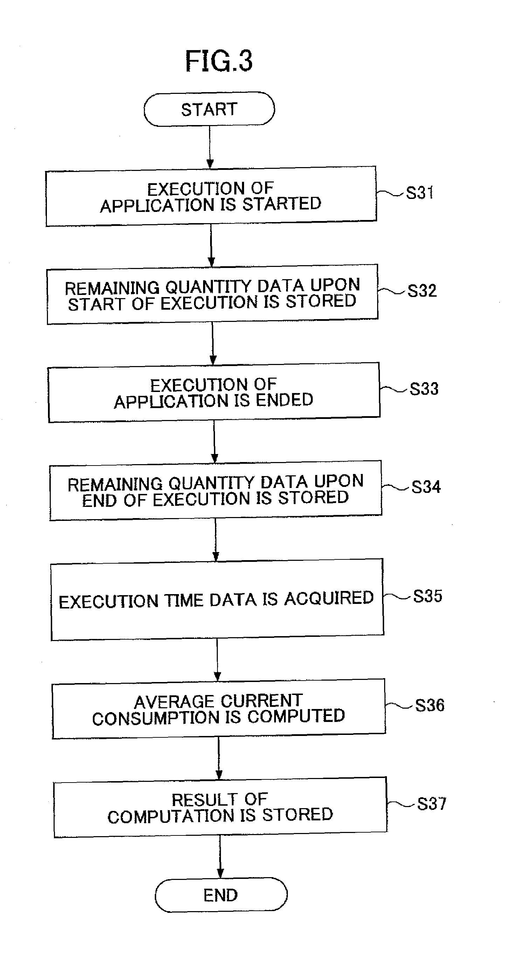

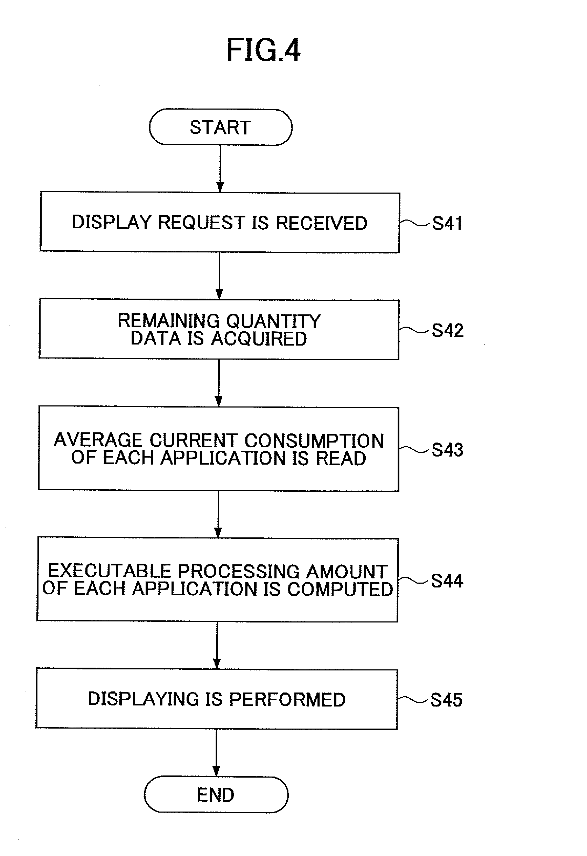

Next, with reference to FIG. 3 and FIG. 4, operation of the mobile device 100 of this embodiment will be described. FIG. 3 is a flowchart for explaining computing of a current consumption in the mobile device of the first embodiment. The following process is performed when the setup parameter indicating that the display control is to be performed by the processing amount display control unit 120 is stored by the storing unit 130.

For example, when execution of the application 111 is started in step S31, control of the current consumption computing unit 121 is transferred to step S32. In step S32, the current consumption computing unit 121 acquires from the battery pack 200 the remaining quantity data at the time of the start of execution of the application 111. The acquired remaining quantity data is stored in the memory device 15 by the memory control unit 123.

In step S33 following step S32, the execution of the application 111 is ended in step S33. Subsequently, the control is transferred to step S34. In step S34, the current consumption computing unit 121 acquires from the battery pack 200 the remaining quantity data again. The acquired remaining quantity data is stored in the memory device 15 by the memory control unit 123.

In step S35 following step S34, the current consumption computing unit 121 acquires the information of an execution time of the application 111. The measurement of the execution time of the application 111 may be performed by a timer function (not illustrated) provided in the mobile device 100.

In step S36 following step S35, the current consumption computing unit 121 computes an average current consumption of the application 111 when the application 111 is executed, based on the stored remaining quantity data at the time of the start of execution of the application 111, the stored remaining quantity data at the time of the end of execution of the application 111, and the stored information of the execution time of the application 111. In step S37 following step S36, the computed average current consumption of the application 111 is stored in the memory device 15 by the memory control unit 123.

It is preferred that the current consumption computing unit 121 of this embodiment is arranged to compute the average current consumptions of all of the applications which constitute the application group 110. In the mobile device 100 of this embodiment, the average current consumption varies depending on the quantity of data being processed during the execution of the application 111, for example. Hence, it is preferred that the current consumption computing unit 121 of this embodiment is arranged to periodically compute the average current consumption of each of the applications.

Next, with reference to FIG. 4, the displaying of an executable processing amount of each application in the mobile device 100 of this embodiment will be described. FIG. 4 is a flowchart for explaining the displaying of an executable processing amount of each application in the mobile device of the first embodiment.

If a display request for displaying an executable processing amount of each application, input from the operation unit 11, is received in step S41, control of the mobile device 100 is transferred to step S42. In step S42, the processing amount computing unit 122 acquires the remaining quantity data from the battery pack 200. In step S43 following step 542, the processing amount computing unit 122 reads the stored average current consumption of each application from the memory device 15.

In step S44 following step S43, the processing amount computing unit 122 computes an executable processing amount of each application based on the acquired remaining quantity data and the read average current consumption of each application. It is preferred that the processing amount computing unit 122 of this embodiment is arranged to compute the executable processing amount of each of the applications which constitute the application group 110. The computed executable processing amount of each application is stored in the memory device 15 by the memory control unit 123.

In step S45 following step S44, the display control unit 124 displays on the display device 12 the computed executable processing amount of each application together with the list of the applications which constitutes the application group 110.

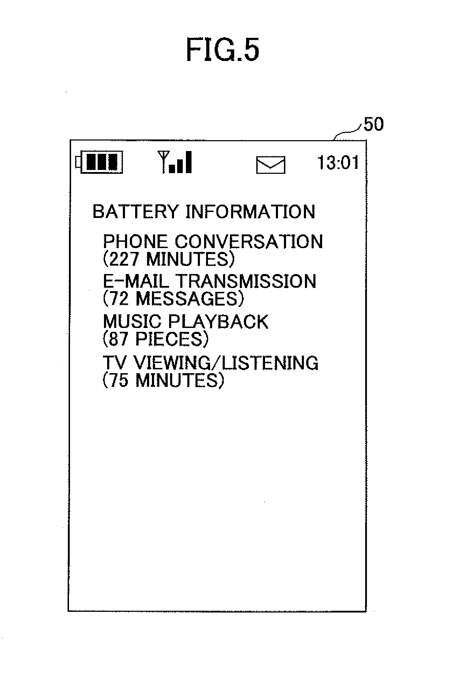

FIG. 5 illustrates an example in which an executable processing amount of each application is displayed on the display device 12. In a screen 50 displayed on the display device 12, the executable processing amount of each of the applications 111, 112, 113 and 114 which constitute the application group 110 is illustrated. In this embodiment, the application 111 is an application which performs a talk function, the application 112 is an application which performs an e-mail transmitting/receiving function, the application 113 is an application which performs a music reproduction function, and the application 114 is an application which performs a TV viewing/listening function. In the screen 50, the executable processing amount of each application is displayed together with the list of the applications 111-114 which perform the above functions respectively.

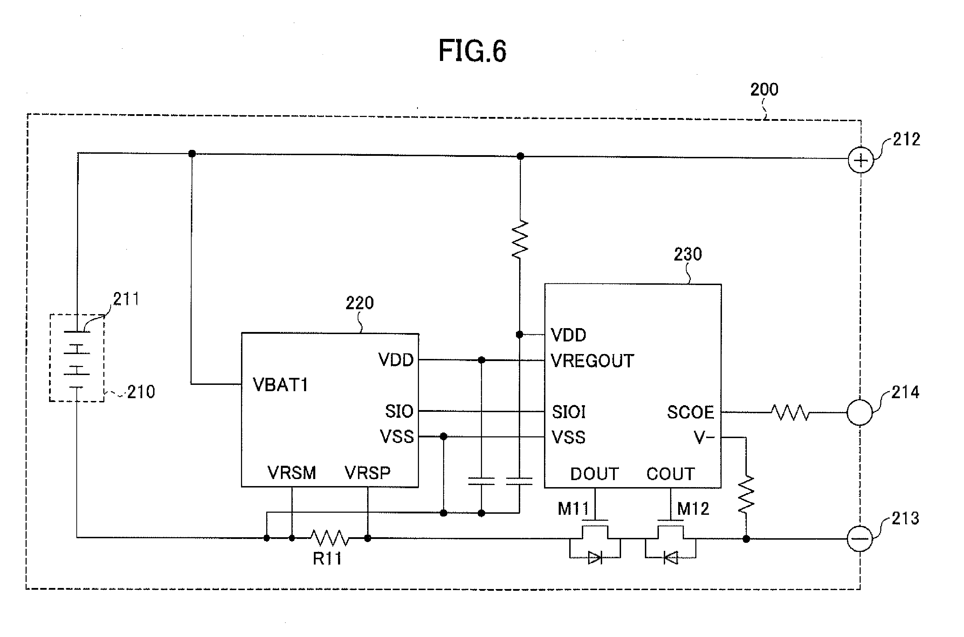

Next, the battery pack 200 incorporated in the mobile device 100 of this embodiment will be described with reference to the accompanying drawings. FIG. 6 is a diagram illustrating the composition of the battery pack included in the mobile device of the first embodiment.

The battery pack 200 includes a battery unit 210 in which a plurality of secondary batteries 211, such as lithium ion batteries, are connected. In this embodiment, the secondary batteries 211 are connected in series. However, the composition of the battery unit 210 according to the present disclosure is not limited to this embodiment.

The battery pack 200 includes a monitoring IC 220 and a protection IC 230, which are connected between positive and negative electrodes of the battery unit 210 and connected between positive and negative terminals 212 and 213 which are connected to the mobile device 100 in which the battery pack 200 is incorporated.

The monitoring IC 220 monitors the state of the battery unit 210 and acquires the state information of the battery unit 210. When a reference request of the state information is received from the mobile device 100, the monitoring IC 220 supplies the acquired state information to the mobile device 100.

The monitoring IC 220 includes a power supply terminal VDD, a reference potential terminal VSS, a voltage detection terminal VBAT1, a pair of current detection terminals VRSP and VRSM, and a communication terminal SIO. The monitoring IC 220 receives from the power supply terminal VDD a voltage which is regulated from the power supply voltage in the protection IC 230. The reference potential terminal VSS is connected to the negative electrode of the battery unit 210.

The monitoring IC 220 detects an output voltage of the battery unit 210 from the voltage detection terminal VBAT1 connected to the positive electrode of the battery unit 210. The current detection terminal VRSM as one of the pair of current detection terminals is connected to the negative electrode of the secondary battery 211, and further connected through an external resistor R11 to the current detection terminal VRSP as the other of the pair of current detection terminals in the position outside the monitoring IC 220.

The monitoring IC 220 detects from the current detection terminals VRSP and VRSM the current which flows through the external resistor R11, i.e., the charging or discharge current of the battery unit 210. The communication terminal SIO is connected through the protection IC 230 to the external terminal 214 which is used for communicating the monitoring IC 220 with the mobile device 100. The monitoring IC 220 of this embodiment communicates with the mobile device 100 through the communication terminal SIO and the protection IC 230. The detailed composition of the monitoring IC 220 will be described later.

The protection IC 230 is provided to protect the battery pack 200 from overcharging and overdischarging. The protection IC 230 includes a terminal DOUT and a terminal COUT which are connected to the gate of an MOS transistor M11 and the gate of an MOS transistor M12, respectively, and the MOS transistors M11 and M12 are provided to cut off the charging/discharging of the battery pack 200. The protection IC 230 is arranged so that, when an overdischarge or an overcurrent in the battery pack 200 is detected, an output signal to the terminal DOUT is set to the low level, which turns off the MOS transistor M11, and when an overcharge in the battery pack 200 is detected by an overcharge detecting circuit, an output signal to the terminal COUT is set to the low level, which turns off the MOS transistor M12.

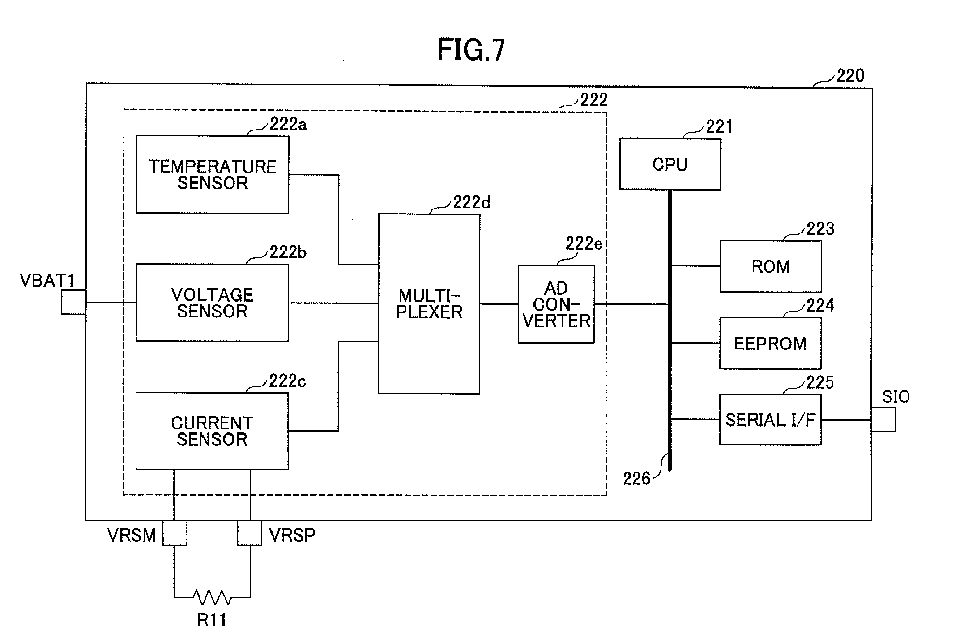

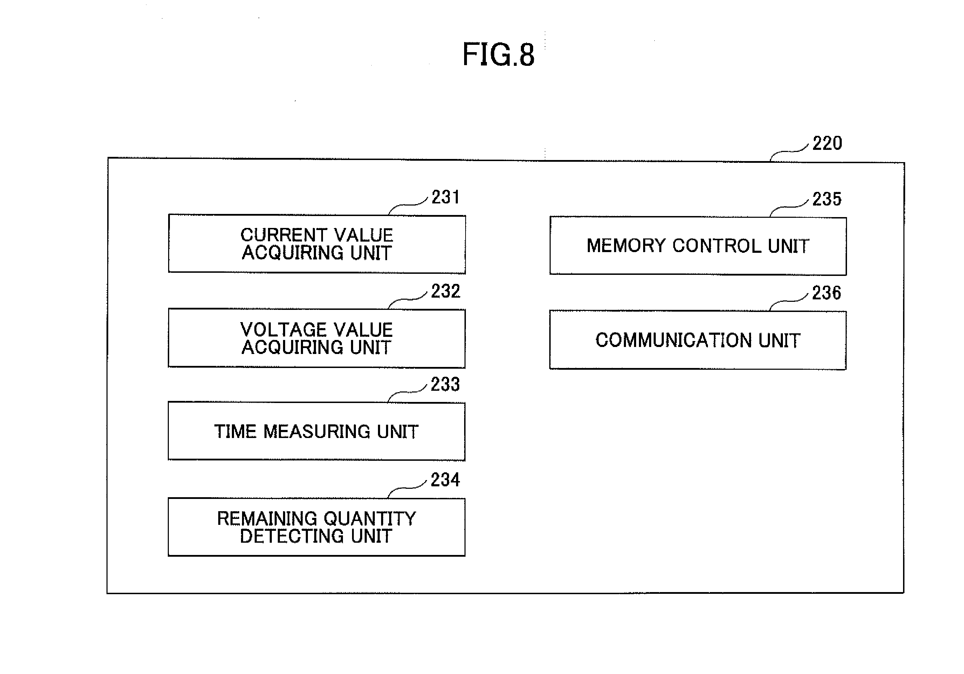

With reference to FIG. 7 and FIG. 8, the detailed composition of the monitoring IC 220 will be described. FIG. 7 is a diagram illustrating the hardware composition of the monitoring IC. As illustrated in FIG. 7, the monitoring IC 220 includes a CPU (Central Processing Unit) 221, a sensor unit 222, an ROM (Read Only Memory) 223, an EEPROM (Electrically Erasable and Programmable ROM) 224, and a serial interface (I/F) 225.

The CPU 221 controls the respective parts of the monitoring IC 220. The sensor unit 222 detects a voltage, a current, and a temperature of the battery unit 210. A program executed by the CPU 221 to control the respective parts of the monitoring IC 220 is stored in the ROM 223. Alternatively, the ROM 223 may be replaced with a rewritable flash memory which enables the program to be rewritten in order to compute a battery remaining quantity with a higher level of accuracy.

In the EEPROM 224, information including respective parameters of the voltage, the current, and the temperature of the battery unit 210 which are detected by the sensor unit 222 is stored. Alternatively, the program executed by the CPU 221 to control the respective parts of the monitoring IC 220 may be stored in the EEPROM 224.

The serial I/F 225 is provided to communicate with the mobile device 100 through the communication terminal SIO. The CPU 221, the sensor unit 222, the ROM 223, the EEPROM 224, and the serial I/F 225 are mutually interconnected by a bus 226, and the data and the program can be exchanged between these elements.

The sensor unit 222 includes a temperature sensor 222a, a voltage sensor 222b, a current sensor 222c, a multiplexer 222d, and an analog-to-digital (A/D) converter 222e.

The temperature sensor 222a detects a temperature of the battery unit 210. The voltage sensor 222b detects an output voltage of the battery unit 210 through the voltage detection terminal VBAT1 connected to the battery unit 210. The current sensor 222c detects a current which flows through the external resistor R11, i.e., the charging/discharging current of the battery unit 210, through the current detection terminals VRSP and VRSM. The respective outputs of the temperature sensor 222a, the voltage sensor 222b, and the current sensor 222c are connected to the multiplexer 222d, and the multiplexer 222d outputs a single analog signal. The A/D converter 222e converts the analog signal output from the multiplexer 222d into a digital signal.

FIG. 8 is a diagram illustrating the functional composition of monitoring IC. In this embodiment, the functional composition of the monitoring IC 220 illustrated in FIG. 8 is constituted by the program stored in the ROM 223 illustrated in FIG. 7.

The monitoring IC 220 includes a current value acquiring unit 231, a voltage value acquiring unit 232, a time measuring unit 233, a remaining quantity detecting unit 234, a memory control unit 235, and a communication unit 236.

The current value acquiring unit 231 acquires the current value which is detected by the current sensor 222c. The voltage value acquiring unit 232 acquires the voltage value which is detected by the voltage sensor 222b. The time measuring unit 233 performs a time measurement by using a clock function incorporated in the monitoring IC 220.

The remaining quantity detecting unit 234 detects a battery remaining quantity of the battery unit 210 based on the voltage value acquired by the voltage value acquiring unit 232 or the current value acquired by the current value acquiring unit 231, and the time measured by the time measuring unit 233.

The memory control unit 235 stores the state information including the current value acquired by the current value acquiring unit 231, the voltage value acquired by the voltage value acquiring unit 232, and the remaining quantity detected by the remaining quantity detecting unit 234 in, for example, the EEPROM 224. The communication unit 236 performs communication with the mobile device 100 in which the battery pack 200 is provided, and supplies to the mobile device 100, for example, the remaining quantity data which indicates the remaining quantity of the battery unit 210.

The mobile device 100 causes the above-described processing amount display control unit 120 to perform the display control using the remaining quantity data of the battery unit 210 which is detected by the remaining quantity detecting unit 234 of the monitoring IC 220.

As described in the foregoing, in this embodiment, the executable processing amount of each application is displayed on the display device 12 together with the list of the applications which constitute the application group 110. For this reason, it is possible for this embodiment to display the executable processing amounts of all the applications in one display screen at a time. When displaying an executable processing amount of another of the applications is desired, it is no longer necessary to perform operation for switching the display screen to a secondary display screen. Therefore, according to this embodiment, the operability can be improved. Moreover, in this embodiment, the executable processing amount of each application is displayed, and the user can use the mobile device 100 while being conscious of the functions used in the mobile device 100 and the remaining quantity of the battery unit 210.

### Second Embodiment

With reference to the accompanying drawings, a second embodiment of the present disclosure will be described. In the second embodiment, most of the functions of the processing amount display control unit 120 in the first embodiment are provided in the battery pack 200A, which is different from the first embodiment. In the following, only a point of the second embodiment that is different from the first embodiment will be described. In the second embodiment, the elements which are the same as corresponding elements in the first embodiment are designated by the same reference numerals, and a description thereof will be omitted.

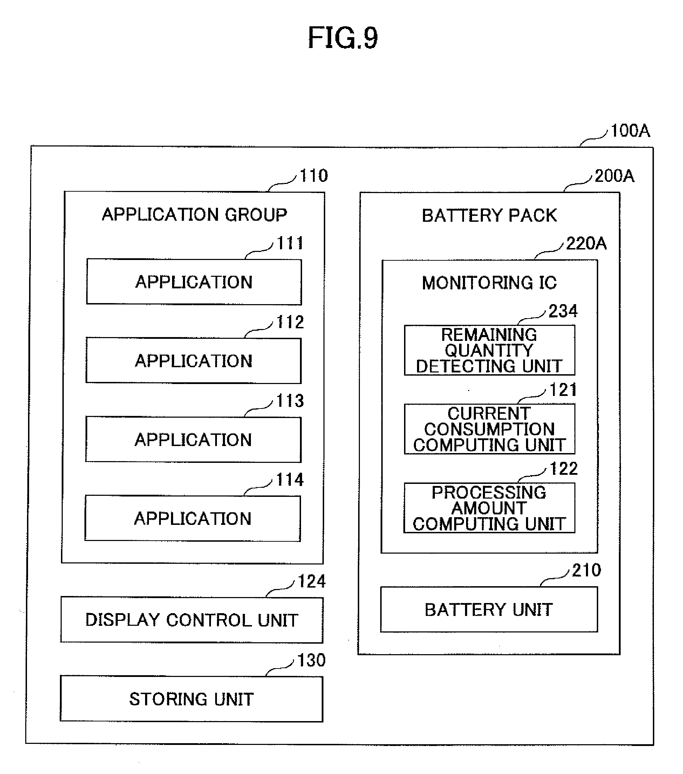

FIG. 9 is a diagram illustrating the functional composition of the mobile device of the second embodiment. In the mobile device 100A of this embodiment, a battery pack 200A is incorporated therein.

The mobile device 100A of this embodiment includes an application group 110, a display control unit 124, and a storing unit 130. In the battery pack 200A of this embodiment, in addition to the remaining quantity detecting unit 234, a current consumption computing unit 121 and a processing amount computing unit 122 are provided in the monitoring IC 220A. In this embodiment, the memory control unit 235 of the monitoring IC 220A stores, in the EEPROM 224 of the monitoring IC 220A, a current consumption of each application computed by the current consumption computing unit 121 and an executable processing amount of each application computed by the processing amount computing unit 122.

In this embodiment, the monitoring IC 220A supplies the results of the computation by the processing amount computing unit 122 to the mobile device 100A by using the communication unit 236. In the mobile device 100A, the display control unit 124 displays on the display device 12 the results of the computation received from the monitoring IC 220A.

In this embodiment, the functions of the current consumption computing unit 121 and the processing amount computing unit 122 are constituted by the program stored in the ROM 223 of the monitoring IC 220A.

As described in the foregoing, it is possible for this embodiment to obtain the same effect as the first embodiment by using the above-described composition.

### Third Embodiment

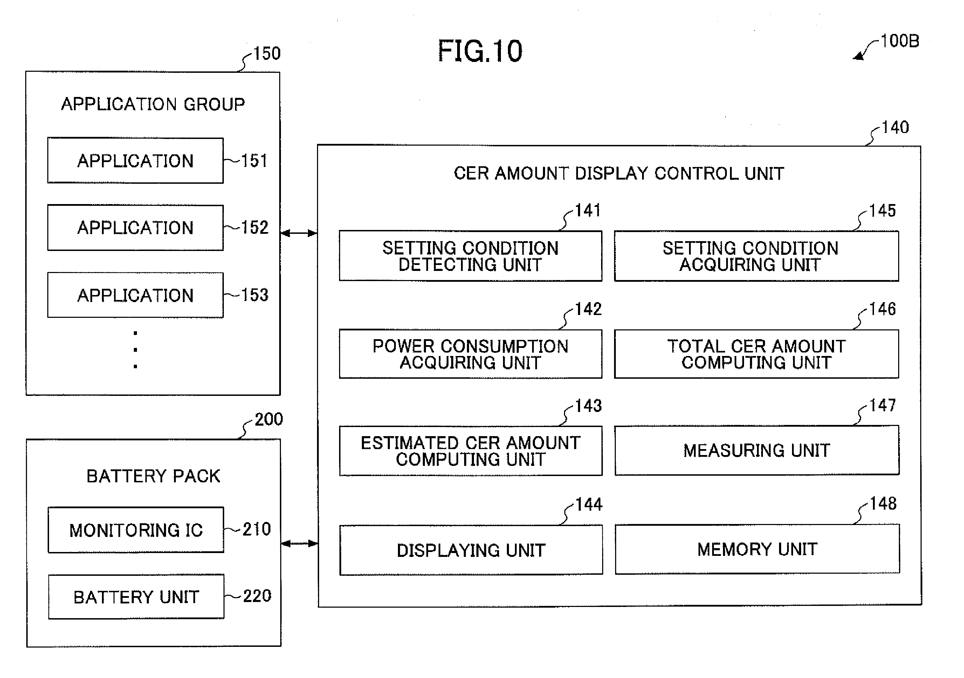

FIG. 10 is a diagram illustrating the functional composition of a mobile device of a third embodiment of the present disclosure.

As illustrated in FIG. 10, the mobile device 100B of this embodiment includes an application group 150, a battery pack 200, and a CO₂ emission reduction (CER) amount display control unit 140.

The application group 150 includes a plurality of applications 151-153 included in the mobile device 100B. For example, the plurality of applications 151-153 which constitute the application group 150 include various applications which perform various functions, including an application which performs a brightness display function of display screens of the whole mobile device 100B, an application which performs a volume level function, an application which performs a vibration function, an application which performs a motion video playback (1seg) function, an application which performs a talk function, an application which performs an e-mail transmitting/receiving function, and an application which performs a music reproduction function.

In the mobile device 100B of FIG. 10, the example of the application group 150 including the three applications 151-153 is illustrated. However, the number of the applications which constitute the application group 150 according to the present disclosure is not limited to this embodiment.

The battery pack 200 is incorporated in the mobile device 100B. The battery pack 200 includes a monitoring IC 220 and a battery unit 210.

In the mobile device 100B of FIG. 10, the CO₂ emission reduction (CER) amount display control unit 140 is a display control unit for displaying to the user the screen of the mobile device 100B indicating how much the previous CO₂ emission amount is changed if the setting condition of at least one of the plurality of functions (the applications) provided in the mobile device 100B is changed. The display control unit of this embodiment controls the displaying of the screen of the mobile device 100B.

Specifically, the CER (CO₂ emission reduction) amount display control unit 140 includes a setting condition detecting unit 141, a power consumption acquiring unit 142, an estimated CER (CO₂ emission reduction) amount computing unit 143, a displaying unit 144, a setting condition acquiring unit 145, a total CER (CO₂ emission reduction) amount computing unit 146, a measuring unit 147, and a memory unit 148.

The setting condition detecting unit 141 detects a single setting condition selected from among the setting conditions of the plurality of functions by the user using a predetermined operation key in the mobile device 100B.

For example, when the user of the mobile device 100B selects, by using a predetermined operation key, a setting condition of "low-level mode" (setting condition 1), from a setting condition of "normal-level mode" (setting condition 2) previously selected among the setting conditions of the brightness display function of the display screen of the mobile device 100B, the setting condition detecting unit 141 detects the selected setting condition of "low-level mode".

The setting condition detecting unit 141 detects the selected setting condition when one of the setting conditions for one of the various functions, including the brightness display function, the volume level function, and the vibration function is selected for each of the various functions including the motion video playback (1seg) function and the e-mail transmitting/receiving function.

The power consumption acquiring unit 142 acquires a momentary or instantaneous power consumption with respect to the setting condition detected by the setting condition detecting unit 141. For example, the power consumption acquiring unit 142 acquires the power consumption detected by the monitoring IC 220 of the battery pack 200.

The estimated CER amount computing unit 143 computes an estimated amount of CO₂ emission reduction for a predetermined period (for example, one year) based on a difference between the power consumption acquired by the power consumption acquiring unit 142 and the power consumption previously set and stored in the memory unit 148 with respect to the setting condition of the same function.

The estimated amount of CO₂ emission reduction in this embodiment is computed by using the carbon-dioxide-emission coefficient related to the use of electricity which is set to 0.555 kg-CO₂ per 1 kW-hour. For example, when the setting condition of the brightness display function of the display screen of the mobile device 100B is changed from the "normal-level mode" to the "low-level mode" and the difference between the power consumptions thereof is equal to about 0.04 mW (for example, for 1 second), the estimated amount of CO₂ emission reduction computed is equal to about 1.5 kW per year. At this time, the yearly amount of CO₂ emission reduction is equal to about 20 kg-CO₂ (which is equivalent to about two beech trees).

For example, the yearly amount of CO₂ emission reduction for the above example may be computed as follows. The daily amount of power consumption of the battery pack 200 (= 4W) x 365 (days) x 0.555 kg-CO2/kWh (the carbon-dioxide-emission coefficient per 1 kWh) = 20 kg-CO₂ (the yearly amount of CO₂ emission reduction). In this case, the yearly amount of absorption of CO₂ per beech tree is assumed to be 10.62 kg-CO₂.

Subsequently, the displaying unit 144 displays the estimated amount of CO₂ emission reduction computed by the estimated CER amount computing unit 143 on the display screen of the mobile device 100B. The displaying unit 144 displays the total amount of CO₂ emission reduction obtained by the total CER amount computing unit 146 which will be described later. The displaying unit 144 may be arranged to display the estimated amount of CO₂ emission reduction while outputting a computer-generated voice.

The setting condition acquiring unit 145 acquires the setting condition when the setting condition selected by the user using the predetermined operation key of the mobile device 100B is performed. For example, when the setting condition of "low-level mode" (setting condition 1) of the brightness display function of the display screen of the mobile device 100B is selected by the user of the mobile device 100B using the operation key and the selected setting condition is performed, the setting condition acquiring unit 145 acquires the setting condition of "low-level mode".

The setting condition acquiring unit 145 stores, in the memory unit 148, the acquired setting condition, the setting time at which the setting condition is performed, and the power consumption of the battery pack 200 under the setting condition performed.

The total CER amount computing unit 146 computes a total amount of CO₂ emission reduction for the various functions. Specifically, the total CER amount computing unit 146 acquires the power consumption under the "standard mode" (for example, setting condition 2) which is stored beforehand in the memory unit 148 as the reference for each of the various functions. The total CER amount computing unit 146 acquires the accumulated time of each setting condition, performed for each of the various functions, and the power consumption (for example, the accumulated time of the setting condition 1 and the power consumption) which are stored in the memory unit 148 by the setting condition acquiring unit 145.

The total CER amount computing unit 146 computes a difference between the acquired power consumption under the standard mode and the power consumption of the each performed setting condition, multiplies the accumulated time of each setting condition by the computed difference, and computes the total amount of CO₂ emission reduction.

The total CER amount computing unit 146 may be arranged to compute a total amount of CO₂ emission reduction for at least one period among one minute, one hour, one day, one week, one month and one year which is predetermined. The total CER amount computing unit 146 may be arranged to compute a total amount of CO₂ emission reduction at the current time from the time the respective setting conditions are set up and stored, in accordance with the user's instruction.

The measuring unit 147 measures an elapsed time after the respective setting conditions of the various functions are stored or performed as being the accumulated time. The measuring unit 147 stores in the memory unit 148 the accumulated time measured for each of the various setting conditions.

The memory unit 148 stores various data, including the various functions of the mobile device 100B in this embodiment, the setting conditions of the various functions, the setting time, the accumulated time under the various setting conditions, and the power consumption, and the data stored in the memory unit 148 may be read out or rewritten (including updating, changing, and deleting) if needed.

As described in the foregoing, in this embodiment, when a change of one of the various setting conditions is selected, the power consumption under the selected setting condition is actually computed, and it is possible to compute the power consumption and the amount of CO₂ emission reduction in the mobile device more exactly than in the case in which an estimated power consumption is computed based on the remaining quantity of the battery pack, without causing an error due to the degradation of the battery pack.

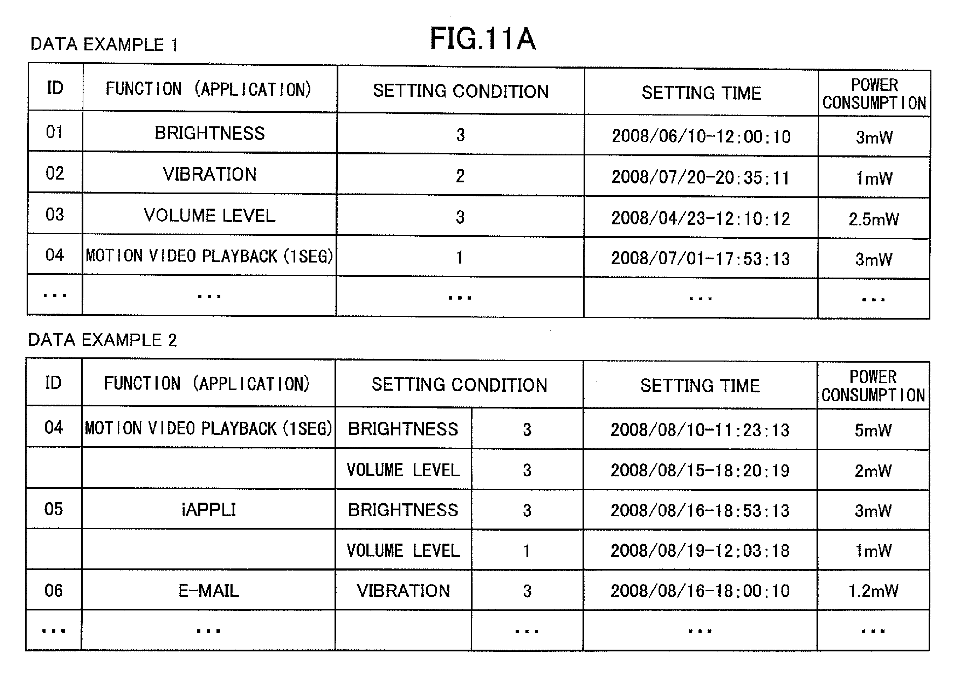

Next, some examples of the data stored in the memory unit 148 will be described with reference to the accompanying drawings. FIG. 11A is a diagram illustrating examples of the data in the memory unit in the third embodiment.

Data example 1 of FIG. 11A is an example of the newest setting condition (state) of each of the various functions of the whole mobile device 100B. The data example 1 has the data items "ID", "function (application)", "setting condition", "setting time", and "power consumption", which are stored for each of the functions. For example, the newest setting condition (state) of "brightness" the data item "ID" of which is "01" is "3" (for example, the high-level mode), and this setting condition is set up (performed) at the setting time "12:00:10 on June 10, 2008", and the power consumption at that time is "3mW". The data item "ID" is the identification information for identifying one of the applications.

In the data example 1, only the newest setting condition of each of the functions of the mobile device 100B is stored. For this reason, for example, when the setting condition of the brightness display function is updated to the setting condition "1" (low-level mode) by the user of the mobile device 100B, the setting condition "1" is overwritten to the data item "brightness" the data item "ID" of which is "01", together with the "setting time" and the "power consumption" under the setting condition.

Data example 2 of FIG. 11A is an example of the newest setting condition (state) in the mobile device 100B, including a brightness and a volume level, which is stored for each of the various functions of the mobile device 100B, including a motion video playback function (1seg), an i-appli (registered tradernark) function, and an e-mail function.

The data example 2 has the data items "ID", "function (application)", "setting condition", "setting time", and "power consumption", which are stored for each of the functions. For example, the setting condition of "brightness" of the function "motion video playback (1seg)" the data item "ID" of which is "04" is "3" (for example, the high-level mode), and this setting condition is set at the setting time "11:23:13 on August 10, 2008", and the power consumption at that time is "5mW". Also in the data example 2, only the newest setting condition of each of the functions is stored.

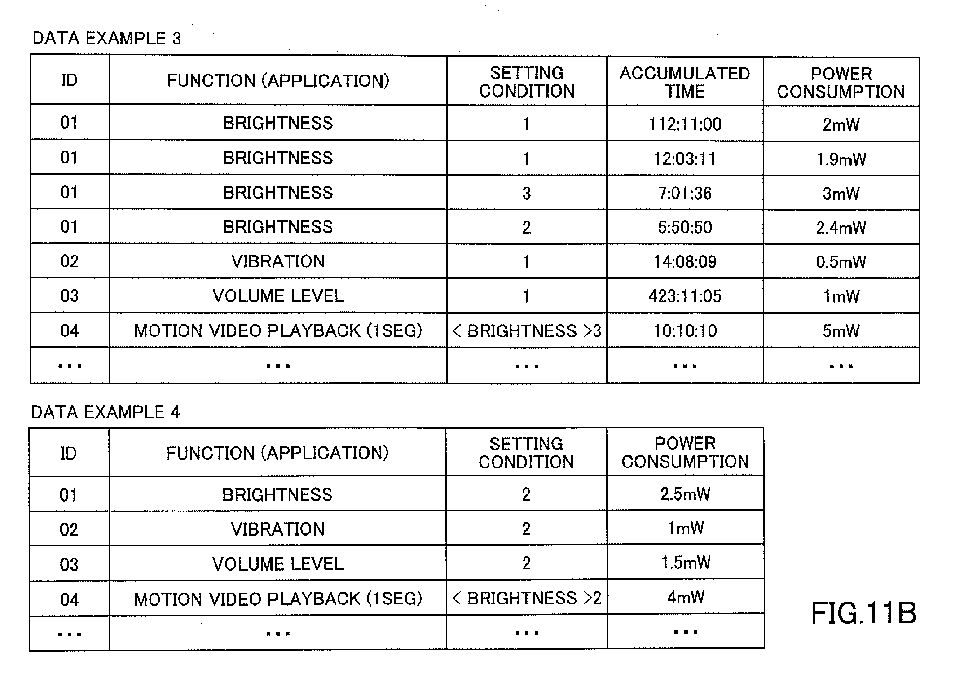

FIG. 11B is a diagram illustrating other examples of the data in the memory unit in the third embodiment.

Data example 3 of FIG. 11B is an example of an accumulated time and a power consumption which are stored when the setting condition is stored by the user of the mobile device 100B for each of the functions of the mobile device 100B. The data example 3 has the data items "ID", "function (application)", "setting condition", "accumulated time", and "power consumption", which are stored for each of the functions. For example, the accumulated time stored when the "setting condition" of "brightness" the data item "ID" of which is "01" is set to "1" is "112 hours, 11 minutes, 00 seconds", and the power consumption at the time of the setting condition is "2mW".

For example, the accumulated time stored when the "setting condition" of "brightness" the data item "ID" is "01" is set to "3" is "7 hours, 01 minutes, 36 seconds", and the power consumption at the time of the setting condition is "3mW".

For example, when the "setting condition" of "brightness" is "1" and the power consumption at the time of the setting condition is different from "2mW", an additional record item is added. The time for which the power consumption is equal to "1.9mW" is accumulated, and the accumulated time "12 hours, 03 minutes, 11 seconds" is stored.

Data example 4 of FIG. 11B is an example of the power consumption under the setting condition in the standard mode which is stored beforehand for each of the various functions of the mobile device 100B.

The data example 4 of FIG. 11B has the data items "ID", "function (application)", "setting condition", and "power consumption". For example, the standard mode (setting condition 2) used as the standard of the "vibration function" the data item "ID" of which is "02" is set to "1mW".

When the setting condition "standard mode" (setting condition 2) of the brightness display function in the data example 4 is set as the setting condition of the brightness display function, the power consumption is detected and stored (2.4mW) as in the data example 3. Because the difference between the value in the standard mode of each function as in the data example 4 stored beforehand and the actual value acquired from the battery pack 200 can be computed even when the user sets up the standard mode of each function, and it is possible to accurately compute the amount of CO₂ emission reduction for each model of the mobile device.

The tables of the data example 1 and the data example 2 are accessed primarily when an estimated amount of CO₂ emission reduction is computed by the estimated CO₂ emission reduction amount computing unit 143. The tables of the data example 3 and the data example 4 are accessed primarily when a total CO₂ emission reduction amount is computed by the total CO₂ emission reduction amount computing unit 146. However, the present disclosure is not limited to these examples.

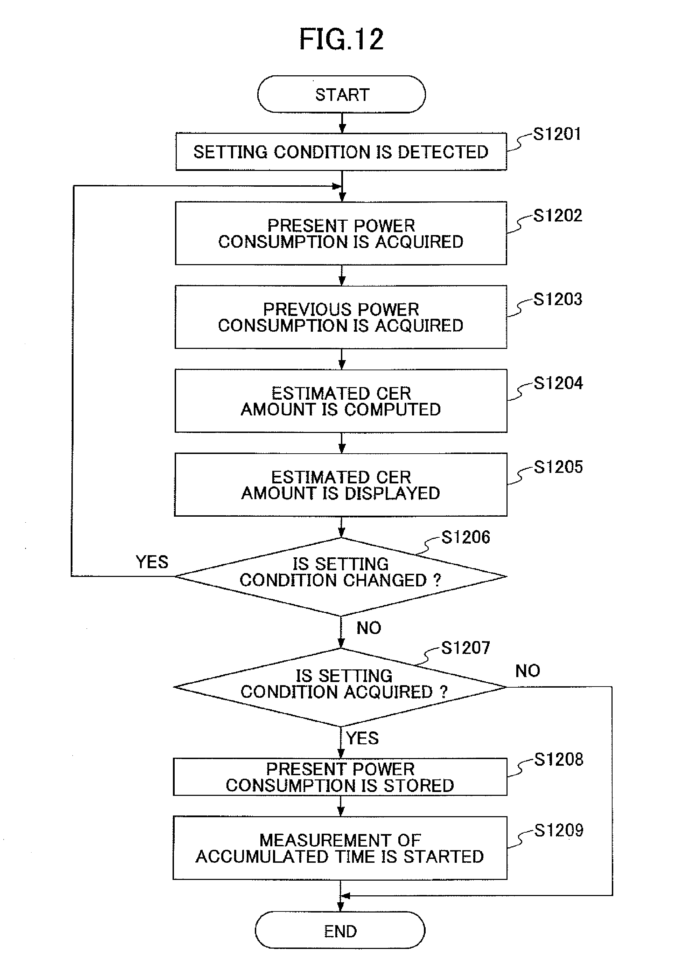

Next, with reference to FIG. 12, operation of the mobile device 100B of this embodiment will be described. FIG. 12 is a flowchart for explaining operation of the mobile device of the third embodiment.

Upon start of the estimated CO₂ emission reduction amount computing process illustrated in FIG. 12, the CO₂ emission reduction amount display control unit 140 of the mobile device 100B causes the setting condition detecting unit 141 to detect the setting condition which is currently selected by the user using the operation key of the mobile device 100B (step S1201).

The setting condition in this case may be one of setting conditions of the functions included in the mobile device 100B, for example, one of "high-level mode", "normal-level mode" and "low-level mode" for the brightness display function of the display screen of the mobile device 100B. For example, it is assumed that the setting condition detected by the setting condition detecting unit 141 here is the "low-level mode" which is one setting condition selected from among these setting conditions by the user.

Subsequently, the CO₂ emission reduction amount display control unit 140 causes the power consumption acquiring unit 142 to acquire the present power consumption of the battery pack 200 of the mobile device 100B in the setting condition detected by the setting condition detecting unit 141 (step S1202). The present power consumption of the battery pack 200 here is the momentary or instantaneous power consumption of the battery pack 200 which has been detected by the monitoring IC 220.

Subsequently, the CO₂ emission reduction amount display control unit 140 causes the power consumption acquiring unit 142 to acquire the previous power consumption in the previous setting condition of the same function set up (or performed) by the user (step S1203). Here, the power consumption acquiring unit 142 acquires the previous power consumption of the previous setting condition for the same function by accessing the tables in the data example 1 and the data example 2 which are stored in the memory unit 148.

Subsequently, the CO₂ emission reduction amount display control unit 140 causes the estimated CO₂ emission reduction amount computing unit 143 to compute a difference between the power consumption values acquired in the steps S1202 and S1203, and compute an estimated amount of CO₂ emission reduction based on the computed difference (step S1204).

Subsequently, the CO₂ emission reduction amount display control unit 140 causes the displaying unit 144 to display, on the display device of the mobile device 100B, the estimated amount of CO₂ emission reduction computed in the step S1204 (step S1205).

Subsequently, the CO₂ emission reduction amount display control unit 140 determines whether the currently detected setting condition is changed to another setting condition (step S1206). Here, the CO₂ emission reduction amount display control unit 140 determines that the setting condition is changed to another setting condition, when a setting condition different from the currently detected setting condition is detected by the setting condition detecting unit 141.

When it is determined in the step S1206 that the setting condition is changed, control of the CO₂ emission reduction amount display control unit 140 is returned to the step S1202, and the process is continuously performed.

When the result of the determination in the step S1206 is negative (when it is determined that the setting condition is not changed), the CO₂ emission reduction amount display control unit 140 determines whether the present setting condition is stored or set up (step S1207). Here, the CO₂ emission reduction amount display control unit 140 determines that the present setting condition is stored, when the present setting condition is acquired by the setting condition acquiring unit 145.

When it is determined in the step S1207 that the present setting condition is stored, the CO₂ emission reduction amount display control unit 140 causes the setting condition acquiring unit 145 to store into the memory unit 148 the power consumption acquired in the step S1202 together with the setting condition detected in the step S1201 and the setting time the setting condition is stored (step S1208).

Subsequently, the measuring unit 147 starts the measurement of the accumulated time with respect to the pertinent setting condition stored in the memory unit 148 (step S1209). When the result of the determination in the step S1207 is negative, the process is terminated without performing the steps S1208 and S1209.

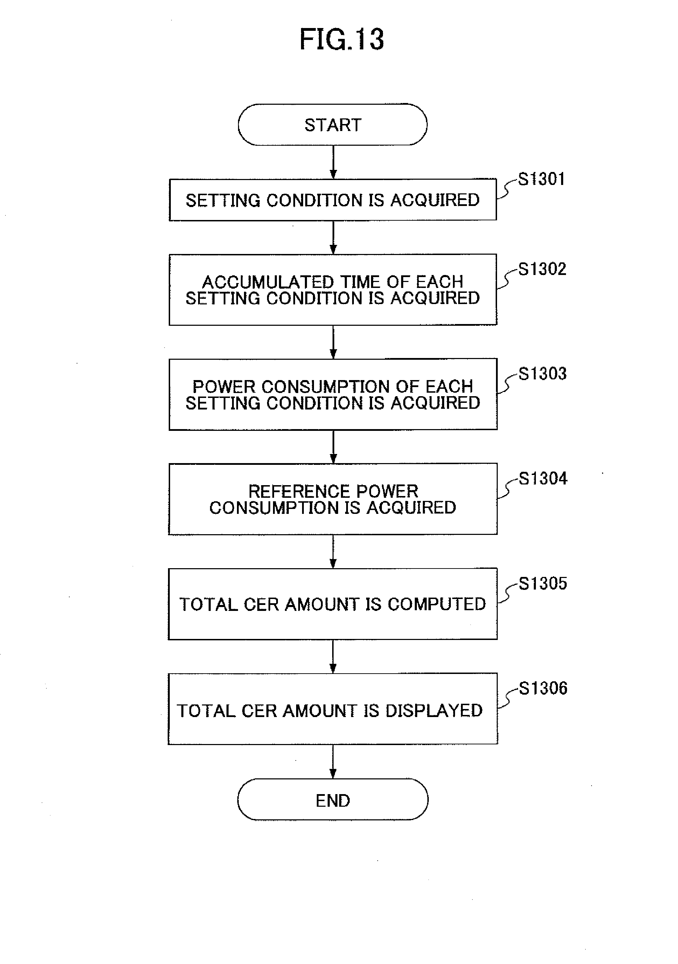

Next, with reference to FIG. 13, operation of the mobile device 100B of this embodiment will be described. FIG. 13 is a flowchart for explaining operation of the mobile device of the third embodiment.

Upon start of the total CO₂ emission reduction amount computing process illustrated in FIG. 13, the CO₂ emission reduction amount display control unit 140 of the mobile device 100B performs the following process in accordance with a predetermined period (which is any of one minute, one hour, one day, one week, one month and one year), or in accordance with the instruction of the user.

First, the CO₂ emission reduction amount display control unit 140 acquires the setting condition of each of the functions of the mobile device 100B by accessing the table in the data example 3 stored in the memory unit 148 (step S1301).

Subsequently, the CO₂ emission reduction amount display control unit 140 acquires the accumulated time of each setting condition for each of the functions of the mobile device 100B (step S1302), and acquires the power consumption of each setting condition (step S1303).

Subsequently, the CO₂ emission reduction amount display control unit 140 acquires the power consumption in the standard mode used as the reference for each function of the mobile device 100B by accessing the table in the data example 4 stored in the memory unit 148 (step S1304).

Subsequently, the CO₂ emission reduction amount display control unit 140 causes the total CO₂ emission reduction amount computing unit 146 to compute a difference between the reference power consumption in the standard mode and the power consumption in the setting condition stored by the user, based on the power consumptions acquired in the steps S1303 and S1304, and compute a total amount of CO₂ emission reduction by multiplying the difference by the accumulated time acquired in the step S1302 (step S1305).

Subsequently, the displaying unit 144 displays on the display device of the mobile device 100B the total amount of CO₂ emission reduction computed in the step S1305 (step S1306), and the process is terminated.

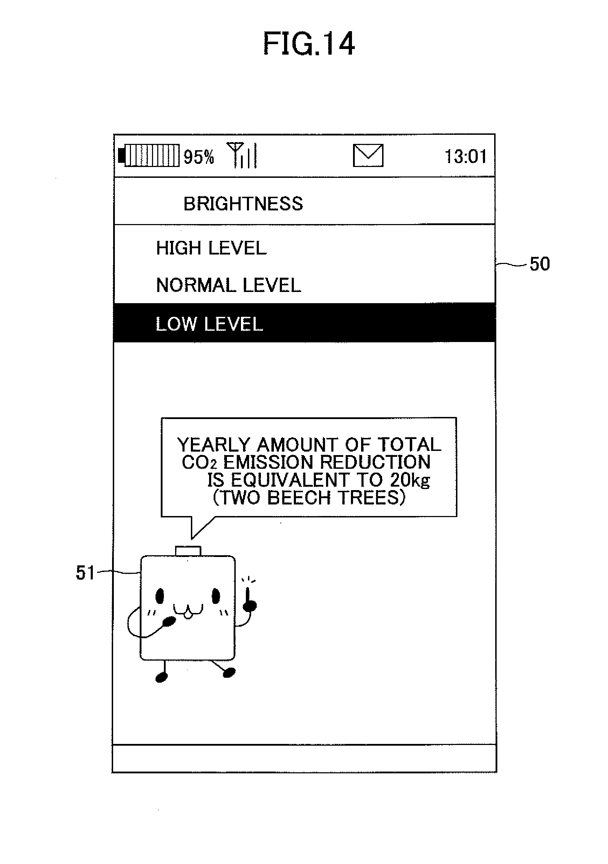

Next, an example of the contents of a screen which is displayed by the displaying unit 144 of this embodiment will be described. FIG. 14 is a diagram illustrating an example of the contents of a screen which is presented by the presenting unit in the third embodiment. In the screen 50 illustrated in FIG. 14, an example of the setting condition of the brightness display function operated by the user is illustrated.

In the screen 50 illustrated in FIG. 14, when the "normal-level mode" (for example, setting condition 2) in the brightness setup is changed to the "low-level mode" (for example, setting condition 1), a message indicating "the yearly amount of total CO₂ emission reduction is equivalent to 20kg (two beech trees)" is illustrated. Alternatively, a still image or a moving image of a pictorial character 51 as illustrated in FIG. 14 may be presented at this time, instead of the illustration of the text message.

The contents of the screen displayed by the displaying unit 144 are not limited to the contents illustrated in FIG. 14 in this embodiment. For example, a message indicating how much the CO₂ emissions have been reduced until now may also be presented instead. What is presented at this time is not limited to the contents of a display screen. For example, a voice message may be presented at this time.

In the above embodiment, how much the CO₂ emissions are reduced is presented to the user. However, the present disclosure is not being limited to this embodiment. Alternatively, for example, a message indicating how much the CO₂ emissions will be increased when the setting condition of the mobile device 100B is changed may be presented to the user. Thereby, the user may be demanded to change the setting condition so as to reduce the amount of CO₂ emissions.

As described in the foregoing, it is possible for this embodiment to present to the user specific information indicating how much the CO₂ emissions can be reduced by changing the setting condition for the plurality of functions of the mobile device (energy saving effect). Specifically, according to the present disclosure, the information indicating how much the CO₂ emissions can be reduced is presented, and the user is allowed to set up or store the setting condition easily for improving the environmental condition.

### Fourth Embodiment

In this embodiment, an executable processing amount of each application is computed based on the battery remaining quantity of the secondary battery and the current consumption value at the time of performing each application, and the computed executable processing amount of each application is displayed with a corresponding image associated with each application.

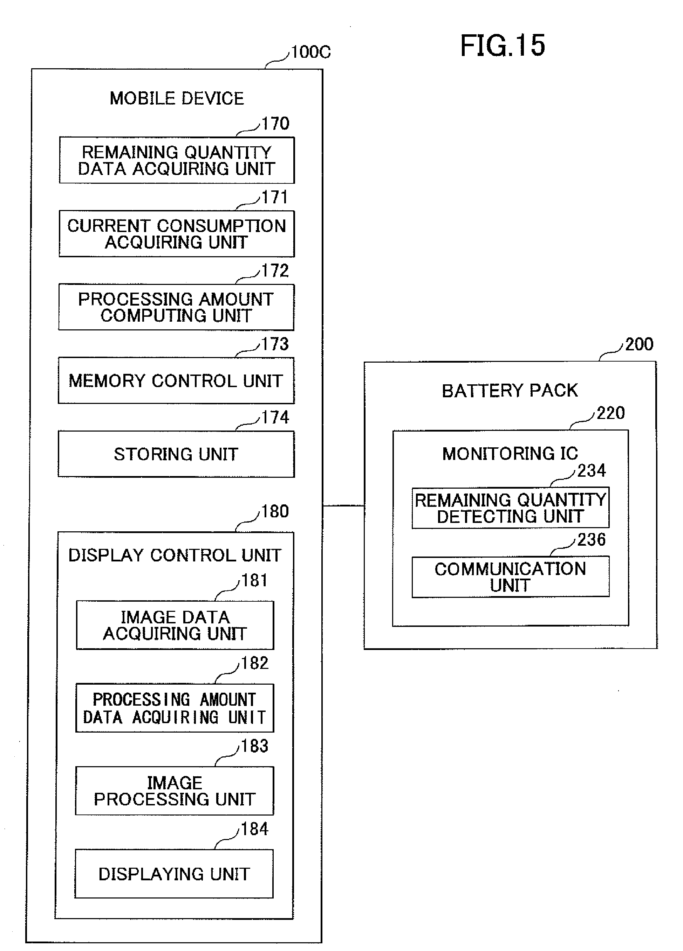

With reference to the accompanying drawings, the functional composition of a mobile device 100C of the fourth embodiment of the present disclosure will be described. FIG. 15 is a diagram illustrating the functional composition of the mobile device of the fourth embodiment.

The mobile device 100C of this embodiment includes a battery pack 200 disposed therein, and electric power from the battery pack 200 is supplied to the mobile device 100C and the mobile device 100C is driven.

The mobile device 100C includes a remaining quantity data acquiring unit 170, a current consumption acquiring unit 171, a processing amount computing unit 172, a memory control unit 173, a storing unit 174, and a display control unit 180.

The battery pack 200 includes a monitoring IC 220 which monitors the state of the secondary battery in the battery pack 200. The monitoring IC 220 includes a remaining quantity detecting unit 234 which detects the remaining quantity of the secondary battery, and a communication unit 236 which transmits, to the mobile device 100C, the data detected by the monitoring IC 220.

The remaining quantity data acquiring unit 170 of the mobile device 100C acquires the remaining quantity data indicating the remaining quantity of the secondary battery, from the battery pack 200. The current consumption acquiring unit 171 acquires the average current consumption value of each of the applications which perform the functions of the mobile device 100C. The current consumption acquiring unit 171 of this embodiment may compute the average current consumption value of each application based on the remaining quantity data acquired by the remaining quantity data acquiring unit 170 and the execution time of the application. For example, the current consumption acquiring unit 171 of this embodiment may acquire the average current consumption value of each application which value is stored beforehand. In this case, it is preferred that the average current consumption value of each application is stored in the memory device or the like. In the following, a description will be given of the case in which the current consumption acquiring unit 171 computes the average current consumption value of each application based on the execution time of each application and the remaining quantity of the secondary battery. The computing process of the average current consumption will be described later.

The processing amount computing unit 172 computes the executable processing amount of each application based on the average current consumption of each application and the remaining quantity data. The process of computing of the executable processing amount will be described later.

The memory control unit 173 controls the storage of various kinds of data into the memory device of the mobile device 100C.

The storing unit 174 stores various kinds of setting information in the mobile device 100C. For example, the storing unit 174 stores the setting information indicating the display control is to be performed by the display control unit 180. For example, the storing unit 174 stores the setting information in the auxiliary memory device 14 if the display control setting is input from the operation unit 11.

The display control unit 180 displays on the display device 12 of the mobile device 100C a processed image containing the icon image combined with the executable processing amount of each application.

The display control unit 180 of this embodiment acquires the icon image data which will be described later, performs image processing to generate the processed image, and displays the processed image containing the icon image combined with the executable processing amount. The display control unit 180 of this embodiment includes an image data acquiring unit 181, an processing amount data acquiring unit 182, and an image processing unit 183, and a displaying unit 184.

The image data acquiring unit 181 acquires the icon image data associated with each application, and the processing amount data acquiring unit 182 acquires the processing amount data indicating the executable processing amount of each application. The image processing unit 183 performs image processing which generates the image data in which the icon image data and the processing amount data are combined, and the displaying unit 184 displays the image data generated by the image processing unit 183.

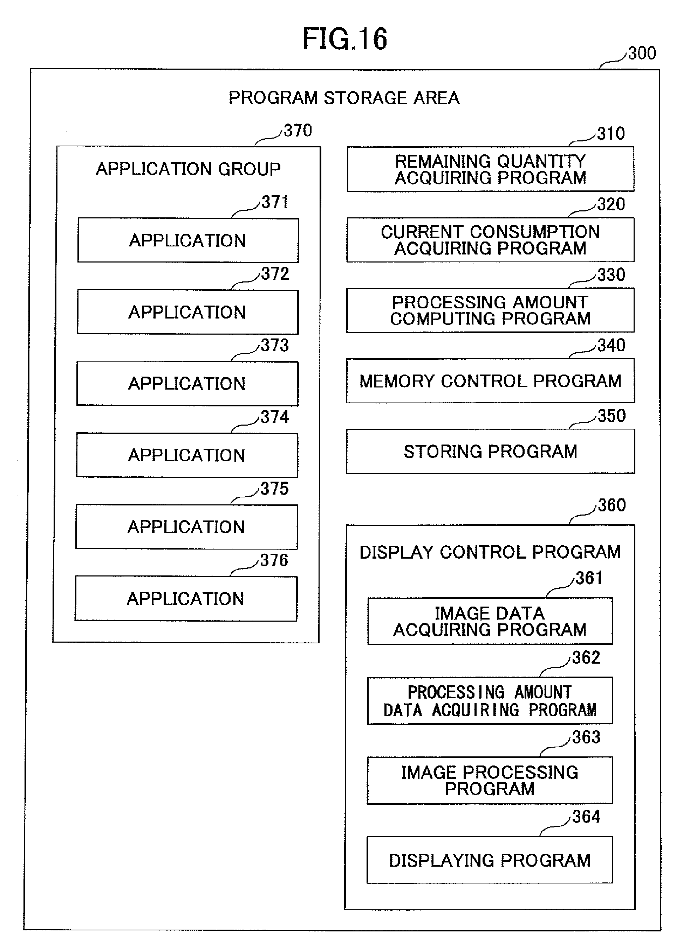

In the mobile device 100C of this embodiment, a program storage area 300 in which various programs are stored, and a data storage area 400 in which various data are stored are provided in the auxiliary memory device 14. FIG. 16 is a diagram for explaining the program storage area of the fourth embodiment.

In the program storage area 300, a remaining quantity data acquiring program 310 which functions as the remaining quantity data acquiring unit 170, a current consumption acquiring program 320 which functions as the current consumption acquiring unit 171, a processing amount computing program 330 which functions as the processing amount computing unit 172, a memory control program 340 which functions as the memory control unit 173, a storing program 350 which functions as the storing unit 174, and a display control program 360 which functions as the display control unit 180 are included.

In the display control program 360, an image data acquiring program 361 which functions as the image data acquiring unit 181, a processing amount data acquiring program 362 which functions as the processing amount data acquiring unit 182, an image processing program 363 which functions as the image processing unit 183, and a displaying program 364 which functions as the displaying unit 184 are included.

In the program storage area 300, an application group 370 which contains a plurality of applications for performing the various functions of the mobile device 100C is stored.

For example, the plurality of applications which constitute the application group 370 illustrated in FIG. 16 include an application 371 which performs the talk function, an application 372 which performs the e-mail transmitting/receiving function, an application 373 which performs the music reproduction function, an application 374 which performs the communication function to perform communication through the Internet, an application 375 which performs a television broadcasting receiving function on the mobile device 100C, and an application 376 which performs a game device function on the mobile device 100C. The applications which constitute the application group 370 are not limited to the six applications. The application group 370 may further contain, for example, an application which performs an imaging (camera) function on the mobile device 100C.

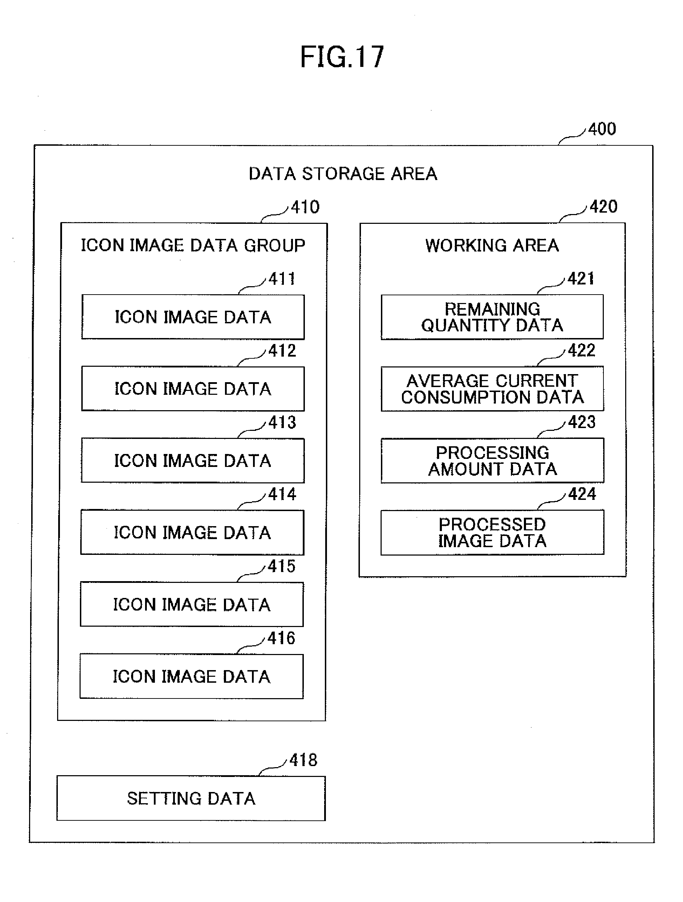

FIG. 17 is a diagram for explaining the data storage area of the fourth embodiment.

In the data storage area 400, setting information 418 set in the mobile device 100C, and an icon image data group 410 for displaying on the display device 12 various kinds of icon image data associated with the respective applications contained in the application group 370 are stored.

The icon image data group 410 includes a plurality of icon image data. For example, the icon image data group 410 includes icon image data 411 to display the icon image associated with the application 371, icon image data 412 to display the icon image associated with the application 372, icon image data 413 to display the icon image associated with the application 373, icon image data 414 to display the icon image associated with the application 374, icon image data 415 to display the icon image associated with the application 375, and icon image data 416 to display the icon image associated with the application 376.

For example, the setting information 418 includes setting data indicating whether the executable processing amount of each application is to be displayed, and setting data indicating the method of displaying the icon image at the time of displaying the executable processing amount.

In the data storage area 400, the working area 420 in which the resulting data of the computations by the various programs stored in the program storage area 300 are temporarily stored is provided.

In this embodiment, in the working area 420, the remaining quantity data 421 acquired from the battery pack 200 by the remaining quantity data acquiring unit 170, the average current consumption data 422 of each application computed by the current consumption acquiring unit 171, and the processing amount data 423 of each application computed by the processing amount computing unit 172 are stored. In the working area 420, the processed image data 424 after image processing is performed by the image processing unit 183 of the display control unit 180 are stored.

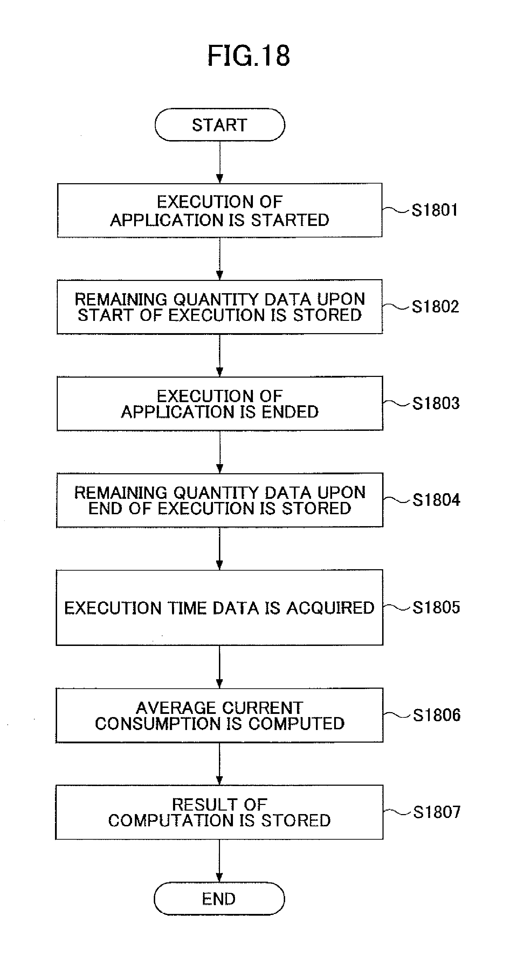

Next, operation of the mobile device 100C of this embodiment will be described. With reference to FIG. 18, the computing process of the average current consumption of each application by the current consumption acquiring unit 171 will be described. FIG. 18 is a flowchart for explaining processing of the current consumption acquiring unit of the mobile device of the fourth embodiment. The following process is performed when the setting information indicating that the display control is to be performed by the display control unit 180 is stored by the storing unit 174.

If execution of the application 371 is started in the mobile device 100C (step S1801), the remaining quantity data acquiring unit 170 acquires from the battery pack 200 the remaining quantity data 421a of the battery pack 200 at the time of the start of execution of the application 371. The acquired remaining quantity data 421a is stored in the working area 420 of the auxiliary memory device 14 by the memory control unit 173 (step S1802).

After the execution of the application 371 is completed (step S1803), the remaining quantity data acquiring unit 170 acquires the remaining quantity data 421b from the battery pack 200 again. The acquired remaining quantity data 421b is stored in the working area 420 by the memory control unit 173 (step S1804).

Subsequently, the current consumption acquiring unit 171 acquires the information of the execution time of the application 371 (step S1805). The execution time of the application 371 is measured by the time measuring function (which is not illustrated) of the mobile device 100C.

The current consumption acquiring unit 171 computes the average current consumption during the execution time of the application 371 based on the information of the remaining quantity data 421a at the time of the start of execution of the application 371, the remaining quantity data 421b at the time of the end of execution of the application 371, and the execution time of the application 371 (step S1806). The computed average current consumption data 422 indicating the average current consumption value of the application 371 is stored in the working area 420 by the memory control unit 173 (step S1807).

It is preferred that the current consumption acquiring unit 171 of this embodiment computes the average current consumption of each of all the applications included in the application group 370. In the mobile device 100C of this embodiment, the average current consumption of each application changes with the capacity of data being processed during the execution time of each application. Hence, it is preferred that the current consumption acquiring unit 171 of this embodiment computes the average current consumption of each application periodically. It is preferred that the memory control unit 173 rewrites the average consumption power data 422 stored in the working area 420 each time the average current consumption is computed by the current consumption acquiring unit 171.

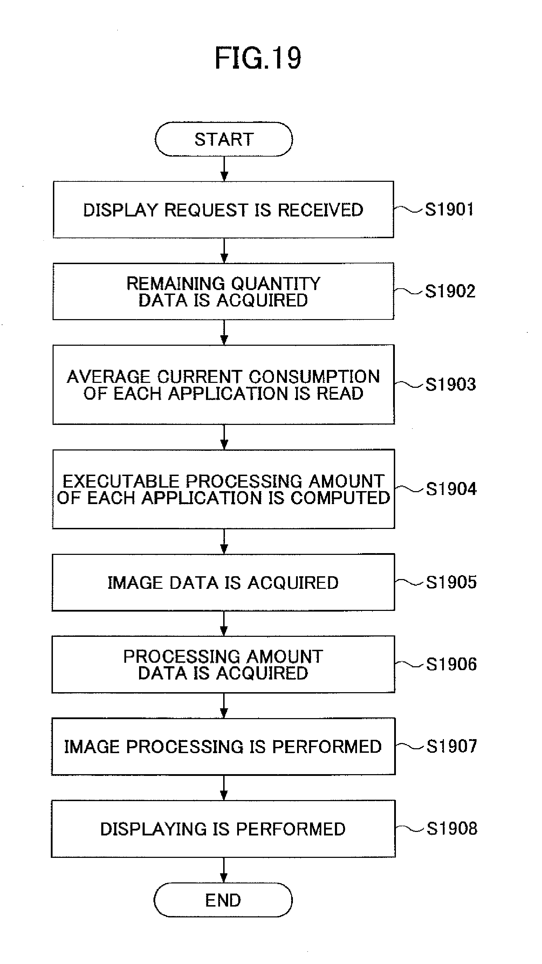

Next, with reference to FIG. 19, the computing of the executable processing amount of each application by the processing amount computing unit 172, and the display control processing by the display control unit 180 will be described. FIG. 19 is a flowchart for explaining processing of the processing amount computing unit and the display control unit of the mobile device of the fourth embodiment.

If a display request of the executable processing amount of each application is input from the operation unit 11 in the mobile device 100C (step S1901), the remaining quantity data acquiring unit 170 acquires the remaining quantity data 421 from the battery pack 200 (step S1902). The acquired remaining quantity data 421 is temporarily stored in the working area 420 by the memory control unit 173.

After the remaining quantity data 421 is stored, the processing amount computing unit 172 reads out the average current consumption data 422 of each application stored in the working area 420 (step 1903).

Subsequently, the processing amount computing unit 172 computes the executable processing amount of each application based on the acquired remaining quantity data 421 and the read average current consumption data 422 of each application. The processing amount computing unit 172 of this embodiment computes the executable processing amount of each of the applications which constitutes the application group 370 (step S1904).

Specifically, when the executable processing amount of the application 371 which performs the talk function is computed, the processing amount computing unit 172 computes the executable processing amount of the application 371 (i.e., the available time the user can talk over the telephone network) based on the remaining quantity data. When the executable processing amount of the application 372 which performs the e-mail transmitting/receiving function is computed, the processing amount computing unit 172 computes the executable processing amount of the application 372 (i.e., the number of times of e-mail transmitting/receiving) based on the remaining quantity data. When the executable processing amount of the application 373 which performs the music reproduction function is computed, the processing amount computing unit 172 computes the executable processing amount of the application 373 (i.e., music reproduction possible time or and the number of musical pieces that can be reproduced) based on the remaining quantity data. Similarly, the processing amount computing unit 172 computes the executable processing amount of each of other applications of the application group 370.

Thus, the processing amount computing unit 172 of this embodiment computes the executable processing amount of each application which is suitable for the kind of the application. The computed executable processing amount of each application is stored as the processing amount data 423 in the working area 420 by the memory control unit 173.

After the executable processing amount of each application is computed, the display control unit 180 performs the process of displaying the executable processing amount of each application.

The display control unit 180 causes the image data acquiring unit 181 to acquire the icon image data associated with the application from the icon image data group 410 stored in the data storage area 400 of the auxiliary memory device 14 (step S1905).

Subsequently, the display control unit 180 acquires the executable processing amount data 423 of each application stored in the working area 420 (step S1906). After the icon image data and the processing amount data 423 are acquired, the display control unit 180 causes the image processing unit 183 to perform image processing to combine the icon image data and the processing amount data (step S1907).

For example, when the image processing of the icon image data associated with the application 371 is performed, the image data acquiring unit 181 acquires the icon image data 411 for displaying the icon image associated with the application 371 from the icon image data group 410. The processing amount data acquiring unit 182 acquires the processing amount data 423a indicating the executable processing amount of the application 371. The image processing unit 183 performs the image processing to combine the icon image data 411 and the processing amount data 423a, and generates the processed image data such that the icon image of the application 371 and the executable processing amount of the application 371 are displayed in a superimposed manner. The image data after the image processing is performed are temporarily stored as the processed image data 424 in the working area 420 by the memory control unit 173. The image processing by the image processing unit 183 is performed for the icon image data associated with all the applications which constitute the application group 370.

After the image processing by the image processing unit 183 is completed, the display control unit 180 causes the displaying unit 184 to read the processed image data 424 from the working area 420 and to display the processed image data 424 on the display device 12 (step S1908), and the processing is terminated.

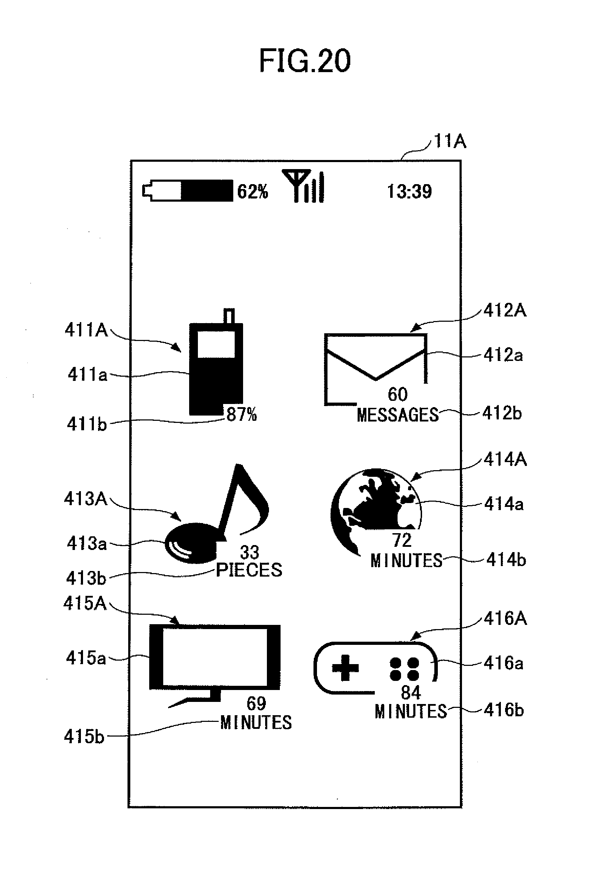

FIG. 20 illustrates an example in which the processed image data of each application is displayed in the fourth embodiment.

The icon image 411A of FIG. 20 is displayed in accordance with the processed image data 424a of the icon image data 411 associated with the application 371. In the icon image 411A of FIG. 20, the image 411a which visually expresses the function of the application 371, and the image 411b which indicates the executable processing amount of the application 371 are partially superimposed. The form of the icon image 411A is not limited to the example of FIG. 20. For example, the image 411a and the image 411b of the icon image 411A may not be superimposed, and the image 411b may be displayed in the vicinity of the image 411a. In this case, it is preferred that the images 411a and 411b are displayed such that the user can easily recognize that the image 411a and the image 411b are associated with each other.

Other icon images of FIG. 20 are the same as the icon image 411A. The icon image 412A is displayed in accordance with the processed image data 424b of the icon image data 412 associated with the application 372. In the icon image 412A, the image 412a which visually expresses the function of the application 372, and the image 412b which indicates the executable processing amount of the application 372 are partially superimposed. The icon image 413A is displayed in accordance with the processed image data 424c of the icon image data 413 associated with the application 373. In the icon image 413A, the image 413a which visually expresses the function of the application 373, and the image 413b which indicates the executable processing amount of the application 373 are partially superimposed. Other icon images 414A to 416A may be displayed in the same way as described above.

As described in the foregoing, in the mobile device 100C of this embodiment, the executable processing amount of each of the applications which perform the various functions of the mobile device 100C is computed, and the computed executable processing amount and the icon image associated with each application can be displayed in the same screen simultaneously. Hence, according to this embodiment, the user can grasp visually the executable processing amount of each application, and the operability at the time of displaying can be improved.

In this embodiment, the example of the image associated with the application has been described as the icon image. However, the present disclosure is not limited to this example. Any image that can specify the application may be used as the image associated with the application.

### Fifth Embodiment

With reference to the accompanying drawings, a fifth embodiment of the present disclosure will be described. In the fifth embodiment of the present disclosure, only the image processing method by the display control unit is different from that of the fourth embodiment. Hence, in the following, only a point of this embodiment differing from the fourth embodiment will be described, the elements in this embodiment which are the same as corresponding elements in the fourth embodiment are designated by the same reference numerals, and a description thereof will be omitted.

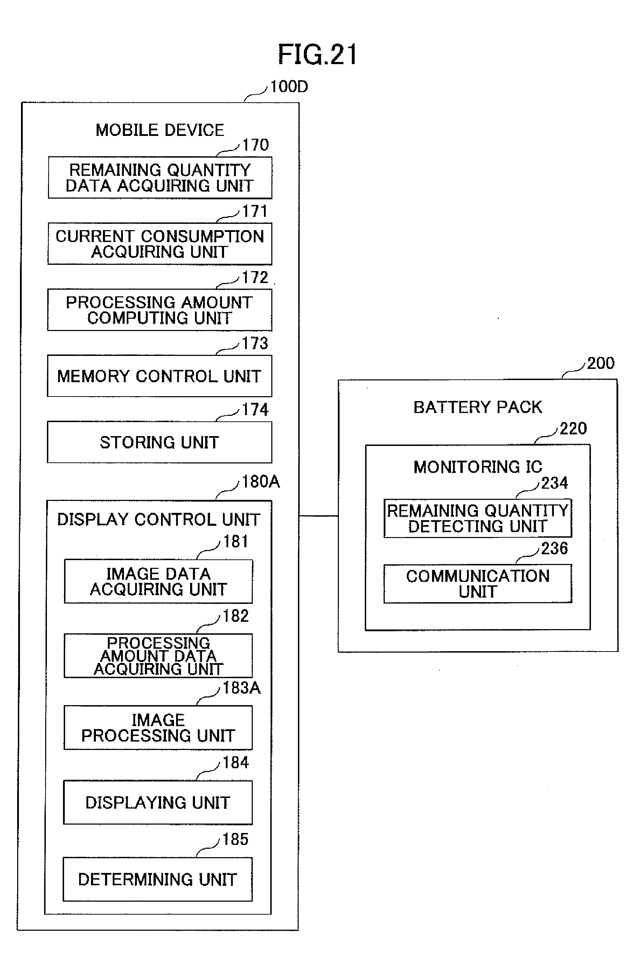

FIG. 21 is a diagram for explaining the functional composition of a mobile device of the fifth embodiment.

The mobile device 100D of this embodiment has a display control unit 180A. The display control unit 180A includes an image data acquiring unit 181, a processing amount data acquiring unit 182, an image processing unit 183A, a displaying unit 184, and a determining unit 185.

In the display control unit 180A of this embodiment, a threshold table 430 which will be described later is accessed, and when the value indicating the executable processing amount is smaller than the threshold stored beforehand in the threshold table 430, the image processing is performed to generate the processed icon image in which the image portion is eliminated.

The image processing unit 183A performs image processing of the icon image data 411 to 416, when it is determined by the determining unit 185 (which will be described later) that the image processing of the icon image data 411 to 416 contained in the icon image data group 410 should be performed. Specifically, the image processing unit 183A performs image processing of the icon image data 411 to 416 so that some image portions displayed by the icon image data 411 to 416 may be eliminated.

The determining unit 185 determines whether the image processing of the icon image data contained in the icon image data group 410 should be performed, by accessing the threshold table 430 stored in the data storage area 400.

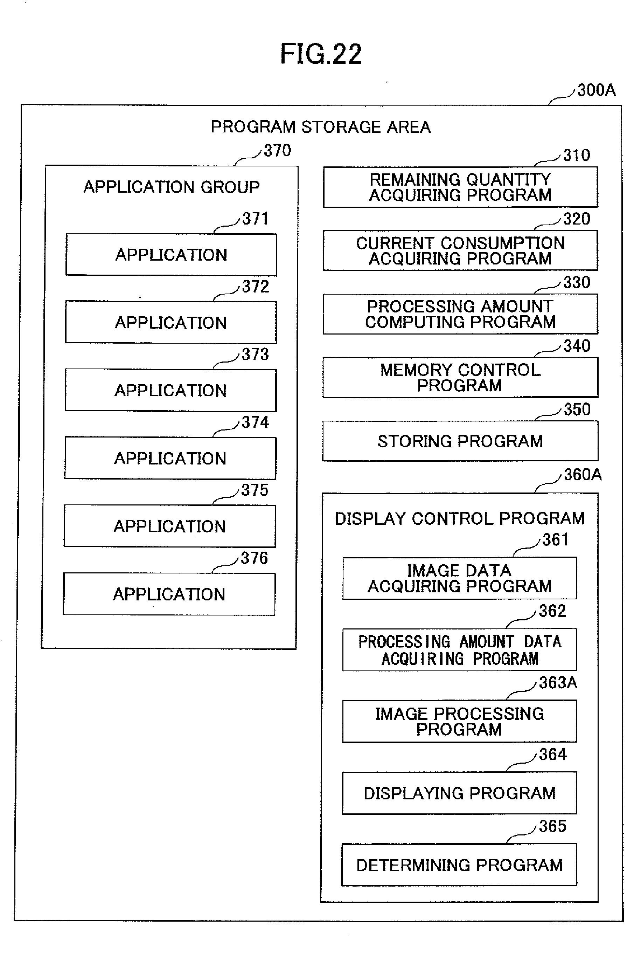

FIG. 22 is a diagram for explaining the program storage area of the fifth embodiment.

In the program storage area 300A of this embodiment, a display control program 360A which functions as the display control unit 180A is stored. In the display control program 360A, an image processing program 363A which functions as the image processing unit 183A and a determining program 365 which functions as the determining unit 185 are included.

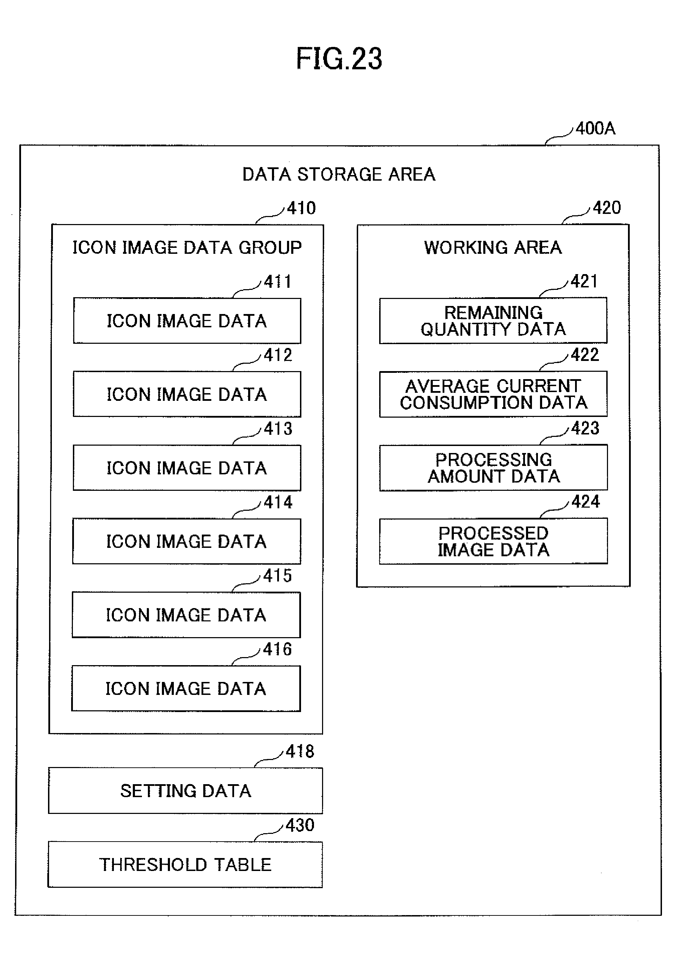

FIG. 23 is a diagram for explaining the data storage area of the fifth embodiment. The threshold table 430 is stored in the data storage area 400A of this embodiment. It is preferred that a threshold table for every unit of the executable processing amount is contained in the threshold table 430 of this embodiment. Specifically, a threshold table in which thresholds on the basis of a unit time are stored, a threshold table in which thresholds on the basis of the number of e-mails are stored, and a threshold table in which thresholds on the basis of the number of musical pieces are stored are contained in the threshold table 430. The threshold table 430 may be formed for each of the applications which constitute the application group 370.

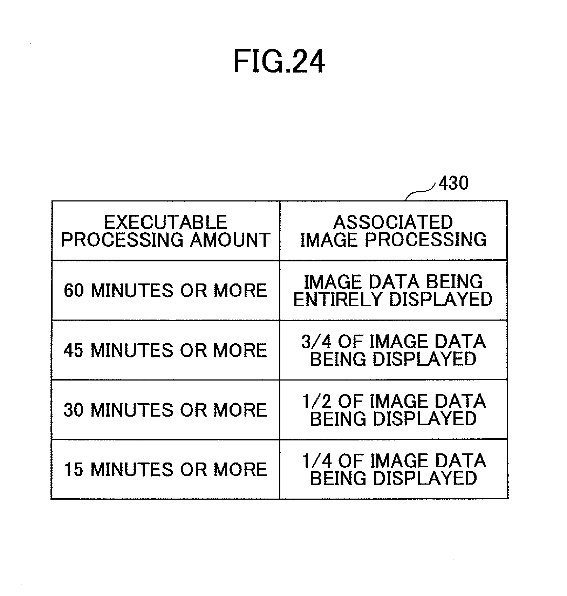

FIG. 24 is a diagram illustrating an example of the threshold table of the fifth embodiment. In FIG. 24, the threshold table in which thresholds are stored on the basis of the unit time is illustrated. The threshold table in which thresholds are stored on the basis of the unit time may be applied to the threshold table in which the executable processing amounts of the application expressed on the basis of the unit time are associated with corresponding image processing of the icon image data.

The threshold table 430 of FIG. 24 is provided for the application 371 which performs a talk function. In the threshold table 430, the time indicating the executable processing amount of the application, and the image processing by the image processing unit 183A are associated and stored.

In the example of FIG. 24, when the executable processing amount of the application 371 is 60 minutes or more, the image processing unit 183A performs the associated image processing so that the whole icon image is displayed by using the icon image data 411 associated with the application 371.

When the executable processing amount of the application 371 is 45 minutes or more, the image processing unit 183A performs the associated image processing which converts the icon image data 411 into the icon image data by which 3/4 of the icon image are displayed.

When the executable processing amount of the application 371 is 30 minutes or more, the image processing unit 183A performs the associated image processing which converts the icon image data 411 into the icon image data by which 1/2 of the icon image is displayed.

When the executable processing amount of the application 371 is 30 minutes or more, the image processing unit 183A performs the associated image processing which converts the icon image data 411 into the icon image data by which 1/2 of the icon image is displayed.

When the executable processing amount of the application 371 is 15 minutes or more, the image processing unit 183A performs the associated image processing which converts the icon image data 411 into the icon image data by which 1/4 of the icon image is displayed.

The value of the executable processing amount used as the threshold in the threshold table 430 of this embodiment may be changed to an arbitrary threshold value by the storing unit 174.

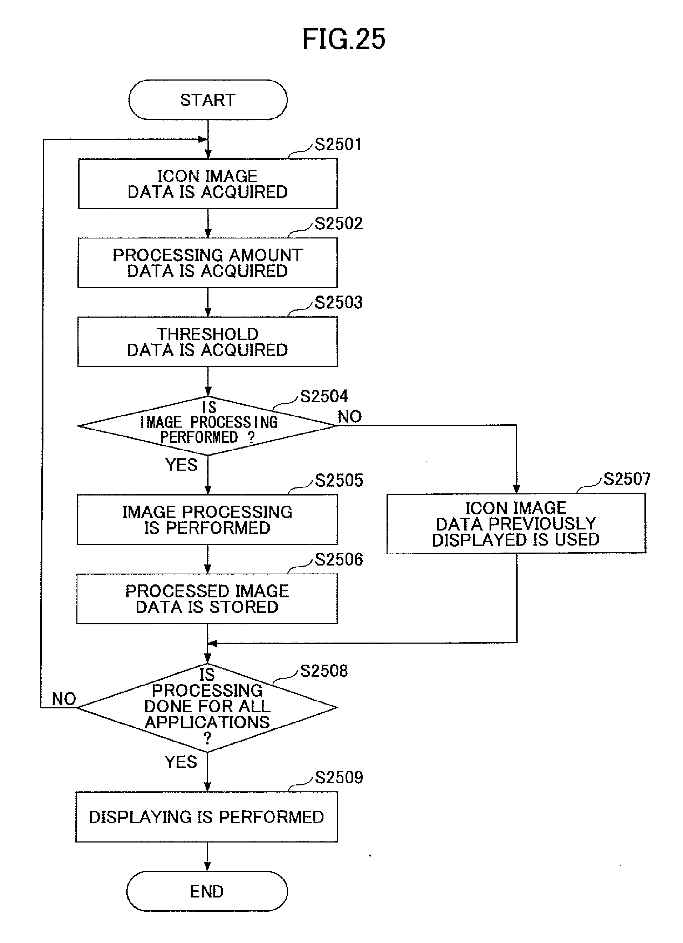

Next, with reference to FIG. 25, processing of the display control unit 180A of this embodiment will be described. FIG. 25 is a flowchart for explaining processing of the display control unit of the fifth embodiment.

In the flowchart of FIG. 25, an example in which image processing of the icon image data 411 associated with the application 371 which performs the talk function is performed will be described.

When a display request of the executable processing amount is received, the display control unit 180A causes the image data acquiring unit 181 to acquire the icon image data 411 associated with the application 371 from the icon image data group 410 of the auxiliary memory device 14 (step 52501).

After the icon image data 411 is acquired, the display control unit 180A causes the processing amount data acquiring unit 182 to read and acquire the processing amount data 423, indicating the executable processing amount of the application 371, from the working area 420 (step S2502).

Subsequently, the display control unit 180A causes the determining unit 185 to access the threshold table 430 (step 52503). The determining unit 185 determines whether the image processing of the icon image data 411 should be performed, based on the value of the processing amount data 423 acquired in the step S2502 and the contents of the threshold table 430 (step S2504).

For example, when the value of the processing amount data 423 is 70 minutes, the threshold table 430 defines the setting of the whole icon image data 411 being displayed for this case, and the determining unit 185 determines that the image processing of the icon image data 411 should not be performed by the image processing unit 183A. On the other hand, when the value of the processing amount data 423 is 25 minutes, the threshold table 430 defines the setting of one half of the icon image data 411 being displayed for this case, and the determining unit 185 determines that the image processing of the icon image data 411 should be performed by the image processing unit 183A.

When the determining unit 185 determines in the step S2504 that the image processing should be performed, the image processing unit 183A performs the image processing, described in the threshold table 430, to the icon image data 411 (step S2505). For example, when the image processing by which one half of the icon image data 411 is displayed is described in the threshold table 430, the image processing unit 183A performs the image processing to the icon image data 411 such that the color of the icon image data 411 is the same as the color of the background image when one half of the icon image data 411 is displayed on the display device 12. Furthermore, at this time, the image processing unit 183A performs the image processing so that the processing amount data 423 is displayed with the icon image data.

After the image processing by the image processing unit 183A is completed, the display control unit 180A stores in the working area 420 the icon image data 411 after the image processing is performed as the processed image data 424 (step S2506).

When the determining unit 185 determines in the step S2504 that the image processing should not be performed, the display control unit 180A uses the icon image data which was displayed when the display request was previously received (step S2507). It is preferred that the icon image data which was displayed previously is stored in the working area 420.

The case where the determining unit 185 determines that the image processing should not be performed is, for example, a case where the value of the processing amount data is not smaller than the threshold set in the threshold table 430. For example, when the processing amount data 423 is 70 minutes, the processing amount data 423 is larger than the first threshold value set in the threshold table 430, and the determining unit 185 determines that the image processing should not be performed.

For example, when the processing amount data 243 acquired previously is 40 minutes and the processing amount data 423 acquired in the step S2502 is 35 minutes, the processing amount data 423 is 30 minutes or more which is the third threshold value in the threshold table 430, and the determining unit 185 determines that the image processing should not be performed.

Subsequently, the display control unit 180A determines whether the processing from the step S2501 to the step S2507 is performed for all the applications contained in the application group 370 (step S2508).

When it is determined in the step S2508 that the processing is not performed for all the applications, the processing from the step S2501 to the step S2507 is repeated.

When it is determined in the step S2508 that the processing is performed for all the applications, the display control unit 180A reads the processed image data 424 of each application stored in the working area 420, and causes the displaying unit 184 to display the processed image data 424 on the display device 12 (step S2509), and the processing is terminated.

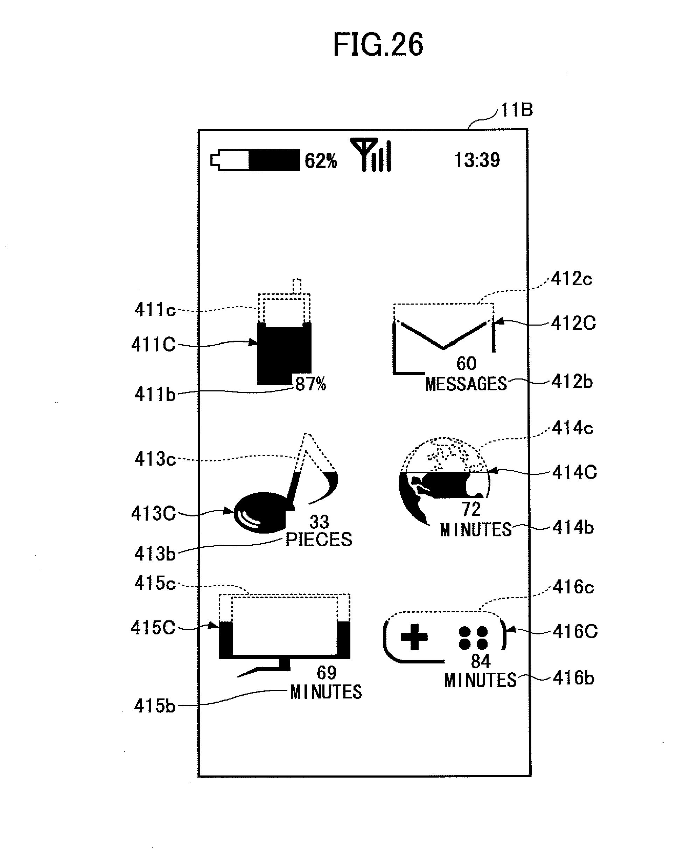

FIG. 26 is a diagram illustrating an example in which processed image data of respective applications are displayed in the fifth embodiment.

In the example of the screen 11B of FIG. 26, the icon image data and the processing amount data of the respective applications are displayed on the display device 12.

In the example of FIG. 26, the processed image in which the image portion 411c is eliminated from the icon image 411C associated with the application 371, and the image 411b indicating the executable processing amount of the application 371 are displayed in a superimposed manner. In the example of FIG. 26, the processed image in which the image portion 412c is eliminated from the icon image 412C associated with the application 372, and the image 412b indicating the executable processing amount of the application 372 are displayed in a superimposed manner. Other icon images associated with other applications are the same as described above.

In the example of FIG. 26, the image portion 411c being eliminated is an image of the upper portion of the icon image 411C. However, the present disclosure is not limited to this example. For example, an image of the lower portion of the icon image 411C may be eliminated from the icon image 411C.

### Modifications

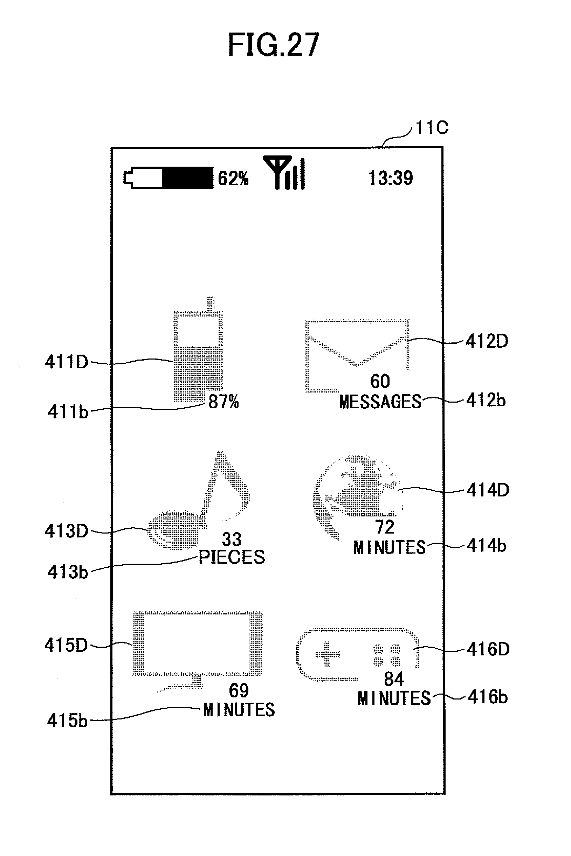

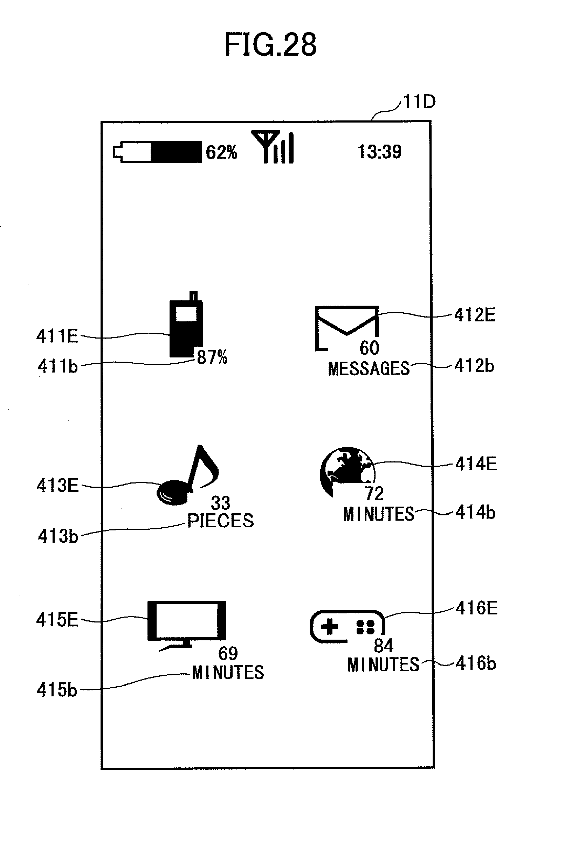

Next, some modifications of this embodiment will be described with reference to FIG. 27 and FIG. 28.

In the foregoing embodiment, for example, the image processing unit 183A processes the icon image data 411, and the processed icon image 411C in which the image portion 411c is eliminated is displayed. In a modification of this embodiment illustrated in FIG. 27, the optical intensity of the icon image being displayed is gradually decreased (or becoming transparent) according to the executable processing amount associated with the application.

FIG. 27 is a diagram for explaining an example of this modification of the fifth embodiment. Illustrated FIG. 27 is an example of a screen 11C in which the icon image and the processing amount data of each application are displayed on the display device 12.

For example, the image processing unit 183A of this modification processes the icon image data 411 so that the optical intensity of the icon image 411D associated with the application 371 is gradually decreased (becoming transparent) according to the executable processing amount of the application 371. Specifically, the image processing unit 183A is arranged to change the value which indicates the optical intensity of the icon image data 411 based on the processing amount data 423, and make the transparency of the icon image 411D being displayed on the display device 12 become gradually high.

It is preferred in this modification that a threshold table in which the optical intensity of the icon image data 411 and the executable processing amount are associated with each other is provided. Alternatively, the image processing unit 183A may be arranged to perform processing in which the threshold table is accessed, and when the executable processing amount is equal or below a predetermined threshold, the optical intensity of the icon image data 411 is changed.

In the example of FIG. 27, the icon image data 411D, the optical intensity of which is changed according to the executable processing amount of the application 371, is displayed together with the image 411b indicating the executable processing amount of the application 371. Other icon image data associated with other applications are also the same as the icon image data 411D.

Next, another modification of the fifth embodiment will be described with reference to FIG. 28.

In the modification of FIG. 28, the icon image being displayed is expanded and reduced in size according to the executable processing amount associated with the application.

FIG. 28 is a diagram for explaining another modification of the fifth embodiment.

Illustrated in FIG. 28 is an example of a screen 11D in which the icon image and the executable processing amount data of each application are displayed on the display device 12.

For example, the image processing unit 183A of this modification processes the icon image data 411 so that the icon image 411E associated with the application 371 is expanded or reduced in size according to the executable processing amount of the application 371. Specifically, the image processing unit 183A generates a predetermined reference point of the icon image data 411 and performs reduction (scaling) of the icon image data 411 centered on the reference point in accordance with the processing amount data 423.

It is preferred in the modification of FIG. 28 that a threshold table, in which the executable processing amount of the application 371 and the reduction rate of the icon image data 411 are associated with each other, is provided.

For example, when the executable processing amount of the application 371 is below 45 minutes, the reduction rate of the icon image data 411 is set to 75%, and when the executable processing amount of the application 371 is below 30 minutes, the reduction rate of the icon image data 411 is set to 50%.

It is preferred in the modification of FIG. 28 that a threshold table is provided for each of the applications which constitute the application group 370.

In the screen 11D of FIG. 28, the icon image data 411E which is reduced in size according to the executable processing amount of the application 371 is displayed with the image 411b indicating the executable processing amount of the application 371. Other icon image data associated with other applications are the same as the icon image data 411E.

As described in the foregoing, in this embodiment, the executable processing amount of each of the applications to perform the functions of the mobile device 100D is computed, and the icon image associated with each application and the executable processing amount of each application can be simultaneously displayed in the same screen. Hence, according to this embodiment, the user can grasp the executable processing amount of each application visually, and the operability at the time of the displaying can be improved.

### Sixth Embodiment

With reference to the accompanying drawings, a sixth embodiment of the present disclosure will be described. In the sixth embodiment of the present disclosure, the display control unit performs the replacement of icon image data instead of performing the image processing of the icon image data, and the sixth embodiment differs from the fifth embodiment only at this point. Hence, in the following, only the point of this embodiment differing from the fifth embodiment will be described, the elements in this embodiment which are the same corresponding elements in the fifth embodiment are designated by the same reference numerals, and a description thereof will be omitted.

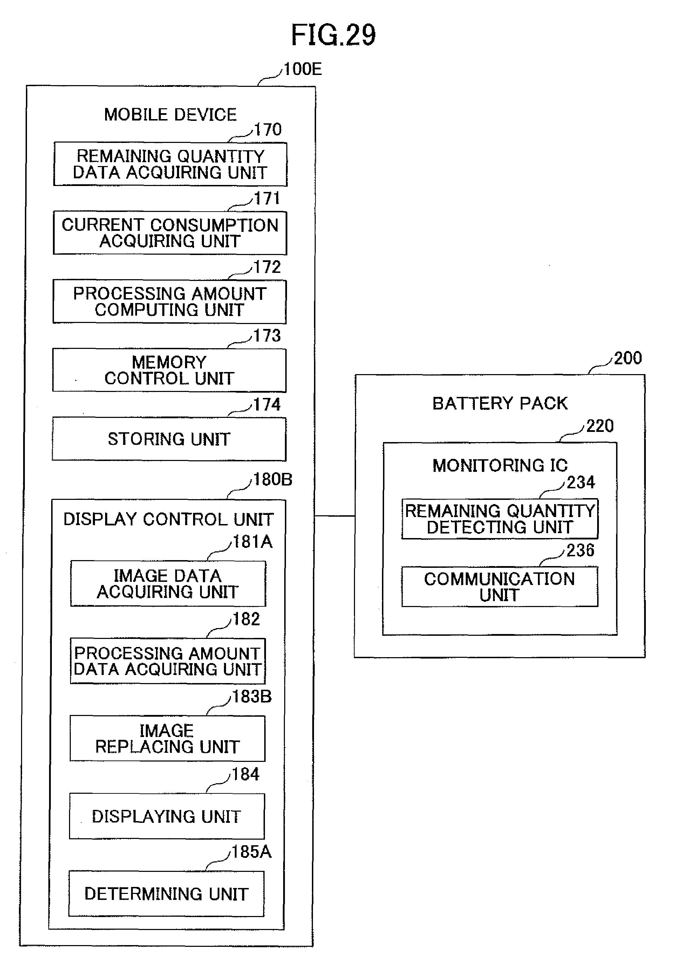

FIG. 29 is a diagram illustrating the functional composition of a mobile device of the sixth embodiment.

The mobile device 100E of this embodiment has a display control unit 180B. The display control unit 180B includes an image data acquiring unit 181A, a processing amount data acquiring unit 182, an image replacing unit 183B, a displaying unit 184, and a determining unit 185A.

The image data acquiring unit 181A of this embodiment acquires the icon image data contained in the icon image data group 410, and the partial icon image data 425 stored in the threshold table 430A which will be described later.

The image replacing unit 183B replaces the icon image data with the partial icon image data 425 stored in the threshold table 430A, based on the result of the determination by the determining unit 185A. The image replacing device 183B performs processing to generate post-replacement image data 426 by combining the processing amount data 423 with the partial icon image data 425.

The determining unit 185A determines whether the replacement of the icon image data of each application should be performed, based on the value of the executable processing amount of each application.

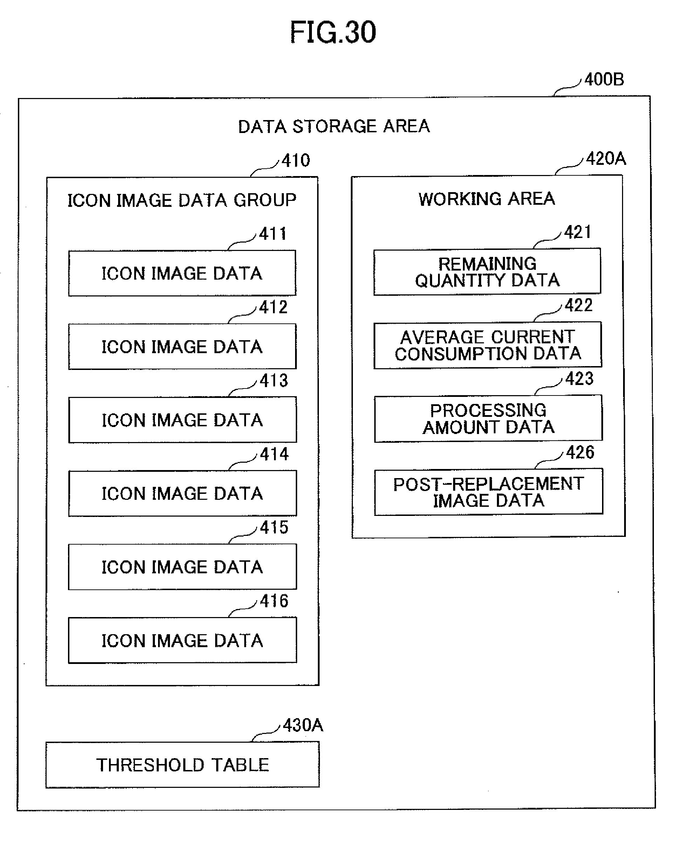

FIG. 30 is a diagram for explaining the data storage area of the sixth embodiment.

A threshold table 430A is stored in the data storage area 400B of this embodiment. In the working area 420A of this embodiment, the remaining quantity data 421, the average current consumption data 422, the processing amount data 423, and the post-replacement image data 426 are stored.

It is preferred that the post-replacement image data 426 is stored for each of all the applications contained in the application group 370. The image data indicating the value of the processing amount data 423 is contained in the post-replacement image data 426 stored in the working area 420A.

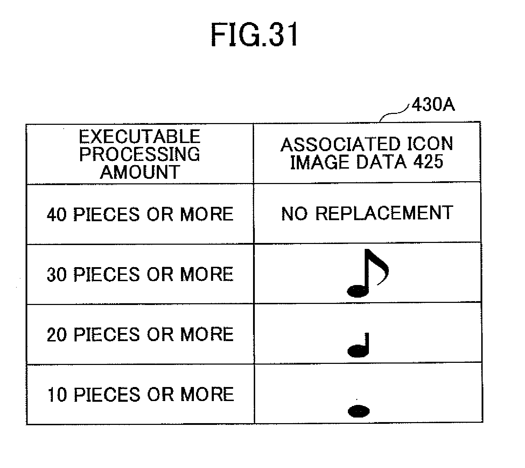

FIG. 31 is a diagram for explaining the threshold table in the sixth embodiment.

The threshold table 430A illustrated in FIG. 31 is a threshold table associated with the application 373 which performs a music reproduction function. In the threshold table 430A of this embodiment, the executable processing amounts of the application 373 and a partial icon image data 425 associated with each of the executable processing amounts are stored. In the example of FIG. 31, the number of reproducible musical pieces which is the executable processing amount of the application 373, and the partial icon image data 425 of the icon image data 413 associated with the application 373 are associated and stored.

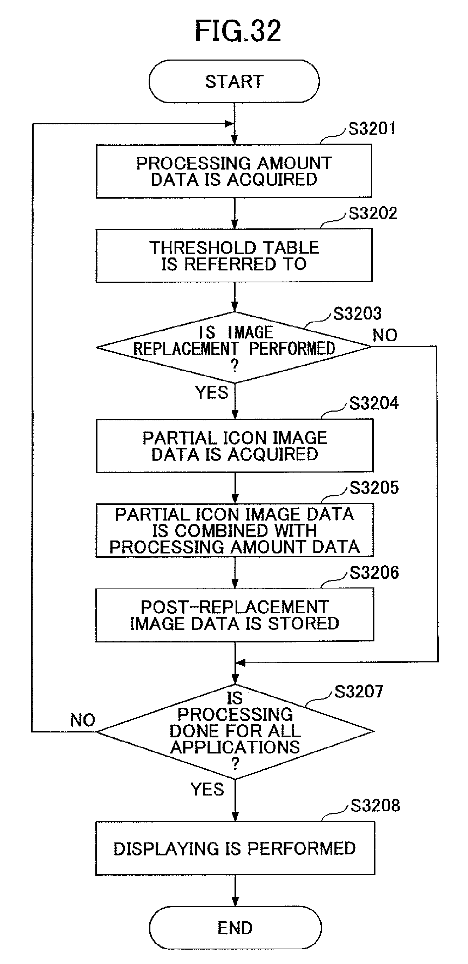

Next, with reference to FIG. 32, processing of the display control device 163B of this embodiment will be described. FIG. 32 is a flowchart for explaining the processing of the display control unit of the sixth embodiment.

In the flowchart of FIG. 32, an example of the image replacement process will be described, and this image replacement process is performed with respect to the icon image data 413 associated with the application 373 which performs a music reproduction function.

When a display request of the executable processing amount is received, the display control unit 180B causes the processing amount data acquiring unit 182 to read from the working area 420A and acquire the processing amount data 423 indicating the executable processing amount of the application 373 (step S3201).

Subsequently, the display control unit 180B causes the determining unit 185A to access the threshold table 430A (step S3202). The determining unit 185A determines whether image replacement of the icon image data 413 is to be performed, based on the threshold table 430A and the value of the processing amount data 423 acquired in the step S3201 (step S3203).

For example, when the value of the processing amount data 423 is 40 or more music pieces, no image data for replacement of the icon image data 413 is stored in the threshold table 430A, and the determining unit 185A determines that image replacement of the icon image data 413 is not to be performed.

For example, when the value of the processing amount data 423 is 15 music pieces, the corresponding partial icon image data is stored in the threshold table 430A, and the determining unit 185A determines that the image replacement of the icon image data 413 is to be performed by the image processing unit 183A.

When it is determined in step S3203 that the image replacement is not to be performed, the control is transferred to step S3207 which will be described later. When it is determined in step S3203 that the image replacement is to be performed, the image data acquiring unit 181A acquires the partial icon image data 425 associated with the processing amount data 423 acquired in the step S3201, from the threshold table 430A (step S3204).

Subsequently, the image replacing unit 183A combines the acquired partial icon image data 425 and the processing amount data 423 (association) and generates the post-replacement image data 426 which are the partial icon image data for displaying (step S3205). The post-replacement image data 426 are stored in the working area 420A (step S3206).

After the image replacement is performed, the display control unit 180B determines whether the processing from step S3201 to step S3206 is performed for all the applications contained in the application group 370 (step S3207).

When the processing is not performed for all the applications, the processing from step S3201 to step S3206 is repeated for the next application.

When the processing is performed for all the applications, the display control unit 180B causes the displaying unit 184 to display on the display device 12 the post-replacement image data 426 stored in the working area 420A (step S3208), and the processing is terminated. The screen displayed according to this embodiment is the same as the screen 11B illustrated in FIG. 26.

As described in the foregoing, in this embodiment, the executable processing amount of each of the applications which perform the various functions of the mobile device 100E is computed, and the icon image associated with each application and the executable processing amount of that application can be displayed in the same screen simultaneously. Therefore, according to this embodiment, the executable processing amount of each application can be grasped visually, and the operability at the time of displaying can be improved.

In this embodiment, the image data for replacement of the icon image data 411 to 416 which constitute the icon image data 410 are the partial icon image data 425 in which the image portion is eliminated, but the present disclosure is not limited to this. For example, the icon image data 411 to 416 may be replaced with the image data in which the optical intensity of the icon image data 411 to 416 is changed. Alternatively, the icon image data 411 to 416 may be replaced with the image data in which the icon image data 411 to 416 are expanded or reduced in size.

### Seventh Embodiment

With reference to the accompanying drawings, a seventh embodiment of the present disclosure will be described.

The seventh embodiment of the present disclosure differs from the foregoing embodiments only at the point that the algorithm for displaying the applications and the associated images thereof is stored. Hence, in the following, only the point of this embodiment differing from the fourth embodiment will be described, the elements in this embodiment which are the same as corresponding elements in the fourth embodiment are designated by the same reference numerals, and a description thereof will be omitted.

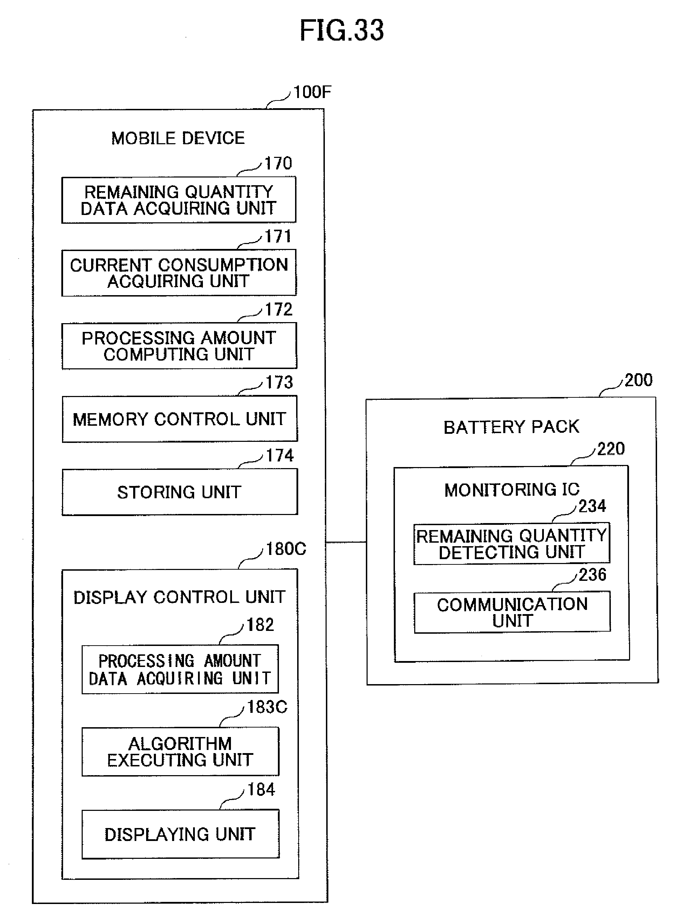

FIG. 33 is a diagram illustrating the functional composition of the mobile device of the seventh embodiment. The mobile device 100F of this embodiment has a display control unit 180C. The display control unit 180C of this embodiment includes a processing amount data acquiring unit 182, an algorithm executing unit 183C, and a displaying unit 184. The display control unit 180C causes the processing amount data acquiring unit 182 to acquire the executable processing amount of the application (the processing amount data 423), causes the algorithm executing unit 183C to execute the algorithm associated with the processing amount data 423, and causes the displaying unit 184 to display the result of the algorithm executed.

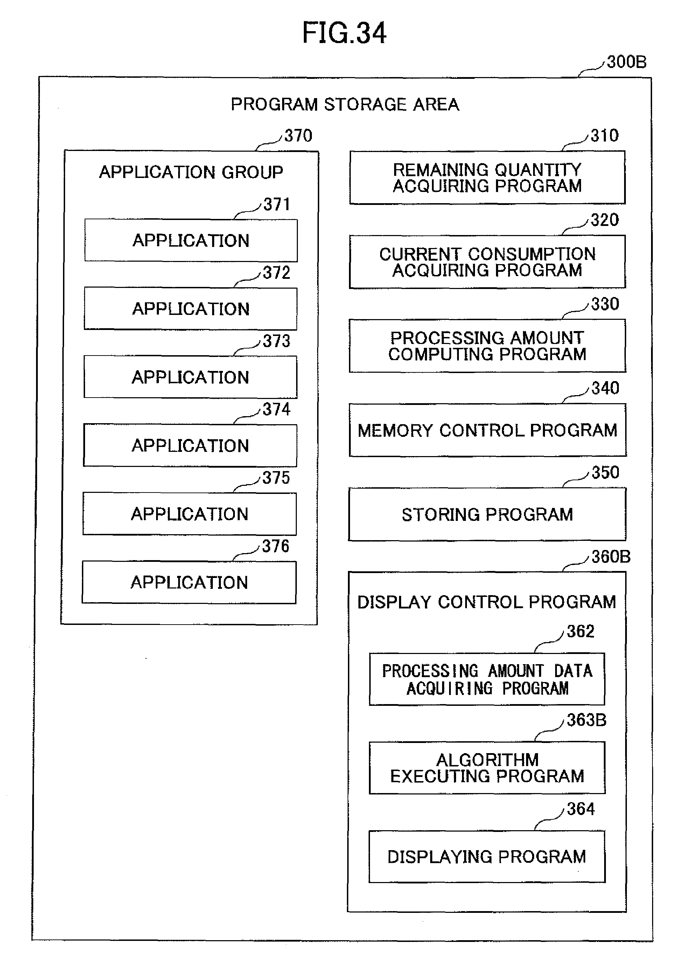

FIG. 34 is a diagram for explaining the program storage area of the seventh embodiment. A display control program 360B is stored in the program storage area 300B of this embodiment.

The processing amount data acquiring program 362 which functions as the processing amount data acquiring unit 182, the algorithm executing program 363B which functions as the algorithm executing unit 183C, and the display program 364 which functions as the displaying unit 184 are included in the display control program 360B.

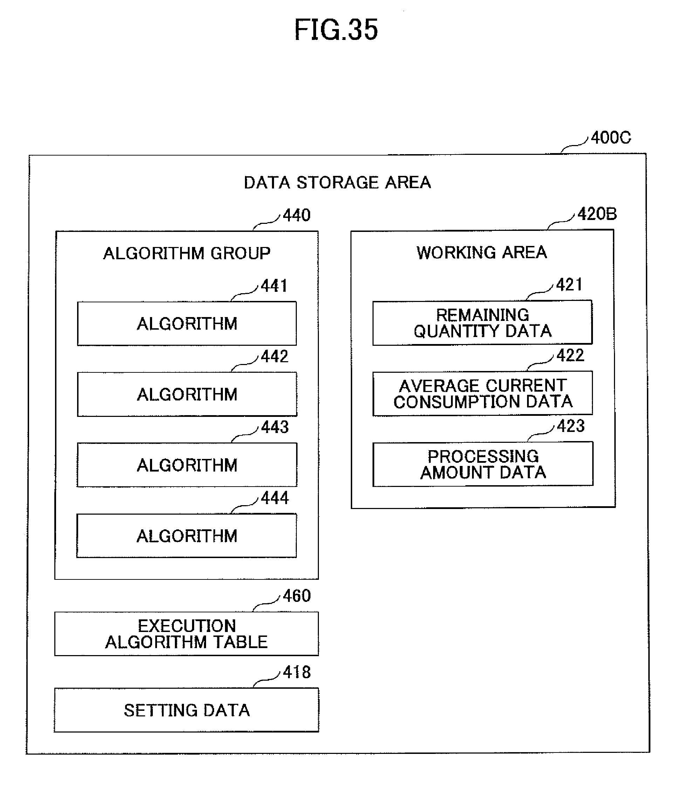

FIG. 35 is a diagram for explaining the data storage area of the seventh embodiment. An algorithm group 440 is stored in the data storage area 400C of this embodiment. A plurality of algorithms 441-444 for displaying the image associated with each application contained in the application group 370 are contained in the algorithm group 440. The algorithms contained in the algorithm group 440 are not limited to the algorithms 441-444. For example, ten algorithms may be contained in the algorithm group 440, and three algorithms may be contained in the algorithm group 440.

The algorithm 441 contained in the algorithm group 440 of this embodiment is, for example, an algorithm for displaying the whole icon image 411A associated with the application 371 are displayed.

The algorithm 442 is an algorithm for displaying a partial icon image in which one fourth of the icon image 411A associated with the application 371 is eliminated. The algorithm 443 is an algorithm for displaying a partial icon image in which one half of the icon image 411A associated with the application 371 is eliminated. The algorithm 444 is an algorithm for displaying a partial icon image in which three fourths of the icon image 411A associated with the application 371 are eliminated.

The execution algorithm table 460 is stored in the data storage area 400C of this embodiment. The execution algorithm table 460 is a table in which the algorithm being performed to the processing amount data 423 is defined. By accessing the execution algorithm table 460, the algorithm executing unit 183C of this embodiment selects from the algorithm group 440 the corresponding algorithm based on the processing amount data 423, and performs the selected algorithm. In this embodiment, the image associated with the application is displayed in order to indicate that the algorithm has been performed.

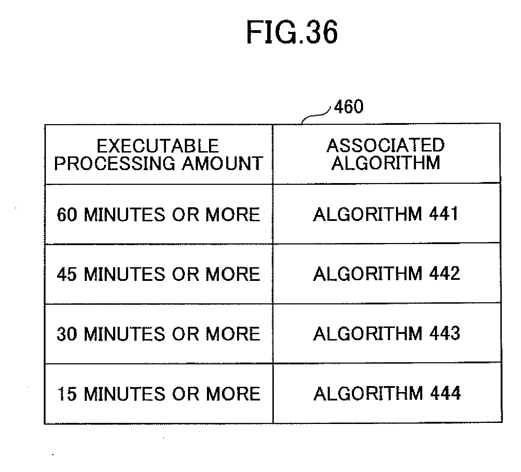

FIG. 36 is a diagram illustrating an example of the execution algorithm table. In the example of FIG. 36, the threshold for the executable processing amount is stored by the unit time, and the algorithm performed for every threshold is decided. Execution algorithm table 460 illustrated in FIG. 36 is applied to the application with which the executable processing amount is converted by a unit time.

In the execution algorithm table 460 of FIG. 36, when the executable processing amount is 60 minutes or more, the algorithm 441 is performed. Therefore, when the execution algorithm table 460 is applied to the application 371, 100% of the icon image 411A of the application 371 is displayed. The algorithm 442 is performed when the executable processing amount is 45 minutes or more. In this case, the image with which one fourth of icon images 411A of application 371 is eliminated is displayed. It is the same as that of the following.

It is preferred that the algorithms associated with all the applications which constitute application group 370 are contained in the algorithm group 440 in this embodiment. It is preferred that the execution algorithm table 460 which is associated with all the applications contained in the application group 370 is provided.

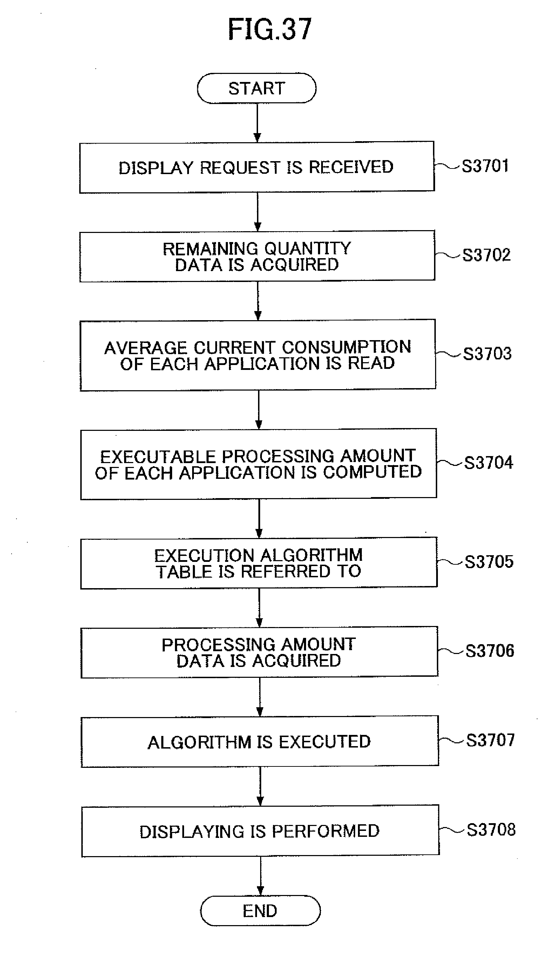

Next, with reference to FIG. 37, processing of the display control unit 180C of this embodiment will be described. FIG. 37 is a flowchart for explaining processing of the display control unit of the seventh embodiment.

The processing from step S3701 to step S3704 in the flowchart of FIG. 37 is the same as the processing from step S1901 to step S1904 in the flowchart of FIG. 19 and a description thereof will be omitted.

After the executable processing amount is computed in step S3704, the algorithm executing unit 183C refers to the execution algorithm table 460 (step 53705).

Subsequently, the processing amount data acquiring unit 182 acquires the processing amount data 423 (step 53706) .

Next, the algorithm executing unit 183C selects and performs the processing amount data 423 acquired at step S2706, and a corresponding algorithm in the execution algorithm table 460 (step S3707).

After the algorithm is performed, the displaying unit 184 will be displayed combining the image and the processing amount data 423 of the executed result (step S3707).

Specifically, when the processing amount data 423 of the application 371 computed in the step S3704 is 40 minutes, the algorithm executing unit 183C selects the algorithm 443 by accessing the execution algorithm table 460 as the algorithm to be performed. After the algorithm 443 is performed by the algorithm executing unit 183C, the processed image in which one half of the icon image 411A of the application 371 is eliminated is displayed together with the processing amount data 423.

Therefore, in this embodiment, even if the image data for displaying the icon image of each application is not stored beforehand, the image according to the executable processing amount of the application can be displayed. Although the algorithm contained in the algorithm group 440 of this embodiment is made into the algorithm for displaying the image in which the image portion is eliminated, the present disclosure is not limited to this embodiment. Another algorithm for displaying the processed icon image of each application may be contained in the algorithm group 440.

As described in the foregoing, in this embodiment, the executable processing amount of each application which performs the various functions of the mobile device 100F can be computed, and the executable processing amount can be simultaneously displayed on one screen with each application and the corresponding icon image. Therefore, according to this embodiment, the executable processing amount of each application can be made for the user to be able to grasp visually, and the operability in the case of a display can be improved.

Each of the foregoing embodiments is applicable to, for example, the equipment which is driven by electric power supplied from a secondary battery, such as a mobile phone, a digital camera, a notebook-type personal computer, a portable music player, a portable game device, and a portable television device. In each of the foregoing embodiments, the functions of the remaining quantity data acquiring unit 170, the current consumption acquiring unit 171, and the processing amount computing unit 172 are provided on the side of the mobile device. Alternatively, these functions may be provided on the side of the battery pack 200.

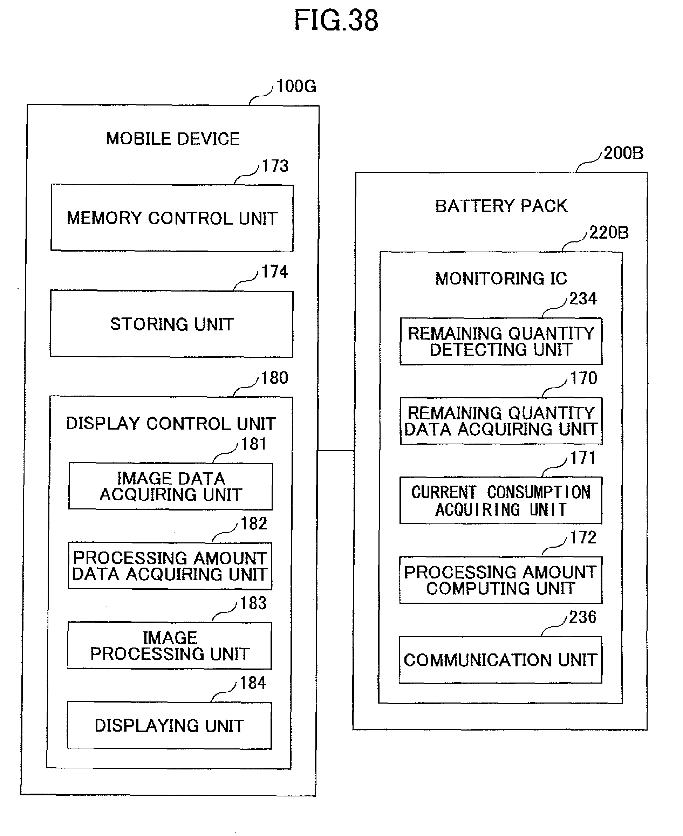

FIG. 38 is a diagram for explaining an example in which the remaining quantity data acquiring unit, the current consumption acquiring unit, and the processing amount computing unit are provided in the battery pack.

In the battery pack 200B illustrated in FIG. 38, the monitoring IC 220B includes a remaining quantity data acquiring unit 170, a current consumption acquiring unit 171, and a processing amount computing unit 172. By using the communication unit 236, the monitoring IC 220B transmits the processing amount data indicating an executable processing amount of each application to the mobile device 100G.

In the example of FIG. 38, the battery pack has the above-described composition and it is possible to obtain the same effect as the fourth to seventh embodiments.

### Eighth Embodiment

With reference to the accompanying drawings, the eighth embodiment of the present disclosure will be described. In the eighth embodiment of the present disclosure, the icon image according to the remaining quantity of the secondary battery 211 which constitutes the battery unit 210 is displayed. In the following, only a point of this embodiment differing from the first embodiment will be described, the elements in this embodiment which are the same as corresponding elements in the first embodiment are designated by the same reference numerals, and a description thereof will be omitted.

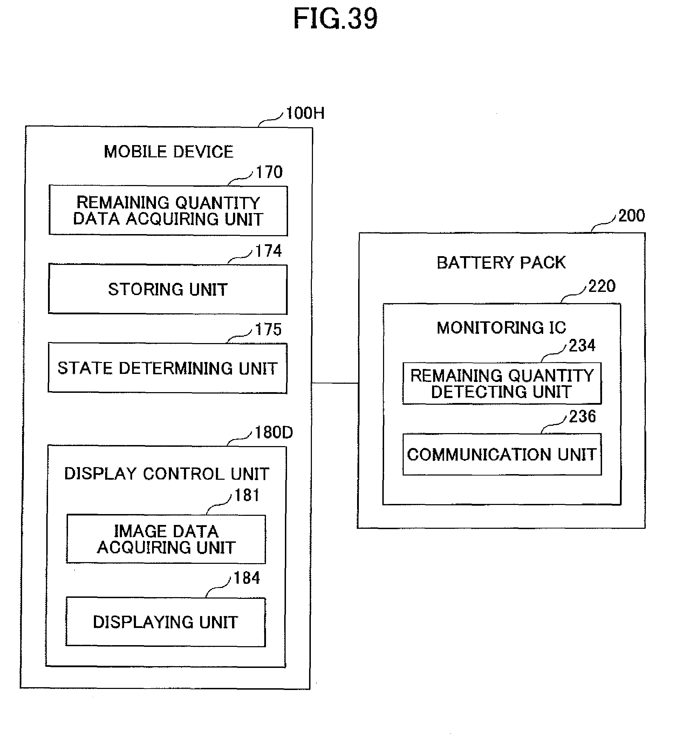

FIG. 39 is a diagram for explaining the functional composition of a mobile device of the eighth embodiment. The mobile device 100H of this embodiment includes a remaining quantity data acquiring unit 170, a storing unit 174, and a state determining unit 175. The display control unit 180D of this embodiment includes an image data acquiring unit 181 and a displaying unit 184.

The state determining unit 175 of this embodiment determines the state of the secondary battery 211 based on the remaining quantity of the secondary battery 211 acquired by the remaining quantity data acquiring unit 170. For example, there are four states of the secondary battery 211 in this embodiment: a normal state, a remaining quantity shortage state, a charging state, and an overcharge state.

The normal state indicates the state in which the remaining quantity of the secondary battery 211 is sufficient to drive the mobile device 100H. The remaining quantity shortage state indicates the state in which the remaining quantity of the secondary battery 211 is insufficient to drive the mobile device 100H or the state in which the time which can drive the mobile device 100H becomes very short.

The charging state indicates the state in which the charging adapter is connected to the mobile device 100H and the secondary battery 211 is being charged. The overcharge state indicates the state in which the charging adapter is connected to the mobile device and the remaining quantity of the secondary battery 211 reaches 100%.

In this embodiment, a threshold value of the remaining quantity of the secondary battery 211 at which the secondary battery 211 changes from one state to another is stored beforehand by the storing unit 174. For example, a threshold value of the remaining quantity at the time of changing the normal state to the charging state and a threshold value of the remaining quantity at the time of changing from the normal state to the remaining quantity shortage state are stored beforehand.

The state determining unit 175 of this embodiment determines the state of the secondary battery 211 based on the value of the remaining quantity acquired by the remaining quantity data acquiring unit 170 and the threshold values stored by the storing unit 174.

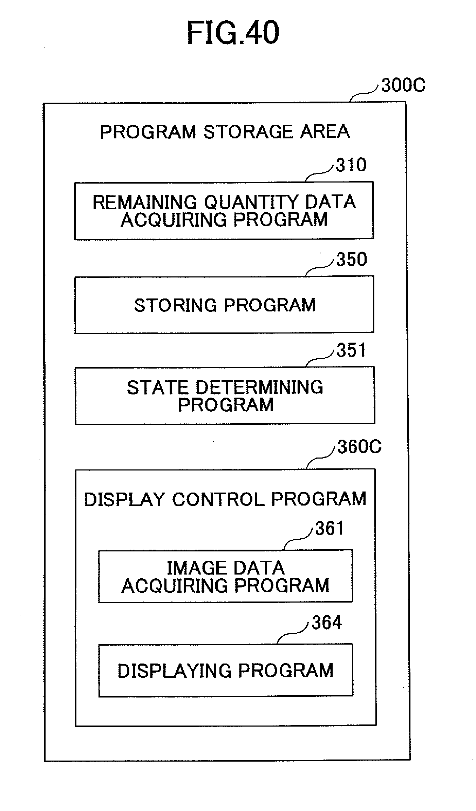

FIG. 40 is a diagram for explaining the program storage area of the eighth embodiment. The program storage area 300C of this embodiment is provided in the auxiliary memory device 14 of the mobile device 100H of this embodiment, and in this program storage area 300C, a remaining quantity data acquiring program 310 which functions as the remaining quantity data acquiring unit 170, a storing program 350 which functions as the storing unit 174, and a state determining program 351 which functions as the state determining unit 175 are stored. A display control program 360C is stored in the program storage area 300C. In the display control program 300C, an image data acquiring program 361 which functions as the image data acquiring unit 181, and a displaying program 364 which functions as the displaying unit 184 are included.

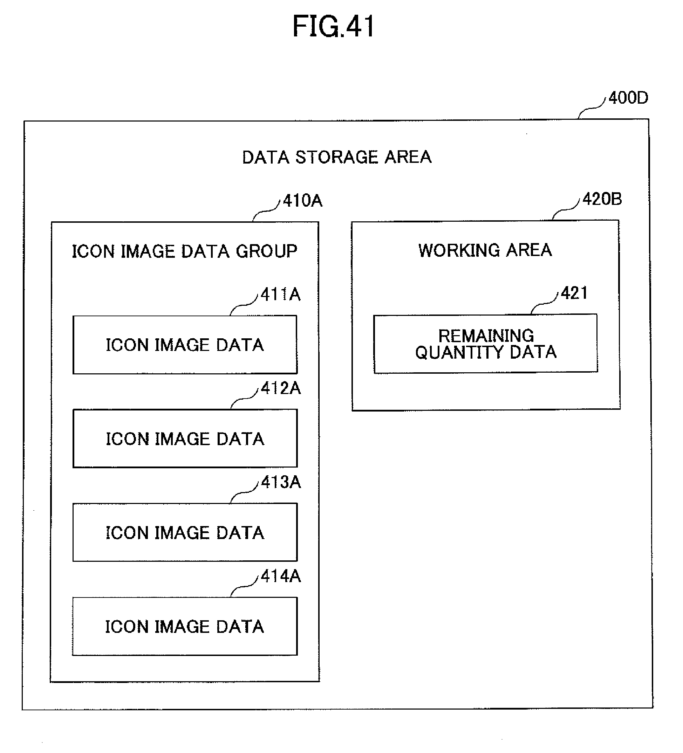

FIG. 41 is a diagram for explaining the data storage area of the eighth embodiment. The data storage area 400D of this embodiment is provided in the auxiliary memory device 14 of the mobile device 100G of this embodiment, and an icon image data group 410A is stored in the data storage area 400D. In the icon image data 410A, icon image data 411A, 412A, 413A, and 414A are contained.

The icon image data 411A is image data which indicate that the secondary battery 211 is in a normal state. The icon image data 412A is image data which indicate that the secondary battery 211 is in the state lacking in the remaining quantity. The icon image data 413A is image data which indicate that the secondary battery 211 is in a charging state. The icon image data 414A is image data which indicate that the secondary battery 211 is in an overcharge state.

In the working area 420B of the data storage area 400D of this embodiment, the remaining quantity data 421 to be acquired by the remaining quantity data acquiring unit 170 are stored.

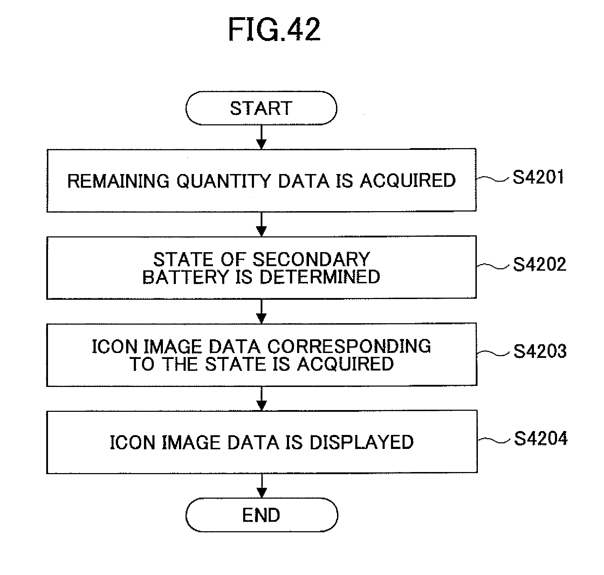

FIG. 42 is a flowchart for explaining operation of the mobile device of the eighth embodiment.

The mobile device 100H of this embodiment acquires the remaining quantity data 421 of secondary battery 211 from monitoring IC 220 of battery pack 200 by the remaining quantity data acquiring unit 170 (step S4201). The acquired remaining quantity data 421 are stored in the working area 420A.

After the remaining quantity data 421 are acquired, the mobile device 100H causes the state determining unit 175 to determine the state of the secondary battery 211 (step S4202). After the state is determined, the display control unit 180D causes the image data acquiring unit 181 to acquire the icon image data associated with the determined state from the icon image data group 410A (step S4203).

For example, when the state of the secondary battery 211 is determined as being a normal state, the image data acquiring unit 181 acquires the icon image data 411A which indicate the normal state, from the icon image data group 410A. When the state of the secondary battery 211 is determined as being an overcharge state, the image data acquiring unit 181 acquires the icon image data 414A which indicate the overcharge state, from the icon image data group 410A.

After the icon image data associated with the determined state is acquired, the display control unit 180D causes the displaying unit 184 to display the icon image data on the display device 12 (step S4205).

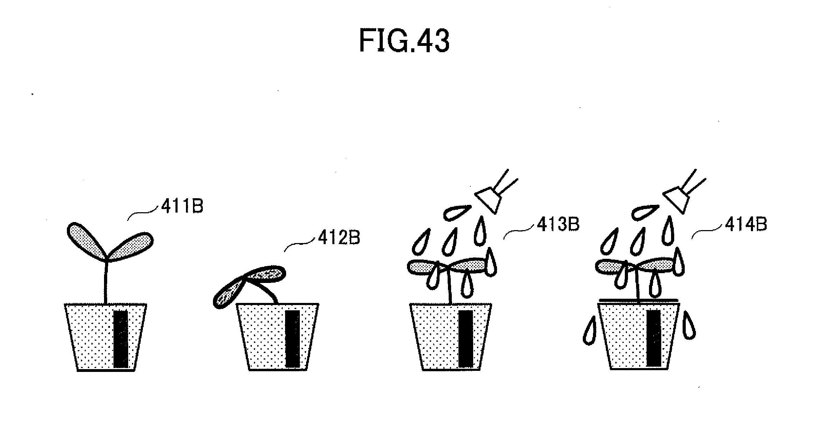

FIG. 43 is a diagram illustrating an example of the icon image corresponding to the determined state. The icon image 411B of FIG. 43 is displayed when the state of the secondary battery 211 is determined as being the normal state. The icon image 412B is displayed when the state of the secondary battery 211 is determined as being the state lacking in the remaining quantity. The icon image 413B is displayed when the state of the secondary battery 211 is determined as being the charging state. The icon image 414B is displayed when the state of the secondary battery 211 is determined as being the overcharge state.

Thus, the icon image which indicates the state of the secondary battery 211 is displayed and the user of the mobile device 100H can grasp the state of the secondary battery 211 visually. Each icon image illustrated in FIG. 43 may be displayed at an appropriate portion of the display device 12 of the mobile device 100H.

In this embodiment, the image of a flowerpot is used as the icon image. However, the present disclosure is not limited to this embodiment. For example, a pictorial character image may be used as the image which indicates the state of the secondary battery 211.

### Ninth Embodiment

With reference to the accompanying drawings, a ninth embodiment of the present disclosure will be described.

In the ninth embodiment of the present disclosure, when the remaining quantity of the secondary battery 211 is below a predetermined quantity, the available time of the mobile device will be displayed. In the following, only a point of this embodiment differing from the first embodiment will be described, the elements in this embodiment which are the same as corresponding elements in the first embodiment are designated by the same reference numerals, and a description thereof will be omitted.

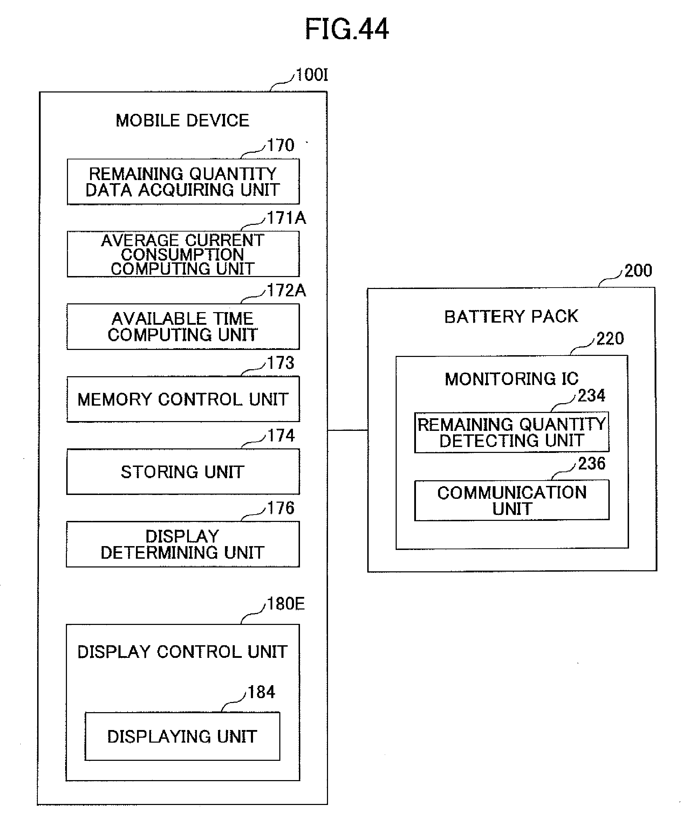

FIG. 44 is a diagram for explaining the functional composition of a mobile device of the ninth embodiment. The mobile device 100I of this embodiment includes a remaining quantity data acquiring unit 170, an average current consumption computing unit 171A, an available time computing unit 172A, a memory control unit 173, a storing unit 174, and a display determining unit 176.

The average current consumption computing unit 171A of this embodiment computes the average of the current consumption of the mobile device 100I based on the remaining quantity data acquired by the remaining quantity data acquiring unit 170. For example, the average current consumption computing unit 171A computes the average current consumption value based on the remaining quantity data and the time measured by the time measuring unit 233 of the monitoring IC 220 after the secondary battery 211 is charged to the full level.

The display determining unit 176 of this embodiment determines whether the remaining quantity of the secondary battery 211 acquired by the remaining quantity data acquiring unit 170 is below a predetermined threshold. When the remaining quantity is below the threshold, the display determining unit 176 determines that the available time of the mobile device 100I should be displayed. It is preferred that the predetermined threshold is stored by the storing unit 174.

The display control unit 180E of this embodiment has the displaying unit 184. The display control unit 180E performs the displaying process mentioned later, when the display determining unit 176 determines that the available time should be displayed.

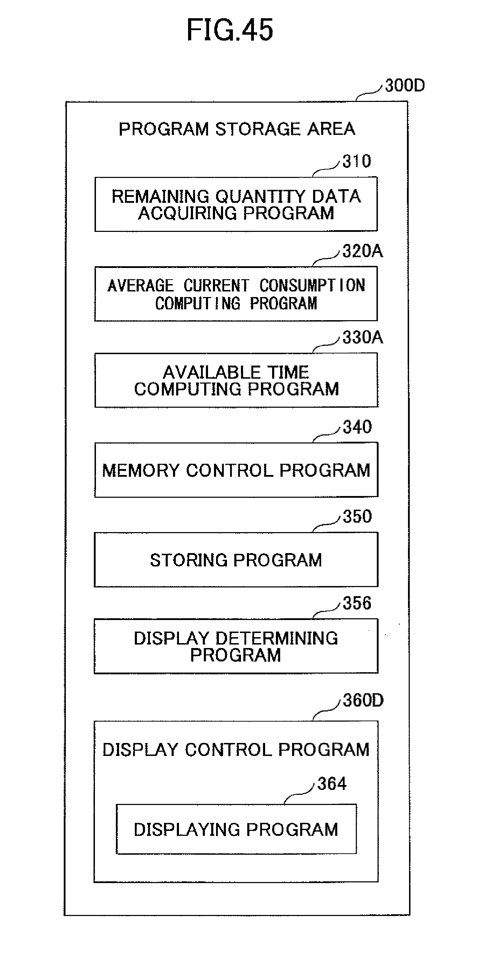

FIG. 45 is a diagram for explaining the program storage area of the ninth embodiment. An average current consumption computing program 320A which functions as the average current consumption computing unit 171A, and an available time computing program 330A which functions as the available time computing unit 172A are stored in the program storage area 300D of this embodiment. A display control program 360D including a displaying program 364 is stored in the program storage area 300D of this embodiment.

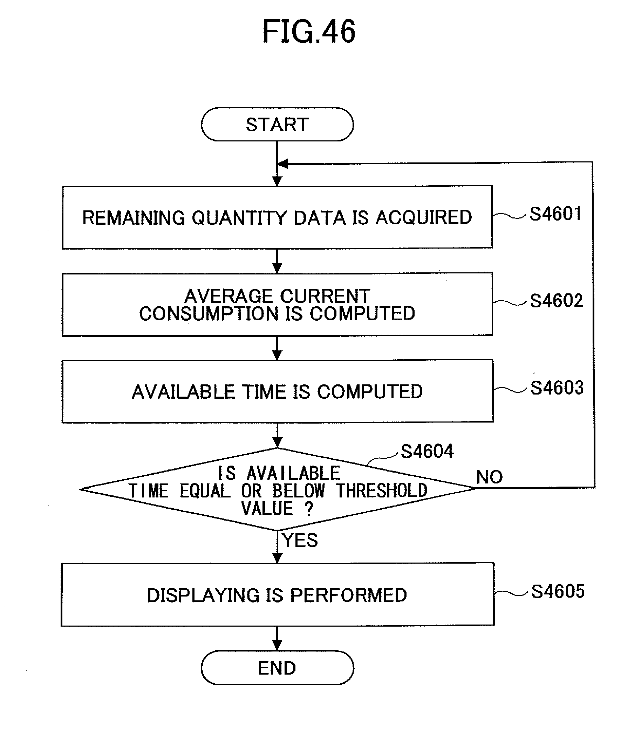

With reference to FIG. 46, operation of the mobile device of this embodiment will be described. FIG. 46 is a flowchart for explaining operation of the mobile device of the ninth embodiment.

In the mobile device 100I of this embodiment, the remaining quantity data acquiring unit 170 acquires the remaining quantity data (step S4601), and the average current consumption computing unit 171 computes the average current consumption based on the remaining quantity data (step S4602).

Subsequently, the available time computing unit 172A computes the available time of the mobile device 100I based on the remaining quantity data and the average current consumption (step S4603). The display determining unit 176 determines whether the computed available time should be displayed (step S4604).

In the step S4604, when the available time is equal or below the threshold stored by the storing unit 174, the display determining unit 172A of this embodiment determines that the available time should be displayed. In the step S4604, when the available time is larger than the threshold, the display determining unit 172A determines that the available time is not displayed. The threshold may be stored by the user of the mobile device 100I of this embodiment.

When the available time is equal or below the threshold in the step S4604, the display control unit 180 causes the displaying unit 184 to display on the display device 12 a message indicating that the available time is below the threshold (step S4605), and the process is terminated.

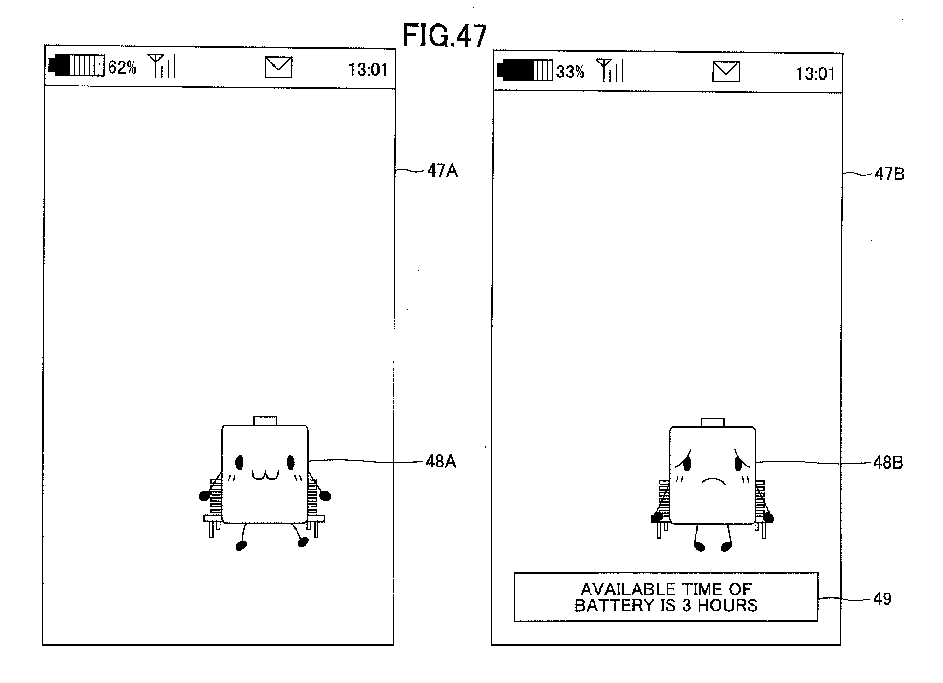

FIG. 47 is a diagram for explaining an example in which the available time is displayed. A screen 47A and a screen 47B as illustrated in FIG. 47 are displayed on the display device 12. The screen 47A is a screen used when it is determined that the available time is not displayed, and the screen 47B is a screen used when it is determined that the available time should be displayed.

The screen 47A is a normal standby screen. In the screen 47A, for example, a pictorial character image 48A which indicates the approximation of the remaining quantity of the secondary battery 211 is included.

When the available time of the mobile device 100I decreases and is below the threshold, the available time is displayed by the displaying unit 184. In the example of the screen 47B, the threshold is set to 3 hours. Hence, when the available time is below 3 hours, a message 49 is displayed in the screen 47B. For example, the screen 48B may contain a pictorial character image 48B indicating that the remaining quantity of the secondary battery 211 is too small.

In the present embodiment, multiple thresholds may be stored. For example, when the thresholds are set to 3 hours, 2 hours, and 1 hour, respectively, the displaying unit 184 may be arranged to display respective messages when the available time is below 3 hours, when it is below 2 hours, and when it is below 1 hour.

Thus, in this embodiment, a message is displayed when the available time of the mobile device 100I is below a predetermined value, and this is helpful to make the user conscious that the battery of the mobile device 100I will shortly be dead.

### Tenth Embodiment

With reference to the accompanying drawings, a tenth embodiment of the present disclosure will be described.

In the tenth embodiment of the present disclosure, the remaining quantity data of the secondary battery 211 is stored in a predetermined timing, and the record of the remaining quantity of the secondary battery 211 is displayed. In the following, only a point of this embodiment differ from the first embodiment will be described, the elements in this embodiment which are the same as corresponding elements in the first embodiment are designated by the same reference numerals, and a description thereof will be omitted.

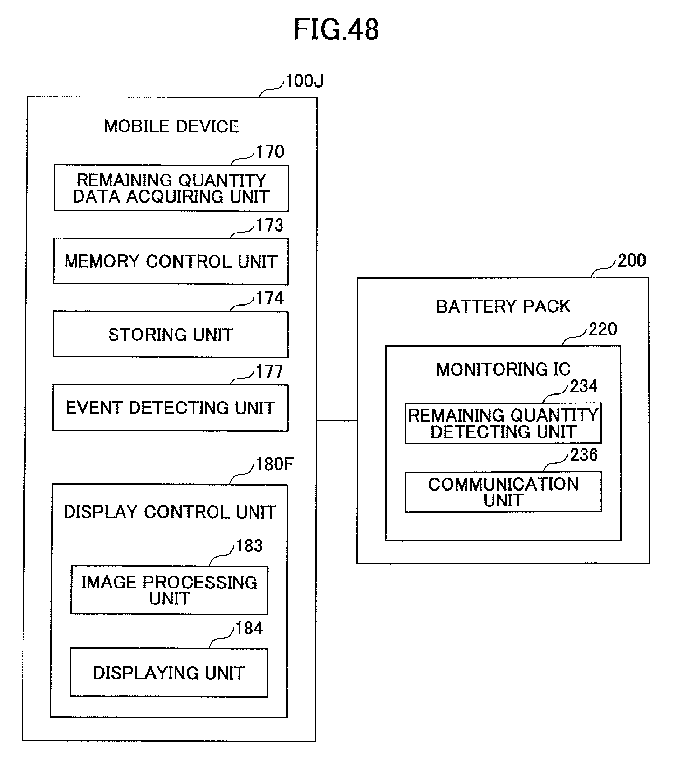

FIG. 48 is a diagram illustrating the functional composition of a mobile device of the tenth embodiment. The mobile device 100J of this embodiment includes a remaining quantity data acquiring unit 170, a memory control unit 173, a storing unit 174, and an event detecting unit 177. The mobile device 100J of this embodiment has a display control unit 180F containing an image processing unit 183 and a displaying unit 184.

The event set unit 177 of this embodiment detects occurrence of an event stored beforehand by the storing unit 174. For example, when the stored event is a talk event, the event detecting unit 177 detects that the mobile device 100J has started execution of the talk function. When the stored event is an e-mail transmission/reception event, the event detecting unit 177 detects that the mobile device 100J has started execution of the e-mail transmitting/ receiving function.

Alternatively, the event detecting unit 177 of this embodiment may be arranged to detect an event that a predetermined time has elapsed. For example, when the event stored by the storing unit 174 is an event that 1 hour has elapsed, the event detecting unit 177 detects occurrence of the event for every hour.

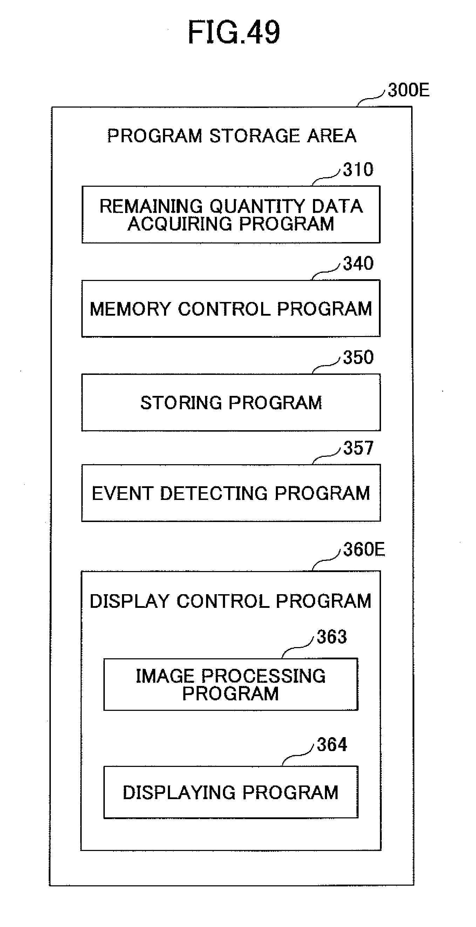

FIG. 49 is a diagram for explaining the program storage area of the tenth embodiment. In the program storage area 300E of this embodiment, a remaining quantity data acquiring program 310 which functions as the remaining quantity data acquiring unit 170, a memory control program 330 which functions as the memory control unit 173, a storing program 340 which functions as the storing unit 174, an event detecting program 357 which functions as the event detecting unit 177, and a display control program 360E which functions as the display control unit 180F are included. In the display control program 360E, an image processing program 363 which functions as the image processing unit 183, and a display program 364 which functions as the displaying unit 184 are included.

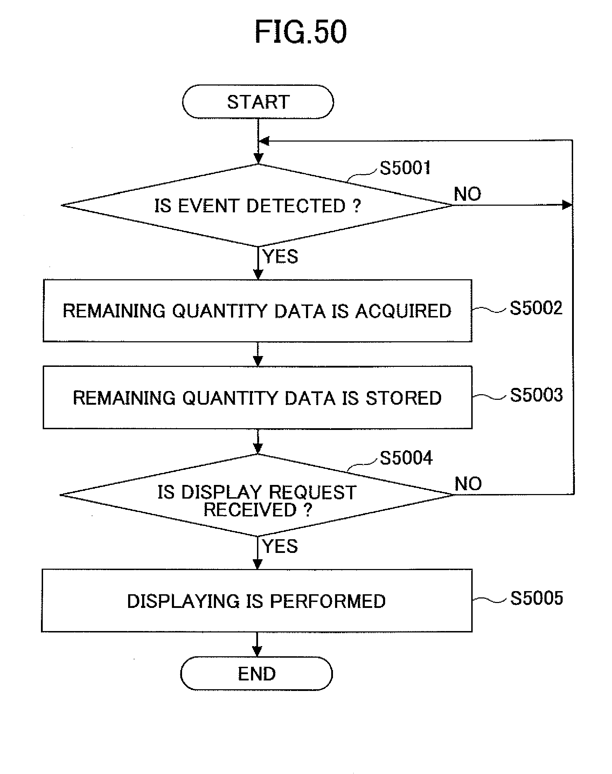

FIG. 50 is a flowchart for explaining operation of the mobile device of the tenth embodiment. In the mobile device 10 of this embodiment, the event detecting unit 177 detects occurrence of an event (step S5001), and the remaining quantity data acquiring unit 170 acquires the remaining quantity data from the monitoring IC 220 of the battery pack 200 (step S5002).

The memory control unit 173 stores the acquired remaining quantity data in the memory device 15 of the mobile device 100J (step S5003). Alternatively, the memory control unit 173 of this embodiment may store the remaining quantity data in the auxiliary memory device 14 of the mobile device 100J.

The mobile device 100J of this embodiment repeats processing from step S5001 to step S5003 each time the event detecting unit 177 detects occurrence of the event. Therefore, whenever occurrence of the event is detected, the log information of the remaining quantity data is stored in the memory device 15 of the mobile device 100J of this embodiment.

If the mobile device 100J receives a display request of the log information of the remaining quantity data (step S5004), the display control unit 180F acquires and displays the log information (step 55005) .

It is preferred that a method of displaying the log information by the display control unit 180F of this embodiment is stored beforehand. For example, a method of displaying a bar graph representation of the log information of the remaining quantity data may be stored beforehand. Alternatively, a method of displaying a line graph representation of the log information of the remaining quantity data may be stored beforehand. The image processing unit 183 of the display control unit 180F performs image processing which processes the log information of the remaining quantity data in order to display the log information by the stored method. The displaying unit 184 in the display control unit 180F displays the processed image of the log information output from the image processing unit 183.

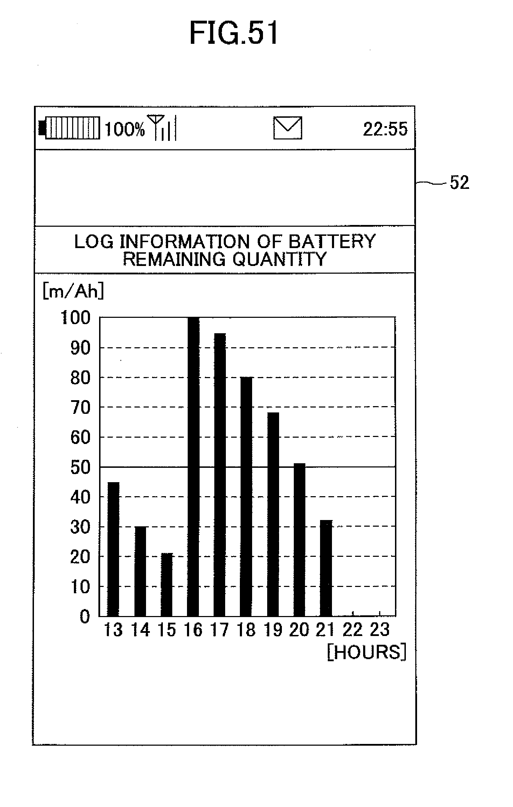

FIG. 51 is a diagram illustrating an example of a screen in which the log information of the remaining quantity data is displayed in the tenth embodiment.

In the example of the screen 52 of FIG. 51, a bar graph representation of the log information of the remaining quantity data when occurrence of an event is detected for every hour is displayed. In the example of FIG. 51, the event detecting unit 177 detects occurrence of an event for every hour, and the remaining quantity data is acquired and stored each time. Hence, the log information of the remaining quantity data being displayed is the information which indicates a change of the remaining quantity data per hour.

As described in the foregoing, in this embodiment, the log information of the remaining quantity data of the secondary battery 211 can be presented visually. Therefore, the user of the mobile device 100J can easily grasp the changes of the remaining quantity data in the past visually.

### Eleventh Embodiment

With reference to the accompanying drawings, an eleventh embodiment of the present disclosure will be described. In the eleventh embodiment of the present disclosure, a result of estimation of an appropriate charging start time based on the log information of the remaining quantity data is displayed. In the following, only a point of this embodiment differing from the foregoing embodiments will be described, the elements in this embodiment which are the same as corresponding elements in the foregoing embodiments are designated by the same reference numerals, and a description thereof will be omitted.

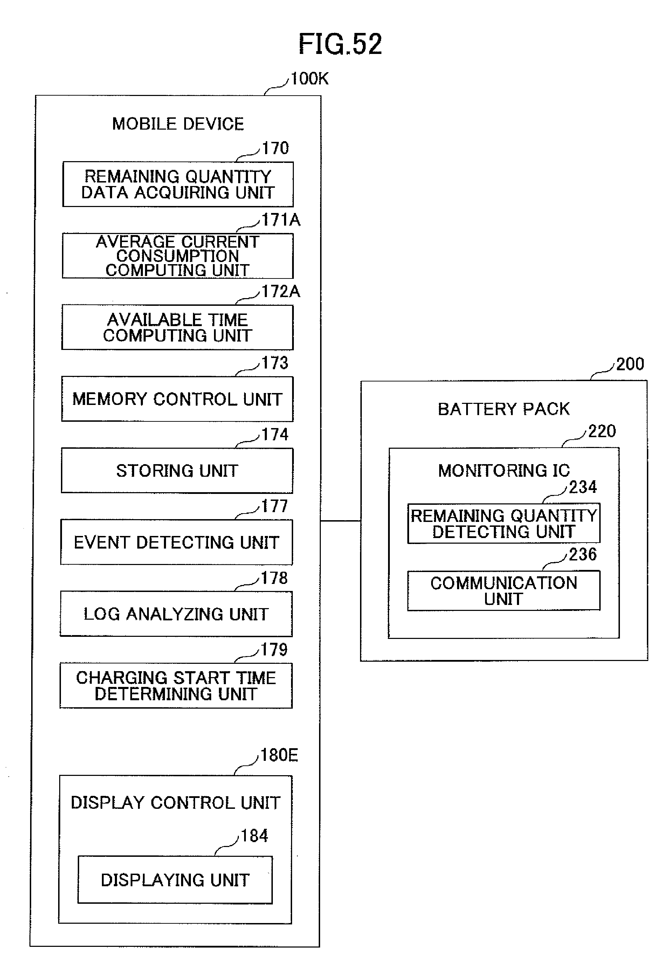

FIG. 52 is a diagram illustrating the functional composition of a mobile device of the eleventh embodiment. The mobile device 100K of this embodiment includes a remaining quantity data acquiring unit 170, an average current consumption computing unit 171A, an available time computing unit 172A, a memory control unit 173, a storing unit 174, an event detecting unit 177, a log analyzing unit 178, and a charging start time determining unit 179. The mobile device 100K of this embodiment has a display control unit 180E.

The log analysis unit 178 of this embodiment analyzes the log information of the remaining quantity data stored in the memory device of the mobile device 100K by the memory control unit 173. The log analysis unit 178 of this embodiment analyzes the time the charging of the secondary battery 211 is started in the past based on the log information.

For example, the analysis by the log analyzing unit 178 when the log information stored in the mobile device 100K is the information of the remaining quantity data stored for every hour will be described. For example, the log analysis unit 178 compares the remaining quantity data acquired at a time T1 with the remaining quantity data acquired at a time T2 one hour after the time T1.

When the remaining quantity of the time T2 is larger than the remaining quantity of the time T1 as a result of the comparison, the log analyzing unit 178 determines that the secondary battery 211 is charged for the period between the time T1 and the time T2.

The log analysis unit 178 of this embodiment analyzes the timing in which the charging is performed. The log analysis unit 178 of this embodiment can extract the time zone of one day in which the charging is frequently performed through the analysis.

The charging start time determining unit 179 computes the time which is appropriate for starting the charging next time (the charging start time), based on the result of the analysis output from the log analyzing unit 178. The charging start time determining unit 179 of this embodiment may be arranged to determine the result of the analysis from the log analyzing unit 178 as being the charging start time. When the log analyzing unit 178 determines that the charging is performed between the time T1 and the time T2, the charging start time determining unit 179 may be arranged to determine an intermediate time between the time T1 and the time T2 as being the charging start time.

The charging start time determining unit 179 of this embodiment may be arranged to determine a time in the evening of the same day as being the charging start time, when the time analyzed by the log analyzing unit 178 is midnight. The charging,start time determining unit 179 may be arranged to determine a time contained in the time zone of one day in which the charging is frequently performed as being the charging start time.

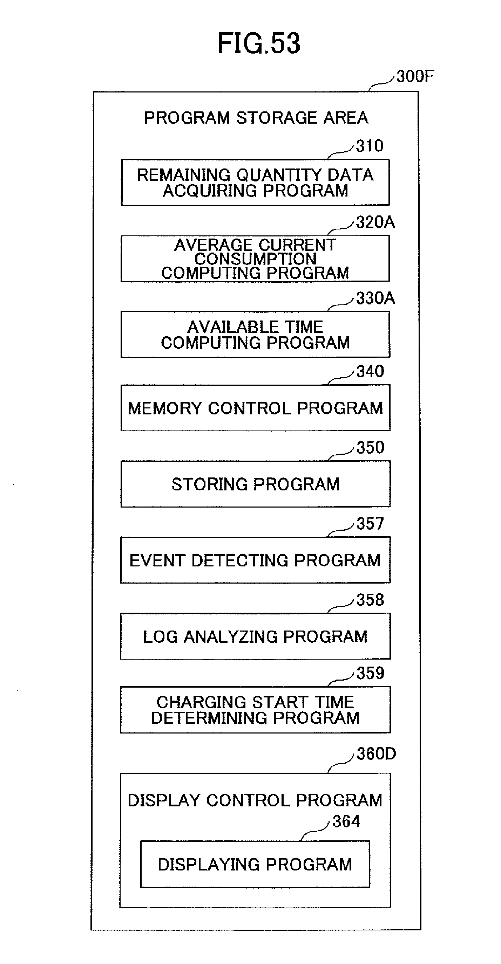

FIG. 53 is a diagram for explaining the program storage area of the eleventh embodiment. In the program storage area 300F of this embodiment, a log analyzing program 358 which functions as the log analyzing unit 178, and a charging start time determining program 359 which functions as the charging start time determining unit 179 are included.

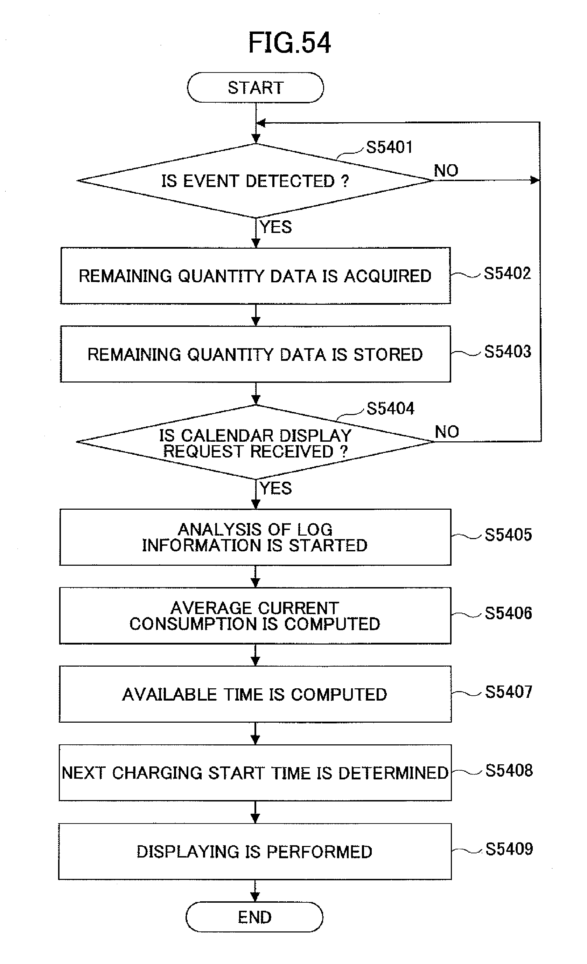

With reference to FIG. 54, operation of the mobile device 100K of this embodiment will be described. FIG. 54 is a flowchart for explaining operation of the mobile device of the eleventh embodiment.

The processing from step S5401 to step S5403 in the flowchart of FIG. 54 is the same as the processing from step S5001 to step S5003 in the flowchart of FIG. 50, and a description thereof will be omitted.

When the mobile device 100K of this embodiment receives a calendar display request (step S5404), the log analyzing unit 178 starts analyzing of the log information (step S5405).

Subsequently, the average current consumption computing unit 171A computes the average current consumption based on the remaining quantity data (step S5406). After the average current consumption is computed, the available time computing unit 172A computes the available time of the mobile device 100K (step S5407).

The charging start time determining unit 179 determines a next charging start time based on the computed available time (step S5408).

At this time, the charging start time determining unit 179 may determine the next charging start time only by accessing the available time. Alternatively, the charging start time determining unit 179 may determine the next charging start time based on the available time and the analysis result of the log information output from the log analyzing unit 178.

For example, it is assumed that the time the calendar display request is received is 1:00 p.m. and the computed available time is 9 hours. When the charging start time determining unit 179 determines the charging start time based on the available time only, the next charging start time determined is 10:00 p.m.

The charging start time determining unit 179 may determine the next charging start time such that the analysis result from the log analyzing unit 178 is reflected within a time range in which the available time is not exceeded. For example, when the time zone in which the charging is frequently performed is from 6:00 p.m. to 7:00 p.m. as a result of the analysis by the log analyzing unit 178, the charging start time determining unit 179 may determine the next charging start time as being 6:30 p.m.

After the next charging start time is determined, the display control unit 180E causes the displaying unit 184 to display the charging start time with a calendar (step S5409).

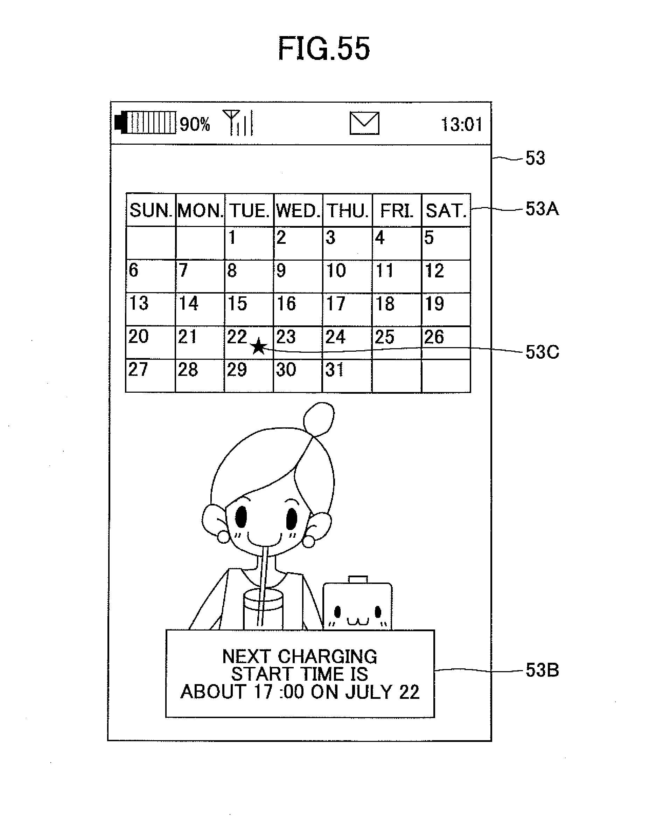

FIG. 55 is a diagram illustrating an example of a screen in which a charging start time is displayed in the eleventh embodiment. A calendar 53A and a message 53B which indicate a next charging date and charging start time are displayed in the screen 53 as illustrated in FIG. 55.

The displaying unit 184 of this embodiment may display a specific mark 53c on the part corresponding to the next charging date of the calendar 53A, as well as the message.

Thus, the mobile device 100K of this embodiment can notify the user of the date and time that the changing of the battery is to be started, and the user of the mobile device 100K can start charging of the battery in an appropriate timing.

### Twelfth Embodiment

Next, a twelfth embodiment of the present disclosure will be described with reference to the accompanying drawings. In the twelfth embodiment of the present disclosure, based on the remaining quantity data of the secondary battery 211, the range in which the user is movable while carrying the mobile device is displayed on a map. In the following, only a point of this embodiment differing from the foregoing embodiments will be described, the elements in this embodiment which are the same as corresponding elements in the foregoing embodiments are designated by the same reference numerals, and a description thereof will be omitted.

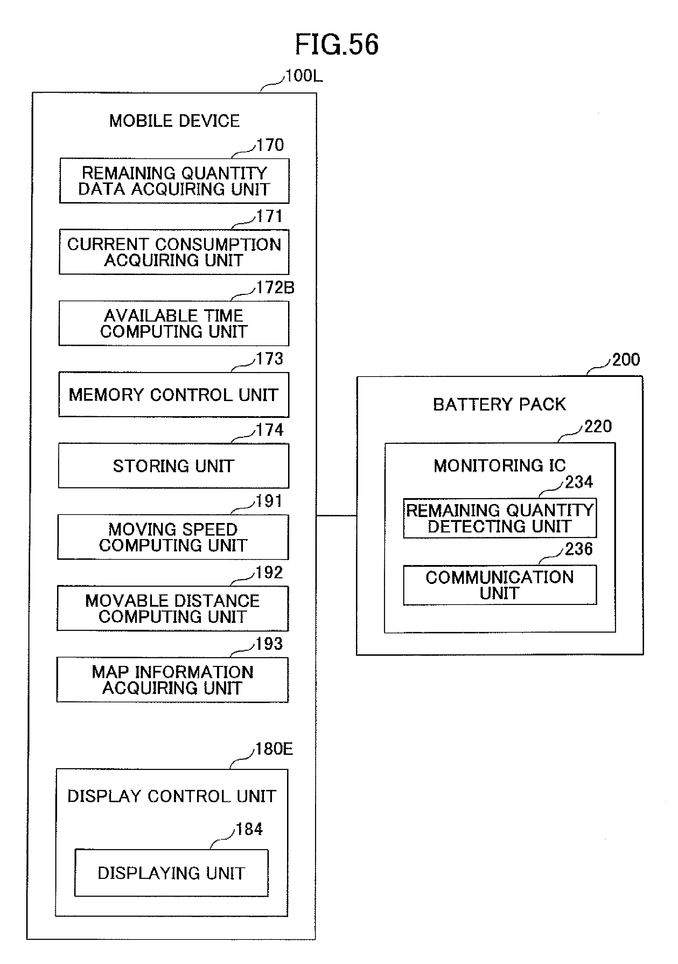

FIG. 56 is a diagram for explaining the functional composition of a mobile device 100L of the twelfth embodiment. The mobile device 100L of this embodiment includes a remaining quantity data acquiring unit 170, a current consumption acquiring unit 171, an available time computing unit 172B, a memory control unit 173, a storing unit 174, a moving speed computing unit 191, a movable distance computing unit 192, a map information acquiring unit 193, and a display control unit 180E.

The current consumption acquiring unit 171 of this embodiment acquires the average current consumption value of each application included in the mobile device 100L. The available time computing unit 172B computes the available time of each application.

The moving speed computing unit 191 computes the moving speed of the mobile device 100L. For example, the moving speed of the mobile device 100L may be obtained by using a GPS (Global Positioning System) function of the mobile device 100L.

The movable distance computing unit 192 computes a movable distance of each application based on the available time of each application and the moving speed of the mobile device 100L. The movable distance of each application is, for example, a distance by which the user can move while performing the application 151, or a distance by which the user can move while performing the application 152.

The map information acquiring unit 193 acquires map information from a server installed in a base station which communicates with the mobile device 100L. The map information acquiring unit 193 transmits the position information of the mobile device 100L to the base station, and acquires the map information of a predetermined range in which the position information is included. It is preferred that, for example, position information of service stations or the like where the secondary battery 211 can be recharged (rechargeable position information) is included in the map information acquired in the present embodiment.

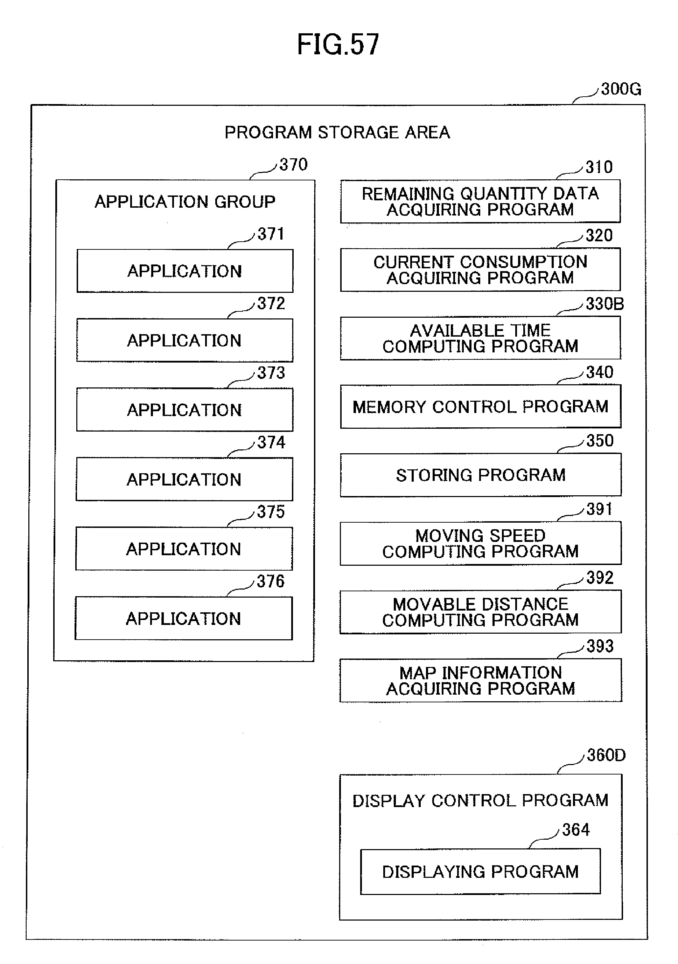

FIG. 57 is a diagram for explaining the program storage area of the twelfth embodiment. In the program storage area 300G of this embodiment, a current consumption acquiring program 320 which functions as the current consumption acquiring unit 171, an available time computing program 330B which functions as the available time computing unit 172B, a moving speed computing program 391 which functions as the moving speed computing unit 191, a movable distance computing program 392 which functions as the movable distance computing unit 192, and a map information acquiring program 393 which functions as the map information acquiring unit 193 are stored.

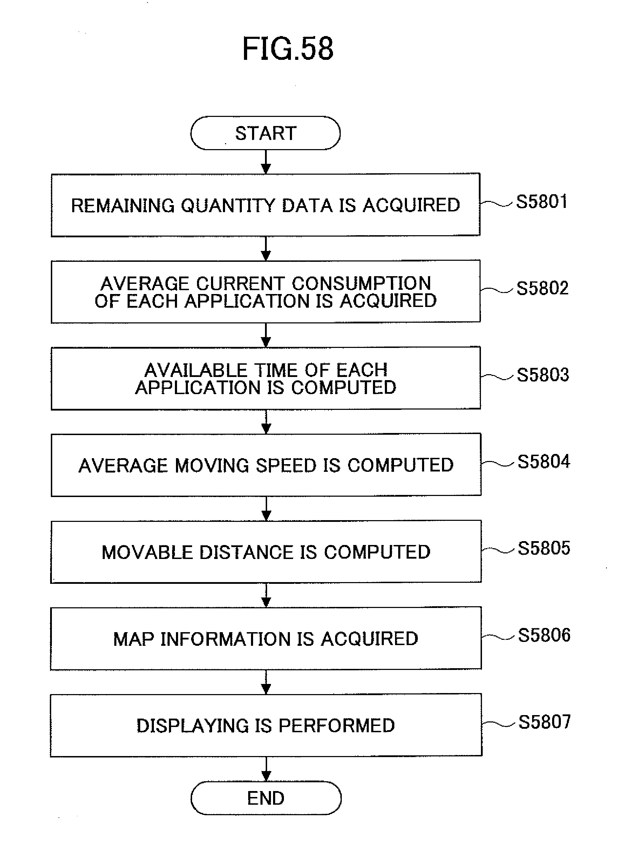

FIG. 58 is a flowchart for explaining operation of the mobile device of the twelfth embodiment. If a display request of the movable distance is received, the mobile device 100L of this embodiment causes the remaining quantity data acquiring unit 170 to acquire the remaining quantity data (step S5801). Subsequently, the mobile device 100L causes the current consumption acquiring unit 171 to acquire the average current consumption of each application from the monitoring IC 220 (step S5802). After the average current consumption of each application is acquired, the available time computing unit 172B computes the available time of each application (step S5803).

Subsequently, the moving speed computing unit 191 computes the average moving speed of the mobile device 100L (step S5804). For example, the average moving speed may be computed as follows. A moving distance in a predetermined time is determined based on the position information of the mobile device 100L, and the average moving speed is computed based on the moving distance in the predetermined time.

After the average moving speed is computed, the movable distance computing unit 192 computes the movable distance of each application (step S5805). Subsequently, the map information acquiring unit 193 acquires the map information, including the position information of the mobile device 100L and the rechargeable position information, from the base station or the like (step S5806).

Subsequently, the displaying unit 184 displays a screen in which the movable distance of each application and the map information are superimposed (step S5807).

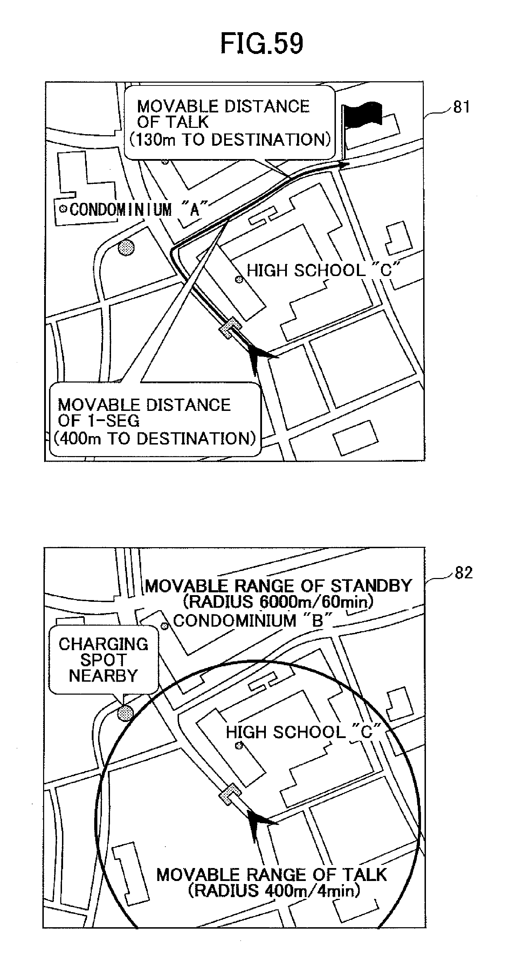

FIG. 59 is a diagram illustrating examples of the screen in which the movable distance and the map information are displayed in the twelfth embodiment. In the screen 81 illustrated in FIG. 59, the map information, the movable distance when running the application which performs a talk function, and the movable distance when running the application which performs a 1seg function are displayed.

In the screen 82 illustrated in FIG. 59, the map information, the movable range when running the application which performs a talk function, and the rechargeable position information are displayed.

As described in the foregoing, it is possible for this embodiment to display the movable distance (movable range) of each application and the rechargeable position information based on the remaining quantity data of the secondary battery 211. Therefore, in this embodiment, the user of the mobile device 100L can be notified of the movable distance by which the user can move while using the mobile device 100L.

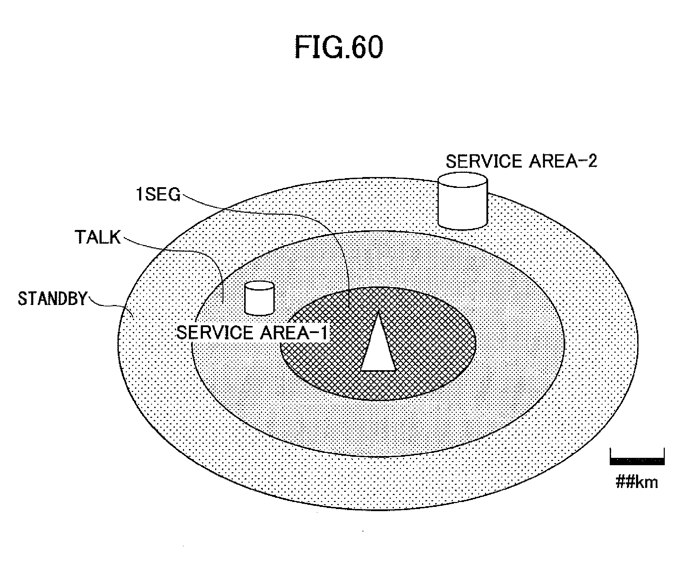

In this embodiment, as illustrated in FIG. 60, the map information may not be displayed and only the movable distance of each application and the rechargeable position information may be displayed. FIG. 60 is a diagram illustrating an example in which only the movable distance of each application and the rechargeable position information are displayed. In the example of FIG. 60, the movable distance when running the application which performs a 1seg function, the movable distance when running the application which performs a talk function, and the movable distance when running the application which performs a standby function are displayed. In the example of FIG. 60, the rechargeable position information is also displayed.

### Thirteenth Embodiment

With reference to the accompanying drawings, a thirteenth embodiment of the present disclosure will be described. In the thirteenth embodiment of the present disclosure, a remaining quantity data of a mobile device registered in a server of a base station can be displayed on a display device of another mobile device. In the following, only a point of this embodiment differing from the foregoing embodiments will be described, the elements in this embodiment which are the same as corresponding elements in the foregoing embodiments are designated by the same reference numerals, and a description thereof will be omitted.

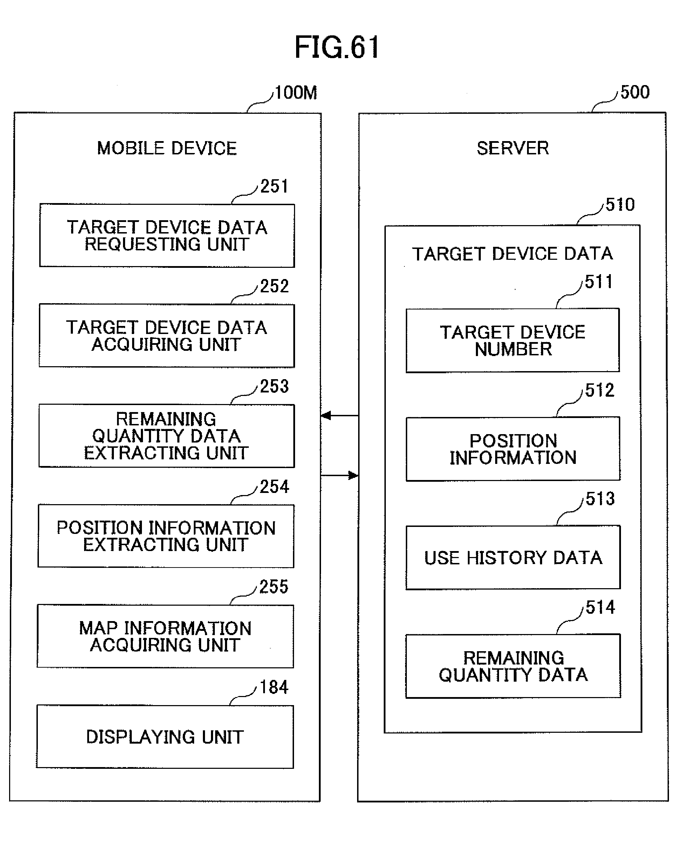

FIG. 61 is a diagram illustrating the functional composition of a mobile device of the thirteenth embodiment. The mobile device 100M of this embodiment can communicate with a server 500 installed in a base station, and can display a remaining quantity data of another mobile device (which is a target mobile device). For example, if a mother owns the mobile device 100M of this embodiment and the mobile device owned by her child is registered in the server 500 of the base station as the target mobile device, the remaining quantity data of the target mobile device can be displayed on the mother's mobile device 100M. Hence, the owner of the mobile device 100M can demand the owner of the target mobile device perform charging of the battery.

In the server 500 of this embodiment, the information of the target mobile device is maintained. In this embodiment, the information of the target mobile device registered by the owner of the mobile device 100M will be referred to as target device data 510. In the target device data 510, a target device number 511, position information 512, use history information 513, and a remaining quantity data 514 are contained. The target device number 511 is a phone number of the mobile device. The position information 512 is the position information of the target mobile device. The use history information 513 is information which indicates the use history of the mobile device. The remaining quantity data 514 is the remaining quantity data of the secondary battery of the target mobile device.

The position information 512, the use history information 513, and the remaining quantity data 514 in this embodiment are periodically transmitted from the target mobile device to the server 500 from the target mobile device.

The mobile device 100M of this embodiment includes a target device data requesting unit 251, a target device data acquiring unit 252, a remaining quantity data extracting unit 253, a position information extracting unit 254, a map information acquiring unit 255, and a displaying unit 184.

When an access request of the remaining quantity data of the target mobile device is input at the mobile device 100M, the target device data requesting unit 251 transmits the request to the server 500. The target device data acquiring unit 252 acquires the target device data 510 from the server 510. The remaining quantity data extracting unit 253 extracts the remaining quantity data 514 from the acquired target device data 510.

The position information extracting unit 254 extracts the position information 512 from the acquired target device data 510. The map information acquiring unit 255 acquires the map information containing the extracted position information 512.

The displaying unit 184 displays the remaining quantity data 514 of the target mobile device and the map information on the display device 12 of the mobile device 100M.

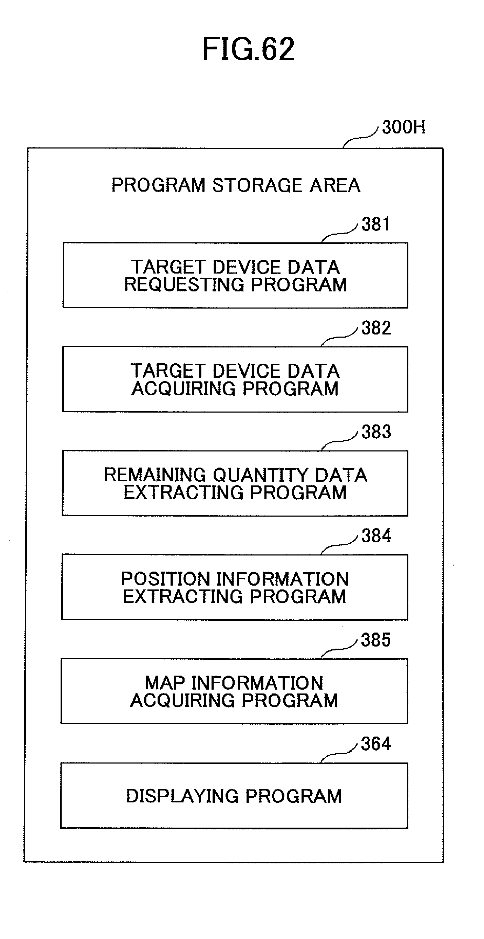

FIG. 62 is a diagram for explaining the program storage area of the thirteenth embodiment. In the program storage area 300H provided in the auxiliary memory device 14 of the mobile device 100M of this embodiment, a target device data requesting program 381 which functions as the target device data requesting unit 251, a target device data acquiring program 382 which functions as the target device data acquiring unit 252, a remaining quantity data extracting program 383 which functions as the remaining quantity data extract unit 253, a position information extracting program 384 which functions as the position information extracting unit 254, a map information acquiring program 385 which functions as the map information acquiring unit 255, and a displaying program 364 which functions as the displaying unit 184 are stored.

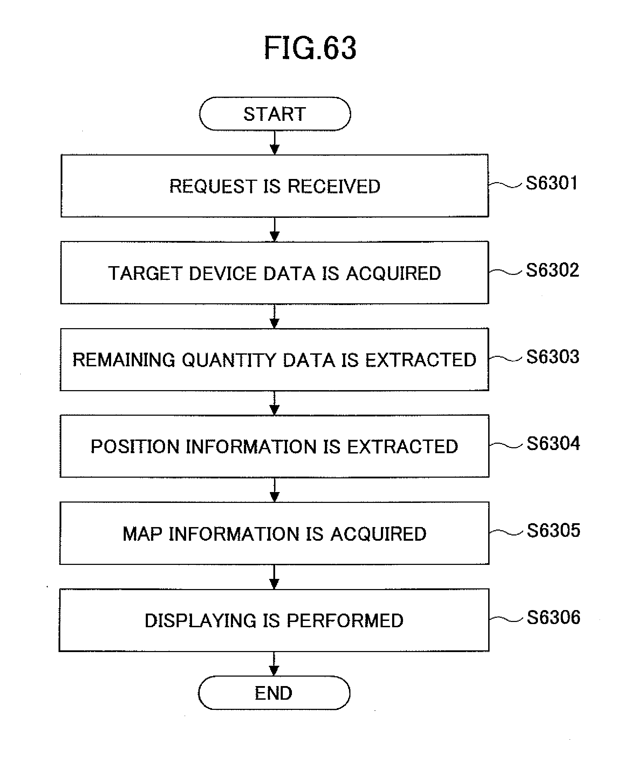

With reference to FIG. 63, operation of the mobile device 100M of this embodiment will be described. FIG. 63 is a flowchart for explaining operation of the mobile device of the thirteenth embodiment. If an acquiring request of the remaining quantity data of the target mobile device is input at the mobile device 100M of this embodiment, the target device data requesting unit 251 transmits the acquiring request of the target device data 510 to the server 500 (step S6301). When the acquiring request of the target device data 510 is received, the server 500 transmits the target device data 510 to the mobile device 100M. The mobile device 100M causes the target device data acquiring unit 252 to acquire the target device data 510 (step S6302).

After the target device data 510 is acquired, the remaining quantity data extracting unit 253 extracts the remaining quantity data 514 contained in the acquired target device data 510 (step S6303). Subsequently, the position information extracting unit 254 extracts the position information 512 contained in the target device data 510 (step S6304).

After the position information 512 is extracted, the map information acquiring unit 255 acquires the map information of a predetermined range including the acquired position information 512 from the server 500 (step S6305).

After the remaining quantity data 514 and the map information are acquired, the displaying unit 184 displays on the display device 12 of the mobile device 100M, the map information indicating the position of the mobile device, and the remaining quantity data of the mobile device (step S6306).

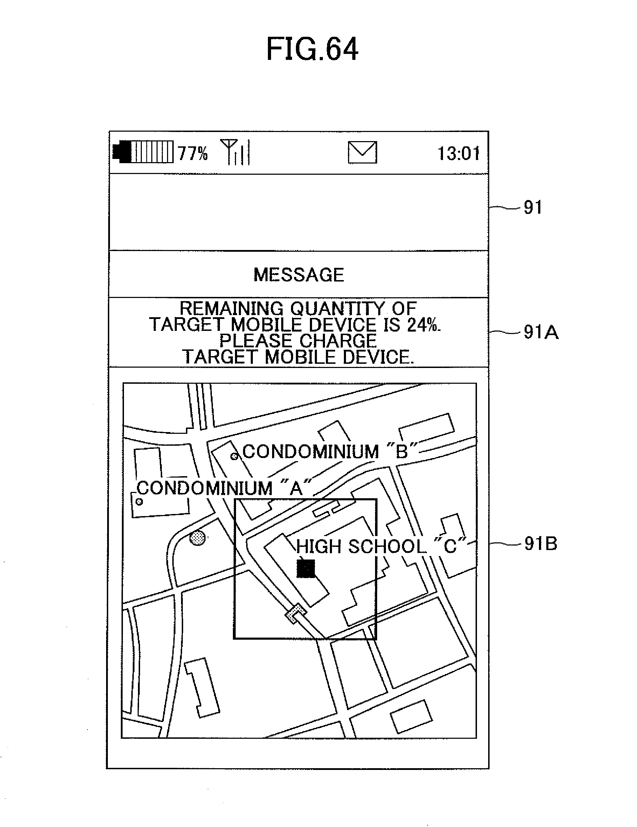

FIG. 64 is a diagram illustrating an example of a screen in which a remaining quantity data of a target mobile device and map information are displayed in the thirteenth embodiment.

In the screen 91 illustrated in FIG. 64, a message 91A notifying the remaining quantity of the target mobile device, and map information 91B including position information 512 of the target mobile device are displayed. In the example of the screen 91, both the message 91A and the map information 91B are displayed. Alternatively, only the message 91A may be displayed.

As described in the foregoing, in this embodiment, the position information and the remaining quantity data of a target mobile device which is owned by, for example, a family of the user can be displayed on the mobile device of the user. Therefore, the owner of the mobile device 100M of this embodiment can avoid frequently talking with the owner of the target mobile device with a small battery remaining quantity, and can prevent the remaining quantity of the target mobile device from being reduced. The owner of the mobile device 100M of this embodiment can grasp whether the owner of the target mobile device has charged the target mobile device.

Although the present disclosure has been explained based on the foregoing embodiments, the present disclosure is not limited to the foregoing embodiments, and variations and modifications may be made without departing from the scope of the invention.

### INDUSTRIAL APPLICABILITY

The present disclosure is applicable to a mobile device driven by a chargeable and dischargeable secondary battery, a battery pack included in the mobile device, a semiconductor device incorporated in the mobile device, and a display control method and a display control program performed by the mobile device.

The present international application is based on Japanese patent application No. 2008-184227, filed on July 15, 2008, Japanese patent application No. 2008-187724, filed on July 18, 2008, and Japanese patent application No. 2008-249601, filed on September 29, 2008, the contents of which are incorporated herein by reference in their entirety.

### DESCRIPTION OF THE REFERENCE NUMERALS

- 100, 100A-100M: mobile device
- 170: remaining quantity data acquiring unit
- 171: current consumption acquiring unit
- 172: processing amount computing unit
- 173: memory control unit
- 174: storing unit
- 184: display control unit
- 200: battery pack
- 210: battery unit
- 211: secondary battery
- 220: monitoring IC
- 300, 300A-300H: program storage area
- 400, 400A-400D: data storage area
- 500: server
- 510: target device data

## Claims

1. A mobile device including a plurality of applications and driven by a chargeable and dischargeable secondary battery to perform the plurality of applications, the mobile device comprising:
a remaining quantity detecting unit to detect a remaining quantity of the secondary battery;
a current consumption computing unit to compute a current consumption consumed by execution of each of the applications;
a processing amount computing unit to compute an executable processing amount of each of the applications based on the remaining quantity detected by the remaining quantity detecting unit and the current consumption of each of the applications computed by the current consumption computing unit; and
a display control unit to display the executable processing amount of each of the applications computed by the processing amount computing unit on a display device in the mobile device.

2. The mobile device according to claim 1, wherein the display control unit displays the executable processing amount of each of the applications with a list of the applications.

3. A display control method for use in a mobile device including a plurality of applications and driven by a chargeable and dischargeable secondary battery to perform the plurality of applications, comprising:
a remaining quantity detecting step of detecting a remaining quantity of the secondary battery;
a current consumption computing step of computing a current consumption consumed by execution of each of the applications;
a processing amount computing step of computing an executable processing amount of each of the applications based on the remaining quantity detected in the remaining quantity detecting step and the current consumption of each of the applications computed in the current consumption computing step; and
a display control step of displaying the executable processing amount of each of the applications computed in the processing amount computing step on a display device of the mobile device.

4. A display control program which, when executed by a processing unit of a mobile device including a plurality of applications and driven by a chargeable and dischargeable secondary battery, causes the processing unit to perform:
a remaining quantity detecting step of detecting a remaining quantity of the secondary battery;
a current consumption computing step of computing a current consumption consumed by execution of each of the applications;
a processing amount computing step of computing an executable processing amount of each of the applications based on the remaining quantity detected in the remaining quantity detecting step and the current consumption of each of the applications computed in the current consumption computing step; and
a display control step of displaying the executable processing amount of each of the applications computed in the processing amount computing step on a display device of the mobile device.

5. A mobile device including a plurality of functions, comprising:
a setting condition detecting unit to detect a setting condition which is stored for at least one of the plurality of functions;
a power consumption acquiring unit to acquire a power consumption of the mobile device consumed in the setting condition detected by the setting condition detecting unit;
an estimated CO₂ emission reduction amount computing unit to compute a difference between the acquired power consumption in the setting condition and a power consumption consumed in a previous setting condition and stored in a memory unit, and compute an estimated amount of CO₂ emission reduction based on the difference; and
a presenting unit to present to a user of the mobile device a result of the computation by the estimated CO₂ emission reduction amount computing unit.

6. The mobile device according to claim 5, further comprising a total CO₂ emission reduction amount computing unit to compute a total amount of CO₂ emission reduction from a time the setting condition is stored to a requested time in accordance with an instruction from the user.

7. The mobile device according to claim 6, wherein the total CO₂ emission reduction amount computing unit computes an amount of CO₂ emission reduction for each of respective setting conditions for the plurality of functions.

8. The mobile device according to any of claims 5 to 7, further comprising a measurement unit to measure an elapsed time from a time the setting condition is stored for each of respective setting conditions of the plurality of functions in the mobile device, wherein the measurement unit stores the measured time in the memory unit for each of the respective setting conditions.

9. A display control method for use in a mobile device including a plurality of functions, comprising:
a setting condition detecting step of detecting a setting condition which is stored for at least one of the plurality of functions;
a power consumption acquiring step of acquiring a power consumption of the mobile device consumed in the setting condition detected in the setting condition detecting step;
an estimated CO₂ emission reduction amount computing step of computing a difference between the acquired power consumption in the setting condition and a power consumption consumed in a previous setting condition and stored in a memory unit, to compute an estimated amount of CO₂ emission reduction based on the difference; and
a presenting step of presenting to a user of the mobile device a result of the computation in the estimated CO₂ emission reduction amount computing step.

10. The display control method according to claim 9, further comprising a total CO₂ emission reduction amount computing step of computing a total amount of CO₂ emission reduction from a time the setting condition is stored to a requested time in accordance with an instruction from the user.

11. The display control method according to claim 10, wherein an amount of CO₂ emission reduction for each of respective setting conditions for the plurality of functions is computed in the total CO₂ emission reduction amount computing step.

12. The display control method according to any of claims 9 to 11, further comprising a measuring step of measuring an elapsed time from a time the setting condition is stored for each of respective setting conditions of the plurality of functions in the mobile device, wherein the measured time is stored in the memory unit for each of the respective setting conditions in the measuring step.

13. A mobile device including an application and a display device on which an image
associated with the application is displayed, the mobile device being driven by a chargeable and dischargeable secondary battery to perform the application, comprising:
a remaining quantity acquiring unit to acquire a remaining quantity of the secondary battery;
a current consumption acquiring unit to acquire a value of a current consumption consumed by execution of the application;
a processing amount computing unit to compute an executable processing amount of the application based on the remaining quantity acquired by the remaining quantity acquiring unit and the current consumption value acquired by the current consumption acquiring unit; and
a display control unit to display on the display device an image in which the executable processing amount of the application computed by the processing amount computing unit is combined with the image associated with the application.

14. A display control method for use in a mobile device including an application and a display device on which an image associated with the application is displayed, and driven by a chargeable and dischargeable secondary battery to perform the application, the display control method comprising:
a remaining quantity acquiring step of acquiring a remaining quantity of the secondary battery;
a current consumption acquiring step of acquiring a value of a current consumption consumed by execution of the application;
a processing amount computing step of computing an executable processing amount of the application based on the remaining quantity acquired in the remaining quantity acquiring step and the current consumption value acquired in the current consumption acquiring step; and
a display control step of displaying on the display device an image in which the executable processing amount of the application computed in the processing amount computing step is combined with the image associated with the application.

15. A display control program which, when executed by a processing unit of a mobile device including an application and a display device on which an image associated with the application is displayed, and driven by a chargeable and dischargeable secondary battery to perform the application, causes the processing unit to perform:
a remaining quantity acquiring step of acquiring a remaining quantity of the secondary battery;
a current consumption acquiring step of acquiring a value of a current consumption consumed by execution of the application;
a processing amount computing step of computing an executable processing amount of the application based on the remaining quantity acquired in the remaining quantity acquiring step and the current consumption value acquired in the current consumption acquiring step; and
a display control step of displaying on the display device an image in which the executable processing amount of the application computed in the processing amount computing step is combined with the image associated with the application.

16. A semiconductor device provided in the mobile device according to claim 1 or 2, wherein the semiconductor device comprises:
the remaining quantity detecting unit to detect the remaining quantity of the secondary battery;
the current consumption computing unit to compute the current consumption consumed by execution of each of the applications; and
the processing amount computing unit to compute the executable processing amount of each of the applications based on the remaining quantity detected by the remaining quantity detecting unit and the current consumption of each of the applications computed by the current consumption computing unit.

17. A battery pack for driving a mobile device including a plurality of applications and performing the plurality of applications, the mobile device comprising:
a current consumption computing unit to compute a current consumption consumed by execution of each of the applications;
a processing amount computing unit to compute an executable processing amount of each of the applications based on a battery remaining quantity and the current consumption of each of the applications computed by the current consumption computing unit; and
a display control unit to display the executable processing amount of each of the applications computed by the processing amount computing unit on a display device of the mobile device,
the battery pack comprising:
a secondary battery that drives the mobile device;
a remaining quantity detecting unit to detect a remaining quantity of the secondary battery; and
a communication unit to transmit, to the mobile device comprising the current consumption computing unit, a remaining quantity data indicating the battery remaining quantity detected by the remaining quantity detecting unit.

18. The battery pack according to claim 17, further comprising:
at least one of a current value acquiring unit to acquire a current value and a voltage value acquiring unit to acquire a voltage value; and
a time measuring unit to measure a time,
wherein the remaining quantity detecting unit detects the remaining quantity of the secondary battery based on the current value acquired by the current value acquiring unit or the voltage value acquired by the voltage value acquiring unit and the time measured by the time measuring unit.

19. A semiconductor device provided in a battery pack for driving a mobile device including a plurality of applications and performing the plurality of applications, the mobile device comprising:
a current consumption computing unit to compute a current consumption consumed by execution of each of the applications;
a processing amount computing unit to compute an executable processing amount of each of the applications based on a battery remaining quantity and the current consumption of each of the applications computed by the current consumption computing unit; and
a display control unit to display the executable processing amount of each of the applications computed by the processing amount computing unit on a display device of the mobile device,
the battery pack comprising a secondary battery that drives the mobile device, and
the semiconductor device comprising:
a remaining quantity detecting unit to detect a remaining quantity of the secondary battery; and
a communication unit to transmit, to the mobile device comprising the current consumption computing unit, a remaining quantity data indicating the battery remaining quantity detected by the remaining quantity detecting unit.

20. The semiconductor device according to claim 19, further comprising:
at least one of a current value acquiring unit to acquire a current value and a voltage value acquiring unit to acquire a voltage value; and
a time measuring unit to measure a time,
wherein the remaining quantity detecting unit detects the remaining quantity of the secondary battery based on the current value acquired by the current value acquiring unit or the voltage value acquired by the voltage value acquiring unit and the time measured by the time measuring unit.

21. A semiconductor device provided in a battery pack for driving a mobile device including a plurality of applications and performing the plurality of applications, the mobile device comprising:
a current consumption computing unit to compute a current consumption consumed by execution of each of the applications;
a processing amount computing unit to compute an executable processing amount of each of the applications based on a battery remaining quantity and the current consumption of each of the applications computed by the current consumption computing unit; and
a display control unit to display the executable processing amount of each of the applications computed by the processing amount computing unit on a display device of the mobile device,
the battery pack comprising a secondary battery that drives the mobile device, and
the semiconductor device comprising:
a remaining quantity detecting unit to detect a remaining quantity of the secondary battery;
a communication unit to transmit, to the mobile device comprising the current consumption computing unit, a remaining quantity data indicating the battery remaining quantity detected by the remaining quantity detecting unit; and
a memory unit that stores a program which, when executed by a processing unit of the semiconductor device, causes the processing unit to perform:
an acquiring step of acquiring at least one of a current value by using a current value acquiring unit and a voltage value by using a voltage value acquiring unit;
a time measuring step of measuring, by a time measuring unit, a time; and
a remaining quantity detecting step of detecting, by the remaining quantity detecting unit, the remaining quantity of the secondary battery based on the current value or the voltage value acquired in the acquiring step and the time measured in the time measuring step,
wherein the memory unit is a rewritable nonvolatile memory.
